(19) Europäisches Patentamt / European Patent Office / Office européen des brevets

(11) **EP 1 657 272 B2**

(12) **NEW EUROPEAN PATENT SPECIFICATION**
After opposition procedure

(45) Date of publication and mention
of the opposition decision:
**08.04.2020   Bulletin 2020/15**

(45) Mention of the grant of the patent:
**20.03.2013   Bulletin 2013/12**

(21) Application number: **04772002.4**

(22) Date of filing: **17.08.2004**

(51) Int Cl.:
***C08G 64/30*** *(2006.01)*

(86) International application number:
**PCT/JP2004/012041**

(87) International publication number:
**WO 2005/019302 (03.03.2005 Gazette 2005/09)**

(54) **PROCESS FOR PRODUCING AROMATIC POLYCARBONATE**

VERFAHREN ZUR HERSTELLUNG VON AROMATISCHEM POLYCARBONAT

PROCEDE DE PRODUCTION DE POLYCARBONATE AROMATIQUE

(84) Designated Contracting States:
**DE HU**

(30) Priority: **21.08.2003   JP 2003297844**
           **21.08.2003   JP 2003297719**
           **21.08.2003   JP 2003297832**
           **12.11.2003   JP 2003382667**
           **12.11.2003   JP 2003382773**
           **12.11.2003   JP 2003382646**

(43) Date of publication of application:
**17.05.2006   Bulletin 2006/20**

(73) Proprietor: **Mitsubishi Chemical Corporation
Tokyo 100-8251 (JP)**

(72) Inventors:
• **HYOUDOU, Narutoshi,**
**c/o Mitsubishi Chemical Corp.**
**Kitakyushu-shi,**
**Fukuoka 806-0004 (JP)**
• **TANAKA, Tatsuo,**
**c/o Mitsubishi Chemical Corp.**
**Kashima-gun,**
**Ibaraki 314-0102 (JP)**
• **HAYASHI, Kouichi,**
**c/o Mitsubishi Chemical Corp.**
**Kashima-gun,**
**Ibaraki 314-0102 (JP)**

(74) Representative: **Vossius & Partner**
**Patentanwälte Rechtsanwälte mbB**
**Siebertstrasse 3**
**81675 München (DE)**

(56) References cited:
**WO-A-93/03084      LU-A1- 88 564**
**LU-A1- 88 569       US-A- 5 717 609**
**US-B1- 6 277 945**

EP 1 657 272 B2

**Description**

The present invention relates to a process for producing an aromatic polycarbonate.

Aromatic polycarbonates (hereinafter abbreviated as "PCs") are generally produced by the polymerization reaction of diphenyl carbonate (hereinafter abbreviated as "DPC") with bisphenol A (hereinafter abbreviated as "BPA").

[Treatment of By-Product Phenol]

In the polymerization reaction, phenol (hereinafter abbreviated as "PL") generates as a by-product. This by-product PL contains DPC, BPA, oligomers formed by the reaction of one to several molecules of DPC with one to several molecules of BPA, and the like as impurities. A method in which this by-product PL is returned to a BPA production step or a DPC production step is known.

Namely, a method in which the by-product PL is returned to a BPA production step as it is or after having been purified to a low purity is described in patent document 1. The reason why the by-product PL obtained can have a low degree of purification is that even when DPC and the oligomers are hydrolyzed to PL and BPA and these compounds come into the BPA production step, this does not pose any problem.

Furthermore, a method in which the by-product PL is purified to a high purity and then returned to a DPC production step is described in patent document 2, patent document 3, etc. The reason why the by-product PL obtained should have a high degree of purification is that it is necessary to prevent BPA and the like from coming into the DPC production step and causing clogging.

[Connection between Production Steps]

Usually, solid BPA is used which is obtained by cooling BPA in a molten state after purification. However, in the case where a BPA production apparatus has been installed close to a PC production apparatus, the BPA in the molten state may be supplied, as it is or as a BPA/PL mixed solution having a certain composition, to the PC production apparatus and polymerized. This method eliminates the necessity of reheating or purification and brings about an improved thermal efficiency.

[Waste Liquor Treatment]

Furthermore, the DPC and BPA production steps and a PC production step each result in a waste liquor containing a large amount of organic matters.

Specifically, first in the PC production step, waste liquor generation is as follows. In the main step in which DPC and BPA are used as starting materials to produce a PC through a polymerization step, the ingredients vaporized in the polymerization step are liquefied and subjected to a distillation step to recover PL, and the resultant distillation residue is a waste liquor. This distillation residue contains PL, DPC, BPA, oligomers made up of several combined molecules of DPC and BPA, etc., and the recovery of these ingredients considerably influences the yield of the PC.

In this connection, a method in which the distillation residue is returned to the polymerization step is disclosed in patent document 3 and patent document 4, and a method in which the distillation residue is distilled again to recover the ingredients and the resultant recovery/distillation residue is used as a fuel is disclosed in patent document 1.

In the DPC production step, in the main step in which PL and a carbonyl compound are used as starting materials to produce DPC through a reaction step and a distillation step, the distillation reside resulting from the distillation step is a waste liquor. This distillation residue contains DPC and the recovery thereof considerably influences the yield of DPC.

In this connection, a method in which the distillation residue is distilled again to recover the DPC and this DPC is returned to the liquid reaction mixture resulting from the reaction step is disclosed in patent document 5.

Furthermore, in the BPA production step, the main step in which PL and acetone are used as starting materials to produce BPA through a synthesis reaction step, crystallization step, and solid/liquid separation step yields a mother liquor resulting from the solid/liquid separation step. As described in patent document 6, this mother liquor contains by-products such as the 2,4-isomer, trisphenols, and chroman compounds besides a large amount of PL and BPA, and further contains colored impurities and coloring impurities in a small amount. Since this mother liquor contains PL and BPA, which are starting materials for BPA, it is circulated to all steps and reused.

However, in case where the mother liquor is wholly circulated without being treated; the by-products and the colored impurities and coloring impurities accumulate. It is therefore necessary to remove these by-products and impurities.

[Vacuum Device]

In the step of producing DPC, DPC is purified by distillation with refluxing. In the step of producing a PC, PL is removed while separating it from DPC by distillation. These distillation operations are conducted under reduced pressure using a vacuum device in order to lower the distillation temperature (see patent document 7).

[Patent Document 1] JP-A-2000-53759
[Patent Document 2] JP-A-10-60106
[Patent Document 3] JP-A-9-255772
[Patent Document 4] JP-A-9-165443
[Patent Document 5] JP-A-2002-322130
[Patent Document 6] JP-A-5-331088
[Patent Document 7] JP-A-9-38402

[Treatment of By-Product Phenol; Problem in Integration of Three Production Steps]

However, in each of the cases described above, no investigation is made on the content of water although attention is paid on the contents of impurities other than water, such as, e.g., BPA and DPC. The water contained in the DPC and BPA used as starting materials for polymerization, especially in those which have been solidified and hence retain water, and the water supplied together with a polymerization catalyst accompany the by-product phenol. In the BPA production step, the presence of water causes a decrease in catalytic activity to reduce conversion. In the DPC production step, the presence of water leads not only to a decrease in catalytic activity but to the hydrolysis of the DPC being produced.

Furthermore, the by-product phenol generated in the PC polymerization step contains the impurities shown above. These by-products include impurities which are not problematic even when sent to the DPC production step but arouse a problem when sent to the BPA production step. The by-products further include impurities which function reversely.

Moreover, it is necessary as stated above to conduct a step for removing water from the ingredients separated out as a distillate in the PC polymerization step and including phenol as a major component. However, in the case where the DPC production step, BPA production step, and PC production step are integrated so as to be conducted in one place, there are two or more steps for water removal because the BPA production step also has the same step.

[Connection Between Production Steps]

In the step of crystallizing the yielded BPA in the BPA production step, a solid is apt to deposit on those parts of the crystallizer and other members which come into contact with a liquid. It is hence necessary to stop this step and conduct cleaning at intervals of several months. Because of this, those steps in the BPA production step which range from the synthesis reaction step to the crystallization step are conducted intermittently.

In contrast, the DPC production step is free from the problem described above and DPC can be produced continuously. Because of this, by storing BPA in a necessary amount while keeping the BPA in the molten state, the polymerization for PC production can be continuously conducted.

However, when BPA is kept in a molten state, it is apt to suffer yellowing, decomposition, etc., and this influences the quality of the PC to be obtained.

[Waste Liquor Treatment]

Furthermore, since the distillation residue resulting from the PC production step contains PL, return of the whole residue to the polymerization step influences the rate of initial polymerization because PL is present from the beginning of the polymerization. Moreover, since the distillation residue resulting from the PC production step has generally been colored, recycling this residue, without being subjected to any treatment, leads to a colored PC product. Even though the distillation residue is distilled again, the resultant recovery/distillation residue also contains those ingredients in a small amount. Consequently, to discard this residue without conducting any treatment not only influences the production efficiency but arouses a problem concerning environmental burden.

In addition, the distillation residue resulting from the DPC production step is usually discarded as it is. Since this distillation residue still contains DPC, to discard the residue without conducting any treatment not only influences the production efficiency but may arouse a problem concerning environmental burden.

[Vacuum Device]

Furthermore, when distillation is conducted under reduced pressure, there are cases where distillate ingredients, such as PL and DPC, are drawn by the vacuum device to form a liquid mass staying in a part in the piping leading to the vacuum device or the distillate ingredients thus staying solidify, making it impossible to maintain a vacuum state. In addition, in the case where ingredients which have separated out as a distillate, such as PL and DPC, are refluxed with a pump, there has been a possibility that the piping for refluxing might be clogged, for example, because such distillate ingredients solidify within the piping.

US-B1-6 277 945 shows a process for producing an aromatic polycarbonate by reacting bisphenol A with diphenylcarbonate with phenol as a by-product. The phenol by-product is used as the starting material for the production of bisphenol A from acetone and phenol. This document, however, teaches that a minimum amount of water is necessary in the phenol in order to hydrolyse other impurities.

LU 88 564 A1 discloses a process for producing an aromatic polycarbonate by reacting bisphenol A with diphenylcarbonate with phenol as a by-product. The phenol by-product is used as the starting material for the production of bisphenol A from acetone and phenol (example on page 9). This phenol is submitted to a "Reindestillation" leading to a purity of 99.9%.

LU 88 569 A1 discloses a similar process for the production of diphenylcarbonate from phosgene and phenol. This phenol shows preferably a purity higher than 99.95%. Specific methods how such high purities are achieved are not mentioned in these documents.

Accordingly, an object of the invention is to provide a method for coping with by-product phenol in which the water content of the by-product PL generated in a PC production step is limited to a value in a given range to thereby maintain a production efficiency in the BPA production step and DPC production step to which the by-product PL is sent, whereby the overall efficiency of PC production is maintained.

Another object is to attain labor saving in the purification treatment of the by-product phenol generated in an aromatic polycarbonate polymerization step, by sending the by-product phenol to a diphenyl carbonate production step or a bisphenol A production step according to the impurities contained in the phenol.

Still another object relates to the problem in the integration of three production steps and is to attain labor saving in the purification treatment of the distillate ingredients which contain phenol as a main ingredient and have been generated in the aromatic polycarbonate polymerization step, by utilizing existing steps used for producing diphenyl carbonate and bisphenol A.

A further object relates to connection between production steps and is to provide a method of connection between production steps which is capable of providing a process for producing a PC having sufficient quality.

Still a further object relates to a waste liquor treatment method and is to improve the overall efficiency and reduce environmental burden by returning a distillation residue resulting from the DPC production step and a distillation residue resulting from the PC production step to specific sites in the steps for PC production.

Still a further object relates to distillation steps and is to inhibit the formation of a liquidmass or solidification in the pipings in apparatus in which PL or DPC separates out as a distillate.

The invention provides, as a method for coping with by-product phenol, a process for producing an aromatic polycarbonate (PC) which comprises a diphenyl carbonate (DPC) production step in which phenol (PL) and at least one carbonyl compound are used as starting materials to produce diphenyl carbonate (DPC) said diphenyl carbonate production step being a step comprising a diphenyl carbonate reaction step and a diphenyl carbonate distillation step; and optionally a bisphenol A (BPA) production step in which phenol (PL) and acetone are used as starting materials to produce bisphenol A (BPA); and an aromatic polycarbonate (PC) production step in which the diphenyl carbonate (DPC) and the bisphenol A (BPA) are used as starting materials to produce an aromatic polycarbonate (PC) via a PC polymerization step and by-product phenol is recovered, characterized in that aromatic-carbonate vaporized ingredients resulting from the aromatic carbonate polymerization step are liquefied and subjected to a phenol distillation step to remove an aromatic-carbonate low-boiling distillate from the aromatic-carbonate vaporized ingredients and thereby recover the by-product phenol; the amount of water contained in the by-product phenol recovered in the aromatic polycarbonate (PC) production step is regulated to 0.2% by weight or smaller; this phenol is used as part of a starting material in the diphenyl carbonate (DPC) production step and/or the bisphenol A (BPA) production step; and a phenol distillation residue generated in the phenol distillation step is sent to the diphenyl carbonate distillation step.

The phenol to be used as a starting material in the diphenyl carbonate (DPC) production step can be phenol (PL) containing cresol and/or xylenol in an amount of 20-1,000 ppm by weight, and the phenol (PL) generated in the polymerization step in the aromatic polycarbonate (PC) production step can be used as at least part of the phenol to be used as a starting material in the bisphenol A (BPA) production step.

Furthermore, the process may be characterized in that 50-95% by weight of the phenol generated as a by-product in the aromatic polycarbonate production step is used as at least part of the phenol to be used in the diphenyl carbonate production step and 50-5% by weight thereof is used as at least part of a starting material for the bisphenol A production step.

With respect to connection between steps, the process may be characterized in that before and/or after the PL distillation step, a PC storage step is conducted in which the liquefied PC vaporized ingredients to be subjected to the PL distillation step and/or the by-product phenol recovered in the PL distillation step is stored, that after the DPC distillation step, a DPC storage step is conducted in which the diphenyl carbonate obtained in the DPC distillation step is stored, and/or that a BPA storage step in which a mixture of bisphenol A and phenol is stored is conducted between the BPA crystallization/separation step and the PC polymerization step. This process is characterized in that the storage tanks to be used in the respective storage steps have specific capacities shown below according to need.

$$\cdot \quad 10 \leq (Vc/Fc) \leq 100 \quad\quad (1)$$

(In expression (1), Vc indicates the capacity ($m^3$) of the PC storage tank and Fc indicates the feed rate ($m^3$/hr) of the liquefied PC vaporized ingredients or by-product phenol.)

$$\cdot \quad 10 \leq (Vd/Fd) \leq 100 \quad\quad (2)$$

(In expression (2), Vd indicates the capacity ($m^3$) of the DPC storage tank and Fd indicates the feed rate ($m^3$/hr) of the diphenyl carbonate.)

$$\cdot \quad 10 \leq (Vb/Fb) \leq 1,000 \quad\quad (3)$$

(In expression (3), Vb indicates the capacity ($m^3$) of the BPA storage tank and Fb indicates the feed rate ($m^3$/hr) of the bisphenol A being fed to the PC polymerization step.)

With respect to waste water treatment methods, the process may be characterized in that a PL distillation residue is sent to the DPC distillation step and/or the DPC recovery/distillation step, that a PL distillation residue and/or at least either of a DPC distillation residue and a DPC recovery/distillation residue is sent to the BPA mother liquor treatment step, or that a PL distillation residue is sent to the DPC distillation step and/or DPC recovery/distillation step and subsequently a DPC distillation residue and/or a DPC recovery/distillation residue is sent to the BPA mother liquor treatment step.

Furthermore, with respect to distillation steps, the process may be characterized in that the distillation column in the DPC distillation step or PL distillation step is provided with a condenser for condensing a distillate, a vacuum device for reducing the pressure in the system, and a vacuum piping which connects the condenser to the vacuum device, and that the vacuum piping is inclined downward from the condenser side to the vacuum device side, and the total height of the parts rising upward from the condenser side toward the vacuum device side is 1 m or smaller.

<Brief Description of the Drawings>

Fig. 1 is a flow diagram showing an example of the DPC production step according to the invention;
Fig. 2 is a flow diagram showing an example of the BPA production step according to the invention;
Fig. 3 is a flow diagram showing an example of a water separation step (step (b-2)) in the BPA production step according to the invention;
Fig. 4 is a flow diagram showing an example of a mother liquor treatment step (step (g)) in the BPA production step according to the invention;
Fig. 5 is a flow diagram showing an example of the PC production step according to the invention;
Fig. 6 is a flow diagram showing another example of the PC production step according to the invention;
Fig. 7 is a flow diagram showing an example of the case in which the DPC production step, BPA production step, and PC production step according to the invention include a DPC storage step, a BPA storage step, and PC storage steps;
Fig. 8 is a flow diagram showing an example of an embodiment in which in the DPC production step, BPA production step, and PC production step according to the invention, a PL distillation residue (X2), a DPC distillation residue (X1), and a DPC recovery/distillation residue (X1') is sent to a given step; and
Fig. 9 is a view illustrating a reflux apparatus according to the invention.

The reference numerals and signs in the figures have the following meanings: 1 denotes a DPC reactor, 2 a dehydrochlorination column, 3 a mixing vessel, 4 an alkali neutralization vessel, 5 a water washing vessel, 6 a first DPC distillation column, 7 a second DPC distillation column, 8 a DPC recovery/distillation column, 11 a recovered-PL tank for BPA, 12 a PL separation column, 13 a phenol evaporator, 14 a residue reactor, 15 a regenerating reactor, 21 a mixing vessel, 22 a first polymerization vessel, 23 a second polymerization vessel, 24 a third polymerization vessel, 25 a fourth polymerizer, 26 a heat exchanger, 27 a heat exchanger, 28 a condenser, 29 a recovered-PL tank for PC, 29a a first recovered-PL tank for PC, 29b a second recovered-PL tank for PC, 30 a first PL distillation column, 31 a second PL distillation column, 32 an extruder, 33a and 33b a refluxing apparatus, 41 a distillation column, 42 a condenser, 43 a vacuum device, 44 a vacuum piping, 45 a condensate tank, 46 a liquid feed pump, 47 a reflux piping, 48 a mist catcher, 49 a drain opening, 50 a feed opening, 51 a valve, 52 a valve, 53 a drain opening, 54 a drain opening; 55 a feed opening, 56 a valve, 57 a discharge opening, A acetone, BPA bisphenol A, C1 an alkali catalyst, C2 a basic catalyst, CDC phosgene, D1 hydrochloric acid gas, D2 a neutralized wastewater, D3 a wastewater, D4 a BPA low-boiling distillate, D5 a discharge gas, D6 a PC low-boiling distillate, D7 a waste liquor, AW a water/acetone mixture, DPC diphenyl carbonate, E1 an alkaline aqueous solution, F a mixed gas, I an acid, J an additive, p PC vaporized ingredients, p1 first PC vaporized ingredients, p2 second PC vaporized ingredients, PL phenol, s-PL by-product phenol, W water, X1 a DPC distillation residue, X1' a recovery/distillation residue, X2 a PL distillation residue, symbol a a DPC-containing liquid reaction mixture, b a dehydrochlorinated liquid, d a DPC-containing recovered liquid, e a neutralized liquid, f a water-washed liquid, g a first distillation residue, k a PL recovered liquid, p PC vaporized ingredients, and q a first-stage residue.

Embodiments of the invention will be explained below in detail.

The process for producing an aromatic polycarbonate (PC) according to the invention is a process in which diphenyl carbonate (DPC) and bisphenol A (BPA) are polymerized to produce the polymer.

[DPC Production Step]

DPC is produced from PL and at least one carbonyl compound as starting materials. This carbonyl compound to be used is not limited as long as it can form the carbonyl group of DPC. Examples of this carbonyl compound include phosgene (hereinafter abbreviated as "CDC"), carbon monoxide, dialkyl carbonates, and the like. The following is an explanation on a step in which CDC is used as a carbonyl compound to produce DPC through a DPC washing step and a DPC distillation step after the reaction.

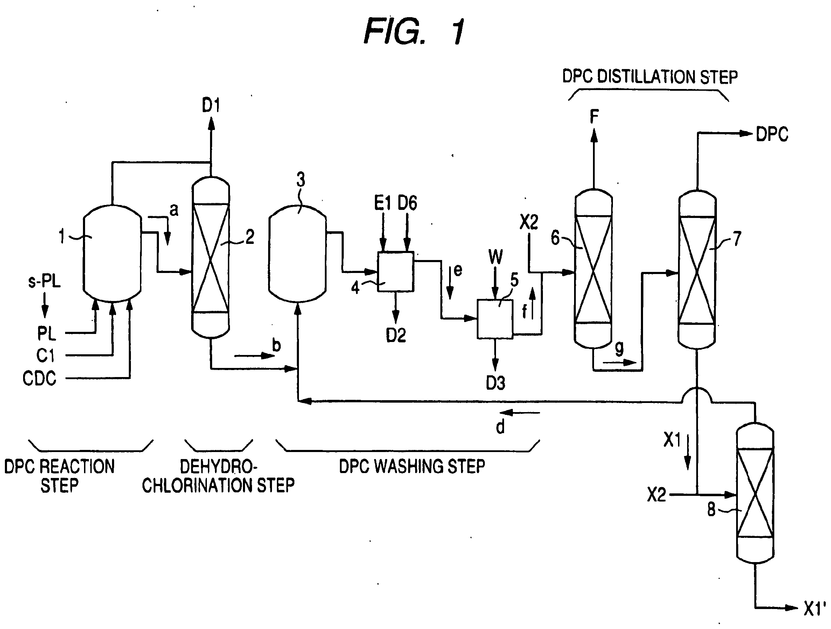

The DPC production step is constituted of the process shown in Fig. 1. Namely, a DPC reaction step is conducted in which PL and CDC are used as starting materials and introduced into a DPC reactor 1 together with an alkali catalyst (C1), e.g., pyridine. Although reaction conditions in this step are not particularly limited, it is preferred to conduct the reaction under the conditions of 50-180 °C and ordinary pressure, under which PL is in a molten state. The mixing ratio between the PL and the CDC (molar ratio) preferably is such that the amount of the CDC is 0.40-0.49 mol per mol of the PL from the standpoint of complete consumption of the CDC.

The DPC-containing liquid reaction mixture a produced by the DPC reaction step is sent to a dehydrochlorination column 2, where a dehydrochlorination step is conducted. The hydrochloric acid gas (D1) generated in the DPC reactor 1 and the dehydrochlorination column 2 is recovered and sent to a hydrochloric acid treatment step (not shown).

Subsequently, the dehydrochlorinated liquid b obtained is subjected to a DPC washing step. This DPC washing step is constituted of the neutralization step and water washing step described below. Namely, a neutralization step is conducted in which the dehydrochlorinated liquid b is sent to a mixing vessel 3 and subsequently to an alkali neutralization vessel 4 to neutralize, with an alkaline aqueous solution (E1), the hydrochloric acid remaining unremoved in the dehydrochlorination column. The neutralized wastewater (D2) discharged here is sent to a wastewater treatment step (not shown) to recover effective organic ingredients contained therein, and is then subjected to an activated-sludge treatment.

A DPC water washing step is then conducted in which the neutralized liquid e obtained is sent to a water washing vessel 5 and washed with water (W). The wastewater (D3) discharged in this DPC water washing step can be reused as an alkali diluent in preparing the alkaline aqueous solution (E1) for use in the neutralization step.

The water-washed liquid f obtained in the DPC water washing step is sent to a distillation column, where a DPC distillation step is conducted. Although three distillation columns are used in Fig. 1, the step is not limited to this mode. In the case where three distillation columns are used, a first DPC distillation column 6 is used to recover a mixed gas (F) comprising water, PL, and the alkali catalyst. This mixed gas (F) may be separated into these ingredients, which can be reused in the reaction system.

The first distillation residue g discharged from the first DPC distillation column 6 is distilled again in a second DPC distillation column 7 to recover purified DPC, which is a product, as a distillate.

Distillation conditions for the first DPC distillation column 6 are not particularly limited as long as the water, alkali catalyst, and PL are distilled off and the DPC remains. A pressure of 1.3-13 kPa is preferred. The temperature to be used is the boiling point at this pressure. On the other hand, distillation conditions for the second DPC distillation column 7 are not particularly limited as long as the DPC is distilled off and the impurities having a higher boiling point than DPC remain. A pressure of 1.3-6.5 kPa and a temperature of 150-220°C are preferred.

Incidentally, the DPC distillation residue X1 discharged from the second DPC distillation column 7 contains impurities mainly comprising methyl-substituted DPC derivatives formed by reaction with methylphenol, which is a phenol-containing impurity, and bromine-substituted DPC derivatives formed by reaction with the bromine remaining in the CDC. However, this distillation residue X1 further contains DPC itself. Consequently, this DPC distillation residue X1 may be distilled again to recover the diphenyl carbonate (DPC). In this case, the DPC distillation residue X1 is subjected to a recovery/distillation step using a DPC recovery/distillation column 8 as shown in Fig. 1. Thus, a DPC-containing recovered liquid d can be recovered through distillation. A DPC recovery/distillation residue (X1') in which the methyl-substituted and bromine-substituted DPC derivatives have been concentrated is recovered from the distillation column bottoms.

Distillation conditions for the DPC recovery/distillation column 8 are not particularly limited as long as the DPC is distilled off and the impurities having a higher boiling point than DPC remain. A pressure of 1.3-6.5 kPa and a temperature of 150-220°C are preferred.

Since the DPC-containing recovered liquid d, which is a distillate from the DPC recovery/distillation column, is an ingredient containing DPC in a large amount, it is sent to the mixing vessel 3. Thus, the DPC can be recycled to the washing/distillation step and the efficiency of diphenyl carbonate (DPC) recovery can be further improved.

[BPA Production Step]

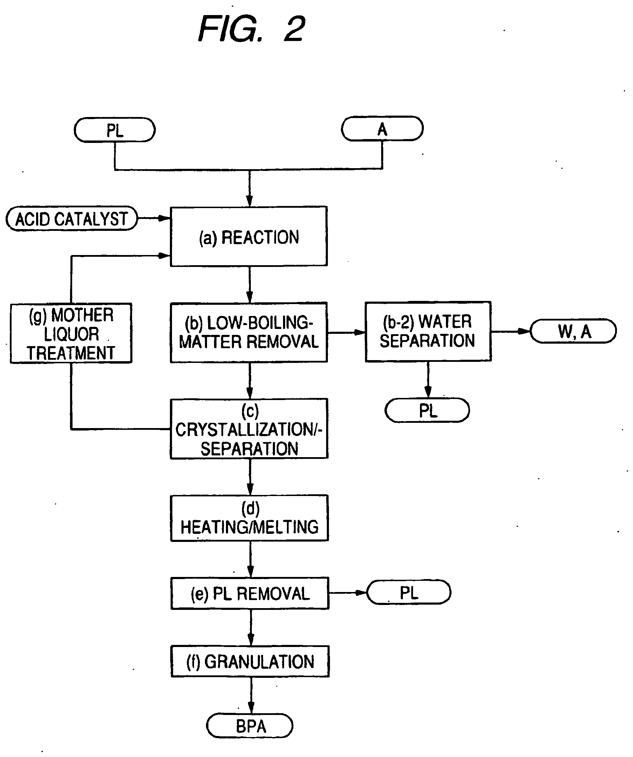

The BPA production step is constituted of the process shown in Fig. 2. Namely, PL and acetone (A) are used as starting materials to produce BPA through a BPA reaction step (step (a)), BPA low-boiling-matter removal step (step (b)), BPA crystallization/separation step (step (c)), heating/melting step (step (d)), PL removal step (step (e)), and granulation step (step (f)).

Next, the individual steps are separately explained.

The step (a) is a step in which PL and acetone (A) are subjected to condensation reaction in the presence of an acid catalyst to yield BPA. The PL and acetone (A) used here as starting materials are reacted under such conditions that the PL amount is larger than the stoichiometric amount. The molar ratio between the PL and the acetone (A), in terms of PL/acetone (A) ratio, is in the range of 3-30, preferably 5-20. The reaction is conducted at a temperature of generally 30-100°C, preferably 50-90°C, and a pressure of generally from ordinary pressure to 5 kg/cm$^2$·G.

As the acid catalyst can be used an inorganic acid, e.g., hydrochloric acid, an organic acid, an ion-exchange resin, or the like. In the case where an ion-exchange resin is used as the acid catalyst, a sulfonic acid form cation-exchange resin of the gel type which has a degree of crosslinking of 1-8%, preferably 2-6%, is suitable. However, the ion-exchange resin is not particularly limited. Hydrochloric acid may also be used as the acid catalyst.

Although the sulfonic acid form cation-exchange resin may be used as it is, use can be made of a sulfonic acid form cation-exchange resin which has been modified according to need. Examples of compounds usable for the modification include compounds having a mercapto group.

As such a compound having a mercapto group can be used any of ones which have been known to be usable in this application, such as aminoalkanethiols, e.g., 2-aminoethanethiol, ω-pyridylalkanethiols, e.g., 2-(4-pyridyl)ethanethiol, and thiazolidine compounds which readily come to have a mercapto group upon hydrolysis or the like, e.g., 2,2-dimethylthiazolidine.

The reaction mixture yielded by the reaction step (a) generally contains unreacted PL, unreacted acetone (A), the catalyst, and water (W) generated by the reaction besides BPA, and further contains by-products including colored substances.

The step (b) is a step in which BPA low-boiling ingredients and the catalyst, e.g., hydrochloric acid, are removed from the liquid reaction mixture obtained in the step (a). The BPA low-boiling ingredients include the water W generated by the reaction, unreacted acetone (A), and substances having a boiling point close to the boil points of these. In this step, these low-boiling ingredients are removed from the reaction mixture by, e.g., vacuum distillation and solid ingredients, e.g., a catalyst, areremovedby, e.g., filtration. In the case of using a reactor having a fixed-bed catalyst, catalyst removal is not particularly required. In the vacuum distillation, it is preferred to use a pressure and a temperature in the ranges of 50-300 mmHg and 70-130°C, respectively. There are cases where the unreacted PL undergoes azeotropy and part thereof is removed from the system.

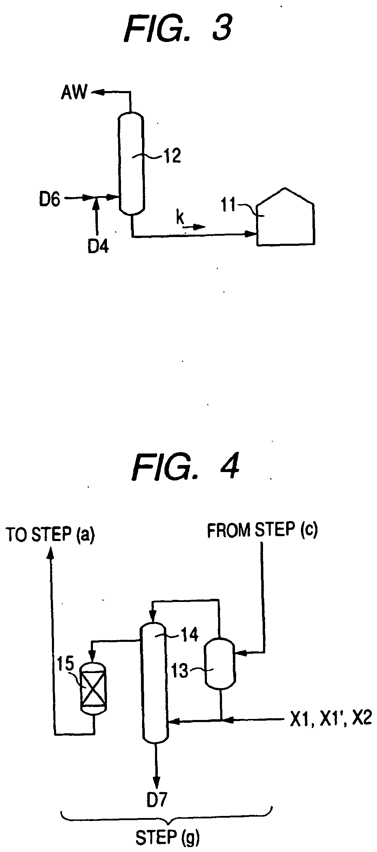

The BPA low-boiling distillate (D4) vaporized off in the step (b) comprises water and a small amount of acetone (A) and phenol (PL) . As shown in Fig. 3, this BPA low-boiling distillate (D4) is sent to a PL separation column 12, where a water separation step (step (b-2)) in which PL is recovered through the column bottom is conducted optionally using an extractant. The PL recovered liquid k obtained in this water separation step is stored in a recovered-PL tank 11 for BPA. The water/acetone mixture AW recovered through the top of the PL separation column 12 is separately treated.

The step (c) is a step in which the liquid mixture obtained in the step (b) is cooled to precipitate a mixture of BPA and PL and thereby separate the mixture. Prior to this step (c), the concentration of BPA in the liquid mixture obtained in the step (b) may be regulated to 10-50% by weight, preferably 20-40% by weight, by distilling off or adding PL. This operation is preferred because it heightens the yield of the adduct and is effective in regulating the apparent viscosity of the slurry mixture to improve workability. Examples of the mixture of BPA and PL include crystals of an adduct of BPA with PL and simple mixtures of BPA crystals with PL crystals.

The cooling in the step (c) is conducted generally to a temperature of 45-60°C, whereby crystals of a BPA/PL adduct or crystals of each compound separate out and the system becomes slurry. This cooling is conducted with a heat exchanger disposed outside or by means of heat removal by the latent heat of vaporization of the water to be added to the crystallizer. Subsequently, this slurry liquid is subjected to filtration, centrifugal separation, or the like to separate it into the crystals and a mother liquor containing by-products. The crystals are subjected to the next step. Part or all of the mother liquor separated is recycled to step (a) through the BPA mother liquor treatment step (g) which will be described later, and is used as part or all of the PL to be used as a starting material so as to attain a further improvement in yield.

The step (d) is a step in which the crystals obtained in the step (c) are heated and melted. The adduct crystals generally have a composition in which the BPA content is in the range of 45-70% by weight and the PL content is 55-30%. These crystals are melted by heating to 100-160°C and then subjected to the next step.

The step (e) is a step in which the PL is removed from the melt obtained in the step (d) to thereby obtain molten BPA. Vacuum distillation or another technique is used to remove the PL from the melt obtained in step (d) to thereby dissociate the adduct. Thus, high-purity BPA can be recovered. It is preferred that this vacuum distillation be conducted at a pressure of 10-100 mmHg and a temperature which is in the range of 150-220°C and is higher by at least 10°C than the melting point of the bisphenol A (BPA)/phenol (PL) mixture present in the system. A technique in which steam stripping is conducted besides vacuum distillation to remove residual PL has also been proposed.

The step (f) is a step in which the molten BPA obtained in the step (e) is cooled/solidified and granulated to obtain a granular product. Using a granulator, e.g., a spray dryer, the molten BPA is formed into droplets and cooled/solidified to give a product. The droplets are prepared by spraying, dropping, sprinkling, etc., and the cooling is conducted usually with nitrogen, air, etc.

In this BPA production step, especially in the step (a), by-products including 2,4'-bisphenol A (hereinafter referred to as "BPA by-products") are synthesized simultaneously with BPA. These BPA by-products are mainly contained in the mother liquor obtained in the step (c) and circulate through the BPA production step. Because of this, the BPA by-products tend to accumulate in this circulation system. There is a tendency that when the BPA by-products have accumulated to or above a certain degree, the separation in the step (c) becomes insufficient and the by-products partly accompany the BPA side, resulting in a decrease in the quality of the BPA product. Because of this, part or all of the mother liquor obtained in the step (c) is subjected to the BPA mother liquor treatment step (step (g)) to thereby separate/remove the BPA by-products from the mother liquor. This mother liquor, in which the BPA by-products have been thus diminished, is used as a starting material for BPA production, whereby the quality of the BPA product can be maintained.

The step (g) is a step in which PL is recovered through distillation or a step in which the mother liquor is heated in the presence of a basic substance to decompose the BPA by-products present in the mother liquor and thereby yield PL and PL derivatives and these compounds are subsequently reacted using an acid catalyst or alkali catalyst to produce BPA, which is recovered.

Specifically, as shown in Fig. 4, part or all of the mother liquor is first introduced into a PL evaporator 13 and, simultaneously therewith, a basic substance such as sodium hydroxide or potassium hydroxide is introduced. Subsequently, the contents are heated to a temperature not lower than the boiling point of PL to vaporize the PL, which is discharged through an upper part of the PL evaporator 13. The resultant evaporation residue, which comprises the BPA and BPA by-products as main components, is discharged through a lower part of the PL evaporator 13 and sent to a residue reactor 14. The residue is heated to 180-300°C to thereby cause the BPA and BPA by products to undergo decomposition reactions to obtain decomposition products including isopropenylphenol, which is an intermediate from BPA. These decomposition products are distilled off through the column top. On the other hand, the bottoms generated in this residue reactor 14 are sent, as a waste liquor containing a large amount of organic matters, to a waste liquor treatment step (not shown) such as, e.g., incineration disposal.

The PL and PL derivatives obtained as products of the decomposition of the BPA by-products are distilled off through an upper part of the residue reactor 14 and sent to a regenerating reactor 15. In this operation, when the PL and PL derivatives are taken out through an upper part of the residue reactor 14, they are mixed with the PL discharged through an upper part of the PL evaporator 13. As a result, the concentration of the PL derivatives is reduced and undesirable side reactions can be inhibited from occurring.

Subsequently, in the regenerating reactor 15, the PL and PL derivatives, which are products of the decomposition of the BPA by-products, are reacted again using an acid catalyst to thereby yield BPA, etc. This reaction product, together with unreacted PL, is mixed with the PL to be used as a starting material and sent to step (a). Since the BPA is recovered as it is through step (c) and the PL is used as a starting material, the efficiency of BPA production can be heightened.

EP 1 657 272 B2

[PC Production Step]

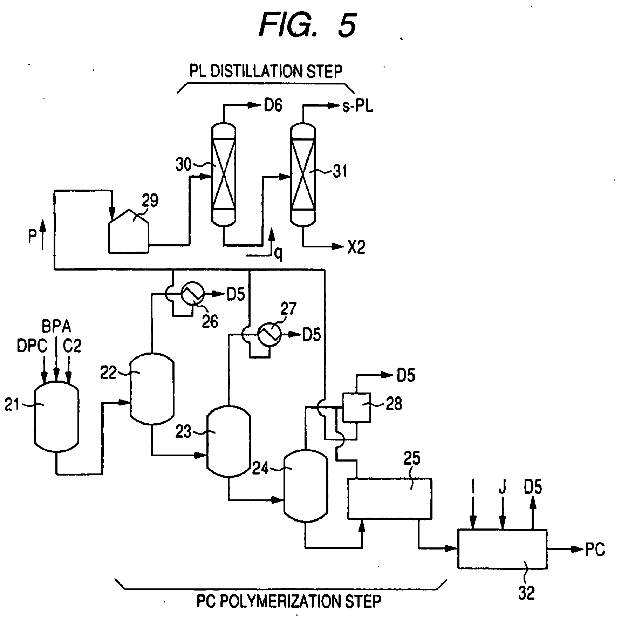

The PC production step is constituted of the process shown in Fig. 5. Namely, the DPC and BPA produced by the methods described above are used as starting materials and introduced into a mixing vessel 21 together with a basic catalyst (C2) such as, e.g., an aqueous alkali solution. The resultant mixture is sent to a polymerization vessel to conduct a PC polymerization step. The polymerization vessel is not particularly limited as long as condensation polymerization can be conducted therein while distilling off the phenol generating as a by-product of the polymerization. The polymerization vessel may be a vessel of any type selected from the vertical vessel, horizontal vessel, and column type vessel.
The number of such polymerization vessels is not particularly limited. However, since the polymerization reaction is condensation polymerization accompanied by phenol elimination, it is preferred to use two or more polymerization vessels in order that polymerization conditions can be changed according to the degree of polymerization. In Fig. 5 are shown a group of polymerization vessels which are three vertical polymerization vessels (first polymerization vessel 22, second polymerization vessel 23, and third polymerization vessel 24) and one horizontal polymerizer (fourth polymerizer 25) and have been connected in series. Polymerization conditions in this case, for example, include 200-250°C and 50-200 Torr for the first polymerization vessel 22, 230-280°C and 10-50 Torr for the second polymerization vessel 23, 250-300°C and 0.2-5 Torr for the third polymerization vessel 24, and 260-320°C and 0.05-2 Torr for the fourth polymerizer 25. When such polymerization conditions are used, the by-product phenol (hereinafter abbreviated as "s-PL") is distilled off as the polymerization proceeds, whereby a PC having a desired degree of polymerization can be obtained.
The PC vaporized ingredients p generated in the PC polymerization step and including s-PL as a major component are liquefied with heat exchangers 26 and 27 and a condenser 28 and sent to a recovered-PL tank 29 for PC. The discharge gas (D5) remaining unliquefied is drawn toward the vacuum device side and sent to a treatment step (not shown).
The PC produced in the PC polymerization step is sent to an extruder 32. In this extruder 32, volatile matters contained are removed as a discharge gas (D5), and an acid I and various additives. J are added to conduct catalyst neutralization, etc. The polymer is then subjected to a processing (not shown) such as, e.g., pelletizing to obtain a PC as a product.
As stated above, the PC vaporized ingredients p are liquefied and sent to the recovered-PL tank 29 for PC. Although the PC vaporized ingredients p include s-PL as a major component; they further include DPC and BPA, which were used as starting materials, oligomers formed by the condensation polymerization of one or more molecules of DPC with one more molecules of BPA, the water derived from the alkali catalyst, etc. Because of this, the PC vaporized ingredients p are subjected to a PL distillation step to recover the s-PL. Examples of this PL distillation step include a method in which distillation columns disposed in two-stage arrangement such as those shown in Fig. 5 are used. First in the first PL distillation column 30, ingredients having a lower boiling point than PL which include water are vaporized off and a PC low-boiling distillate (D6) comprising water as a major component and containing PL is removed and recovered. Subsequently, the resultant first-stage distillation residue q in the first PL distillation column 30 is sent to the second PL distillation column 31, where high-boiling matters are cut off to recover the s-PL through distillation and a PL distillation residue (X2), which is the high-boiling matters, is recovered.

[By-Product Phenol (s-PL) Treatment 1; Water Content of s-PL]

The water content of the s-PL recovered in the PL distillation step through distillation is desirably 0.2% by weight or lower, preferably 0.1% by weight or lower, more preferably 0.05% by weight or lower, even more preferably 0.01% by weight or lower. In case where the content thereof is higher than 0.2% by weight, this s-PL, when sent to the DPC production step or BPA production step, causes a decrease in catalytic activity in the DPC production step and BPA production step and is apt to cause hydrolysis or the like in the DPC production step, as will be described later. Because of this, use of such s-PL is apt to result in a decrease in production efficiency in the DPC production step and the BPA production step. On the other hand, the lower limit of the water content is 0% by weight because the lower the water content, the better.
When it is attempted to distill off water from the PC vaporized ingredients p in the first PL distillation column 30, a considerable amount of PL accompanies the water when the distillation is conducted under ordinary conditions, resulting in a loss. This is because water and PL have the property of undergoing azeotropy. Techniques for diminishing this loss include to conduct extraction distillation, to use vacuum conditions to eliminate azeotropy, and to increase the number of theoretical plates and the reflux ratio. In any case, it is undesirable from an economical standpoint to conducted complete separation. Because of this, it is possible to use a method in which a PC low-boiling distillate (D6) obtained by distilling off the water together with part of the PL in the first PL distillation column 30 under ordinary distillation conditions is sent to the DPC washing step in the DPC production step and/or to the water separation step (step (b-2)) in the BPA production step.
Distillation conditions for the first PL distillation column 30 preferably include a pressure of from atmospheric pressure to a reduced pressure of several tens of Torr and a column top temperature which is not lower than the boiling point of water at this pressure and not higher than the boiling point of phenol at this pressure. The gas thus discharged through the top of this first PL distillation column 30 is a water/PL mixed gas, and it is preferred to adjust the column top temperature to the boiling point of the mixed gas having a target composition. In case where the column top temperature is lower than the boiling point of water, the water content of the first-stage residue q increases, resulting in the possibility that the s-PL obtained in the second PL distillation column 31 might have a water content increased beyond that range. On the other hand, in case where the column top temperature is higher than the boiling point of PL, the amount of the s-PL contained in the PC low-boiling distillate (D6) is increased, resulting in the necessity of using a large amount of energy for the recovery thereof. Such a temperature is hence uneconomical.

The PL content of the gas discharged through the top of the first PL distillation column 30 specifically is such that the PL concentration is preferably 50% by weight or higher and is especially preferably 70% by weight or higher and 99.8% by weight or lower.

The s-PL thus obtained is used as part of a starting material in the DPC production step or BPA production step.

Specifically, in the DPC production step, the s-PL is used in the DPC reaction step. When sent to the DPC reaction step, the s-PL can be used as part or all of the PL to be used as a starting material. In this case, since the water content thereof is within the range shown above, the water contained in the s-PL exerts little influence on the reaction step and the efficiency of DPC production can be maintained.

Next, in the BPA production step, the s-PL is used in the BPA reaction step (step (a)) . In the BPA reaction step, the s-PL can be used as part or all of the PL to be used as a starting material. In this case, since the water content thereof is within the range shown above, the water contained in the s-PL exerts little influence on the synthesis reaction step and the efficiency of BPA production can be maintained.

[Treatment of PC Low-Boiling Distillate (D6)]

The low-boiling distillate (D6) vaporized off in the first PL distillation column 30 is returned to the DPC washing step in the DPC production step or to the water separation step (step (b-2)) in the BPA production step as stated above, whereby the PL in the PC low-boiling distillate (D6) can be recovered.

Specifically, when the PC low-boiling distillate (D6) is returned to the DPC washing step, e.g., the alkali neutralization vessel 4, in the DPC production step as shown in Fig. 1, then the PL contained in the PC low-boiling distillate (D6) is extracted into the organic phase (liquid reaction mixture), recovered as a mixed gas (F) in the first DPC distillation column 6 in the next step, and finally used as a starting material for DPC.

On the other hand, when the PC low-boiling distillate (D6) is returned to the water separation step (step (b-2)) in the BPA production step, more specifically to, for example, the PL separation column 12 as shown in Fig. 2 or 3, then the PL contained in the PC low-boiling distillate (D6) is recovered as a PL recovered liquid k through the column bottom and finally used as a starting material for BPA.

[By-Product Phenol (s-PL) Treatment 2; Treatment of PC Vaporized Ingredients in PC Polymerization Step]

As shown in Fig. 5, the PC vaporized ingredients p, which include the phenol generated as a by-product in the polymerization step, are liquefied with the heat exchangers 26 and 27 and the condenser 28 and sent to the recovered-PL tank 29 for PC. The discharge gas (D5) remaining unliquefied is sent to a treatment step (not shown).

Incidentally, the vaporized-ingredient mixtures obtained respectively from the first polymerization vessel 22 to the third polymerization vessel 24 differ from each other in the impurities other than by-product phenol. Specifically, the vaporized ingredients discharged from a polymerization step in an early stage include impurities such as impurities having a lower boiling point than PL, a small amount of a carbonyl compound, diphenyl carbonate, etc., besides by-product phenol. These impurities are a starting material used in the DPC production step and reaction products yielded in the step, and high-boiling matters such as, e.g., BPA are not contained therein. Consequently, the vaporized ingredients, which contain these impurities, can be used, without being purified or after having been purified to a low purity, as part of the PL to be used in the DPC production step.

On the other hand, the vaporized ingredients discharged from a polymerization step in a late stage of the PC polymerization step include impurities having a higher boiling point than PL, such as DPC, BPA, and oligomers formed from DPC and BPA, besides by-product phenol. Almost no impurities having a lower boiling point than PL are contained therein. These impurities are hydrolyzed in the BPA production step and become a starting material and reaction products for this production step. Almost no alcohols or the like which are causative of a decrease in catalytic activity in the BPA production step are contained. Because of this, the vaporized ingredients, which contain those impurities, can be used, without being purified or after having been purified to a low purity, as part of the PL to be used in the BPA production step.

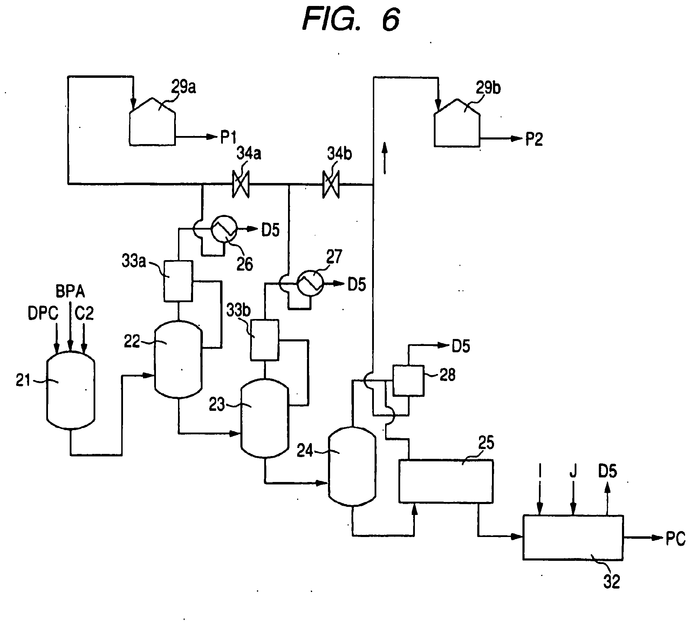

Consequently, the vaporized ingredients discharged in the PC polymerization step can be recovered in two portions as shown in Fig. 6. Namely, vaporized ingredients discharged in a former stage of the polymerization step, i.e.,

first PC vaporized ingredients p1 recovered from the first polymerization vessel 22 or from the first polymerization vessel 22 and second polymerization vessel 23 and containing by-product phenol, canbe sent to a first recovered-PL tank 29a for PC. Furthermore, vaporized ingredients discharged in a latter stage of the polymerization step, i.e., second PC vaporized ingredients p2 recovered from the second polymerization vessel 23 and the succeeding polymerization vessels or from the third polymerization vessel 24 and the succeeding polymerization vessel and containing by-product phenol, can be sent to a second recovered-PL tank for PC.

The first PC vaporized ingredients p1 thus recovered can be used as part of the PL to be used as a starting material in the DPC production step, without undergoing the PL distillation step shown in Fig. 5. On the other hand, the second PC vaporized ingredients p2 can be used as part of the PL to be used as a starting material in the BPA production step, without undergoing the PL distillation step shown in Fig. 5.

It is preferred that the polymerization vessel(s) from which the first PC vaporized ingredients p1 which contain by-product phenol to be used in the DPC production step are obtained, i.e., the first polymerization vessel 22 or the first polymerization vessel 22 and second polymerization vessel 23, be provided with reflux apparatus 33a and 33b for liquefying and refluxing part of the vaporized ingredients. Among the distillate ingredients taken out from the first polymerization vessel 22 or from the first polymerization vessel 22 and second polymerization vessel 23, the ingredients which have a boiling point higher than PL can be returned to the respective polymerization vessels by the reflux apparatus 33a and 33b. As a result, the proportion of the ingredients having a higher boiling point than PL in the first PC vaporized ingredients p1 obtained can be further reduced.

Incidentally, the vaporized ingredients recovered from the second polymerization vessel 23 are sent to either of the first recovered-PL tank 29a for PC and the second recovered-PL tank 29b for PC as stated above. With respect to the selection of a recovery tank, a piping for either of the two recovery tanks only may be disposed. Alternatively, it is possible to dispose pipings connected respectively to the two recovery tanks and dispose valves 34a and 34b in the respective pipings so as to suitably switch the pipings, as shown in Fig. 6. The reasons for this are as follows. The amount of the impurities other than by-product phenol which are contained in the vaporized ingredients recovered from the second polymerization vessel 23 is relatively small. These vaporized ingredients can hence be used either as the first PC vaporized ingredients p1 or as the second PC vaporized ingredients p2..

When the vaporized ingredients obtained as a distillate from the second polymerization vessel 23 are sent to the first recovered-PL tank 29a for PC or to the second recovered-PL tank 29b for PC, the amount of the ingredients to be sent is regulated according to the amounts of the vaporized ingredients from the other polymerization vessels, in particular, the amount of the by-product phenol contained in these vaporized ingredients and the amount of the impurities contained in these vaporized ingredients.

The amount of that by-product phenol in the by-product phenol contained in the vaporized ingredients obtained in the PC polymerization step which is to be sent to the DPC production step and used as part of starting-material PL, i.e., the amount of the by-product phenol contained in the first PC vaporized ingredients p1, is desirably 50-95% by weight, preferably 50-70% by weight, based on the whole by-product phenol contained in the vaporized ingredients obtained in the PC polymerization step, i.e., based on the total amount of the by-product phenol contained in the first PC vaporized ingredients p1 and that contained in the second PC vaporized ingredients p2.

On the other hand, the amount of the by-product phenol contained in the second PC vaporized ingredients p2 is desirably 50-5% by weight, preferably 50-30% by weight, based on the whole by-product phenol contained in the vaporized ingredients obtained in the PC polymerization step.

In case where the amount of the by-product phenol contained in the first PC vaporized ingredients p1 is smaller than 50% by weight, impurities having a lower boiling point than DPC, especially alcohols and the like, tend to come into the second PC vaporized ingredients p2. Use of such vaporized ingredients p2, without any treatment, as a starting material for BPA production tends to result in a decrease in reaction activity. Such by-product phenol amounts are hence undesirable. On the other hand, in case where the amount thereof is larger than 95% by weight, there is the possibility that BPA and oligomers, which have a higher boiling point than DPC, might come into the first PC vaporized ingredients p1 to cause pipe clogging in DPC production.

The content of the high-boiling compounds having a higher boiling point than DPC, such as BPA and oligomers obtained from DPC and BPA, in the vaporized ingredients to be used in the DPC production step, i.e., the first PC vaporized ingredients p1, is preferably 1.0% by weight or lower, more preferably 0.1% by weight or lower. In case where the content thereof is higher than 1.0% by weight, there is the possibility that pipe clogging might occur in DPC production.

Furthermore, the content of low-boiling compounds having a lower boiling point than DPC, e.g., a carbonyl compound and an alcohol generated as a by-product from the carbonyl compound, in the vaporized ingredients to be used in the BPA production step, i.e., the second PC vaporized ingredients p2, is preferably 100 ppm by weight or lower, more preferably 50 ppm by weight or lower. Incidentally, the PL to be used as a starting material in the BPA production step comprises the by product phenol contained in the first PC vaporized ingredients p1 and second PC vaporized ingredients p2 and further includes commercial phenol for covering a deficiency and the PL circulating through the BPA production step. Because of this, the content of the low-boiling compounds in that PL to be used as a starting material is lower than the content of the low-boiling compounds in the by-product phenol and is generally 20 ppm by weight or lower, preferably 5 ppm by weight or lower. In case where the content thereof is higher than 20 ppm by weight, there is the possibility that the low-boiling compounds might reduce catalytic activity in BPA production, leading to a decrease in productivity.

In the case where the carbonyl compound is a dialkyl carbonate and/or an alkyl aryl carbonate, the alcohol generated as a by-product from the carbonyl compound is the alkyl alcohol obtained from the dialkyl carbonate and/or alkyl aryl carbonate.

By thus recovering the PC vaporized ingredients p in two portions and sending the two portions to the DPC production step and the BPA production step according to the kinds of impurities, the PL distillation step in the PC production step can be omitted and a contribution to production efficiency improvement can be made.

[By-Product Phenol (s-PL) Treatment 3; Classification by Impurity of Methods of Using PC Vaporized Ingredients p and Commercial PL]

Incidentally, in the case where the DPC production step and the BPA production step and PC production step have the same scale, the amount of the s-PL to be generated in the PC production step shown in Fig. 5 is theoretically about a half of the total amount of the PL to be used as a starting material in the DPC production step and BPA production step, and the amount of the PL to be used as a starting material in the DPC production step is theoretically the same as the amount of the PL to be used as a starting material in the BPA production step. A deficiency is covered by commercial PL (hereinafter referred to as "commercial PL") . Because of this, there are cases where how to use s-PL and commercial PL is a problem.

In general, commercial PL contains impurities such as cresol and/or xylenol and hydroxyacetone in some degree, while the PC vaporized ingredients p from which s-PL has not been recovered through distillation are reduced in the content of impurities such as cresol and/or xylenol and hydroxyacetone. Because of this, how to use s-PL can be determined based on a difference in the content of impurities such as cresol and/or xylenol and hydroxyacetone.

Specifically, it is preferred that the PL to be used as a starting material in the DPC production step should be phenol containing cresol and/or xylenol in an amount of 20-1, 000 ppm by weight (hereinafter referred to as "cresol-containing PL") and that the PL to be used as a starting material in the BPA production step should be phenol containing cresol and/or xylenol in an amount smaller than 20 ppm by weight (hereinafter referred to as "cresol-free PL").

Examples of the cresol-containing PL include commercial PL. This commercial PL contains impurities causative of coloration, such as hydroxyacetone, in an amount of several tens of ppm by weight besides cresol and xylenol.

This cresol-containing PL can be used as it is in the DPC reaction step as stated above. The amount of each of the impurities in this cresol-containing PL, such as cresol, xylenol, and impurities causative of coloration, e.g., hydroxyacetone, is within a range allowable in the DPC reaction step. Through treatment in the first DPC distillation column 6 which will be desirable later, such impurities are distilled off as part of a mixed gas F or removed as a distillation residue. Consequently, even when the DPC produced using this cresol-containing PL is used in the PC production step, this does not influence the quality of the PC obtained.

Examples of the cresol-free PL include the PC vaporized ingredients p from which s-PL has not been recovered through distillation. The content of catalyst poison impurities, e.g., hydroxyacetone, in the PC vaporized ingredients p is preferably lower than 10 ppm, more preferably lower than 5 ppm, especially preferably lower than 1 ppm. Contents thereof not lower than 10 ppm result in a considerably shortened catalyst life.

Besides the impurities shown above such as cresol, xylenol, and catalyst poison impurities or impurities causative of coloration such as hydroxyacetone, examples of the impurities contained in the PC vaporized ingredients p include DPC, BPA, and oligomers formed by the reaction of one or more molecules of DPC with one or more molecules of BPA.

The content of cresol and/or xylenol in the PC vaporized ingredients p is preferably 20 ppm by weight or lower, more preferably 10 ppm by weight or lower. In case where the content thereof is higher than 20 ppm by weight, there is the possibility that alkyl-substituted BPA derivatives might generate, leading to a decrease in BPA purity.

The PC vaporized ingredients p contain water. The presence of water in the BPA production step causes a decrease in catalytic activity and thus leads to a decrease in the degree of BPA formation. It is therefore necessary to conduct a step for water removal. For attaining this, it is preferred to subject the PC vaporized ingredients p to a step for water removal and then use the ingredients p in step (a) in the BPA production step.

As the step for water removal can be used the water separation step (step (b-2)) as it is. Namely, in Fig. 3, the PC vaporized ingredients p are sent as a starting material to the PL separation column 12 to conduct a water removal step. The water/acetone mixture AW which is vaporized off in this operation is separately treated. On the other hand, the distillation residue in the PL separation column 12 is sent to a high-boiling-matter removal column, although this is not shown in Figs. 2 and 3. A high-boiling-matter removal step for separating ingredients having a higher boiling point than PL is then conducted, whereby high-boiling ingredients are separated/removed as bottoms resulting from distillation and PL is recovered as a distillate.

The PL thus recovered may be subjected, without undergoing any treatment, as starting-material PL to the BPA reaction step (step (a)) in the BPA production step. Alternatively, the PL recovered may be temporarily stored in the recovered-PL tank 11 for BPA and then subjected to step (c) and, according to need, to the BPA reaction step (step (a)) through the mother liquor treatment step (step (g)) as shown in Fig. 2. One of the reasons why the PL recovered is subjected to the BPA crystallization/separation step (step (c)) is that it is preferred to use clean PL as a cleaning liquid for the BPA synthesized. Another reason is that even when the PL recovered is subjected to the BPA crystallization/separation step (step (c)), the impurities which come into this step are the 2,4'-isomers of BPA and the like (hereinafter referred to as "BPA by-products") generated in the BPA reaction step and do not influence the synthesis reaction step. On the other hand, the high-boiling ingredients discharged from the high-boiling-matter removal step are sent to the mother liquor treatment step (g) described above, where effective ingredients can be recovered.

By thus sending the PC vaporized ingredients p to the BPA production step and using commercial PL in the DPC production step, adverse influences of the impurities contained canbe diminished and the PL distillation step in the PC production step can be omitted. A contribution to production efficiency improvement can hence be made.

[Connection between Production Steps; Disposition of Storage Steps]

(1. PC Production Step)

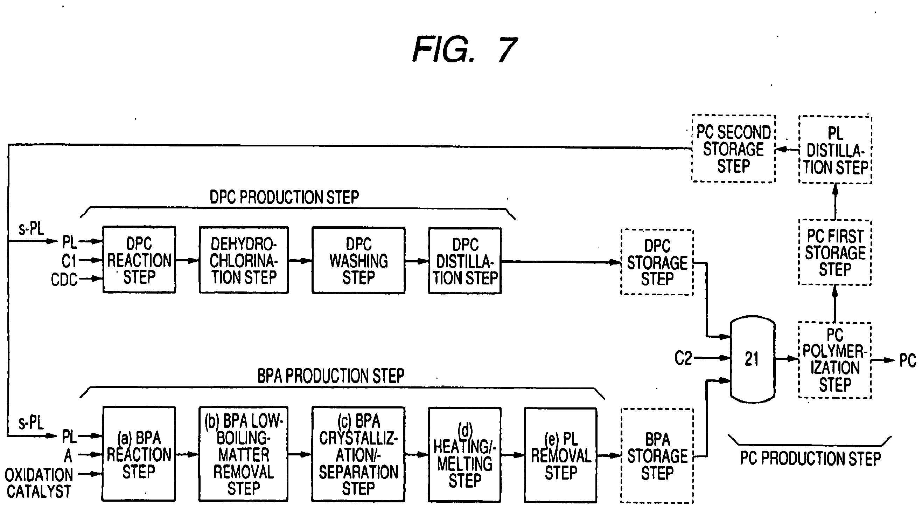

In the PC production step, a PC storage step (PC first storage step or PC second storage step) for storing a liquid obtained by liquefying the PC vaporized ingredients p which is to be subjected to the PL distillation step and/or for storing the s-PL recovered in the PL distillation step can be disposed before and/or after the PL distillation step as shown in Fig. 7. The disposition of the PC storage step has the following effect. Even when the PC polymerization step is temporarily stopped or conducted intermittently, the PC vaporized ingredients p or s-PL stored in this PC storage step can be continuously fed as starting-material PL to the subsequent step, i.e., the PL distillation step or the DPC reaction step or BPA reaction step, whereby the subsequent step can be continuously operated.

The capacity of the PC storage tank to be used in the PC storage step may be determined while taking account of the operating time and stopping time for the PC polymerization step. Specifically, the tank preferably has a capacity satisfying the requirement represented by the following expression (1).

$$10 \leqq (Vc/Fc) \leqq 100 \qquad \cdot \quad (1)$$

In expression (1), Vc indicates the capacity ($m^3$) of the PC storage tank and Fc indicates the feed rate ($m^3$/hr) of the liquefied PC vaporized ingredients or by-product phenol.

When Vc/Fc is smaller than 10, there are cases where it is difficult to continuously feed the PC vaporized ingredients p or s-PL to the next step. Furthermore, it is difficult to regulate those fluctuations in the composition of the PC vaporized ingredients p which accompany PC product grade changes. On the other hand, Vc/Fc may be larger than 100. However, too large tank capacities are undesirable because the necessity of storing in such a large amount is slight from the standpoint of production efficiency, resulting in a waste rather than an improvement in production efficiency, and because too long a holding time is undesirable also from the standpoint of thermal stability.

Incidentally, this PC storage tank may be disposed in only one of the PC first storage step and the PC second storage step or may be disposed in each of the two steps. In one PC storage step, one PC storage tank of the kind described above may be disposed or two or more PC storage tanks may be disposed in series or in parallel. In the case where two or more tanks are disposed, Vc in expression (1) means the total capacity of these tanks present.

(2. DPC Production Step)

In the DPC production step, a DPC storage step for storing the DPC obtained in the DPC distillation step can be disposed after the DPC distillation step as shown in Fig. 7. The disposition of this DPC storage step has the following effect. Even when the DPC production step is temporarily stopped or conducted intermittently, the DPC stored in this DPC storage step can be continuously fed as starting-material DPC to the subsequent step, i.e., the PC production step, whereby a PC can be continuously produced.

The capacity of the DPC storage tank to be used in the DPC storage step may be determined while taking account of the operating time and stopping time for the DPC production step. Specifically, the tank preferably has a capacity satisfying the requirement represented by the following expression (2).

$$10 \leq (Vd/Fd) \leq 100 \qquad (2)$$

In expression (2), Vd indicates the capacity ($m^3$) of the DPC storage tank and Fd indicates the feed rate ($m^3$/hr) of diphenyl carbonate.

When Vd/Fd is smaller than 10, there are cases where it is difficult to continuously feed the DPC to the next step. On the other hand, Vd/Fd may be larger than 100. However, too large tank capacities are undesirable because the necessity of storing in such a large amount is slight from the standpoint of production efficiency, resulting in a waste rather than an improvement in production efficiency, and too large tank capacities are undesirable also from the standpoint of thermal stability.

Incidentally, one DPC storage tank of the kind described above may be disposed or two or more DPC storage tanks may be disposed in series or in parallel. In the case where two or more tanks are disposed, Vd in expression (2) means the total capacity of these tanks present.

(3. BPA Production Step)

In the BPA production step, a BPA storage step for storing the mixture of bisphenol A (BPA) and phenol (PL) is disposed after the PL removal step (step (e)) as shown in Fig. 7 or between the BPA crystallization/separation step (step (c)) and the PL removal step (step (e)) although the latter case is not shown in the figure.

The disposition of this BPA storage step has the following effect. Even when any one step in the BPA production step is temporarily stopped and the steps preceding the stopped step are conducted intermittently, the mixture stored in this BPA storage step can be fed to the PC production step, whereby a PC can be produced continuously.

In particular, the BPA crystallization/separation step (step (c)) is apt to suffer solid deposition on those parts of the crystallizer used including the crystallization vessel and heat exchanger which come into contact with a liquid. It is hence necessary to stop this step and conduct cleaning at intervals of several months. Because of this, the steps ranging from the BPA reaction step (step (a)) to the BPA crystallization/separation step (step (c)) tend to be conducted intermittently. Consequently, the disposition of the BPA storage step after the PL removal step (step (e)) or between the BPA crystallization/separation step (step (c)) and the PL removal step (step (e)), although the latter case is not shown in the figure, enables the PC production step to be continuously conducted even when the steps ranging from the BPA reaction step (step (a)) to the BPA crystallization/separation step (step(c)) are conducted intermittently.

Examples of the form of the mixture to be stored in the BPA storage step include crystals of an adduct of BPA with PL, a slurry containing crystals of an adduct of BPA with PL, a liquid mixture of BPA with PL, and the like.

The BPA/PL mixture generally has a composition in which the BPA content is in the range of 45-70% by weight and the PL content is in the range of 55-30% by weight. Because of this, when the temperature during the storage is 0-95°C, the adduct is crystalline. In the case where the proportion of phenol in the mixture is high, the PL which is not in the form of an adduct with BPA comes into a molten state as the storage temperature rises to 40°C or higher. In this case, the mixture is a slurry or solution. Furthermore, when the storage temperature exceeds 95°C, the adduct melts and thus comes into a molten state.

The storage temperature is preferably 45-150°C. It is desirable that the BPA/PL mixture be in a slurry or solution state. For the purpose of preventing the BPA from decomposing or coloring, it is preferred to keep the mixture at the lowest possible temperature. Under these conditions, the generation of 4-isopropenylphenol, which is thought to be a substance causative of coloration and yielded by the decomposition of BPA, can be inhibited.

It is also important that the atmosphere in the storage tank should be an inert gas atmosphere such as nitrogen gas so as to prevent air inclusion. Although general austenitic stainless steel or ferritic stainless steel can be used as the material of the storage tank, it is preferred to use a material reduced in iron dissolution, which is causative of a decrease in color tone. In particular, a steel material having a chromium content of 16% or higher and a carbon content of 0.03% or higher is preferred. For example, it is preferred to use SUS304 rather than SUS316, and to use SUS316 or SUS304 rather than SUS316L or SUS304L. It is a matter of course that SUS309S and SUS310S, which have a higher chromium content, are more preferred.

The capacity of the tank for storing the BPA/PL mixture may be determined while taking account of the operating time and stopping time for the BPA production step. Specifically, the tank capacity preferably satisfies the requirement represented by the following expression (3).

$$10 \leq (Vb/Fb) \leq 1,000 \qquad (3)$$

In expression (3), Vb indicates the capacity ($m^3$) of the BPA storage tank and Fb indicates the feed rate ($m^3$/hr) of the

bisphenol A being fed to the PC polymerization step.

When Vb/Fb is smaller than 10, there are cases where it is difficult to continuously conduct the PC polymerization step. On the other hand, Vb/Fb may be larger than 1,000. However, too large tank capacities are undesirable because the necessity of storing in such a large amount is slight from the standpoint of production efficiency, resulting in a waste rather than an improvement in production efficiency, and because long-term holding is undesirable also from the standpoint of quality.

Incidentally, one storage tank of this kind may be disposed, or two or more storage tanks may be disposed in series or in parallel. In the case where two or more tanks are disposed, Vb in expression (3) means the total capacity of these tanks present.

In the BPA storage step, since the adduct which is in the form shown above is stored, a BPA decomposition reaction is apt to occur when the pH is shifted to the acid side or alkaline side. For preventing this, it is preferred to dispose a BPA neutralization step (not shown) in the BPA storage tank present between the BPA crystallization/separation step (step (c)) and the PC polymerization step or in a step before these steps. An acid ingredient or basic ingredient present in the mixture can be neutralized in the BPA neutralization step, whereby the BPA in the mixture can be inhibited from decomposing.

[Waste Liquor Treatment]

(Treatment of PL Distillation Residue (X2))

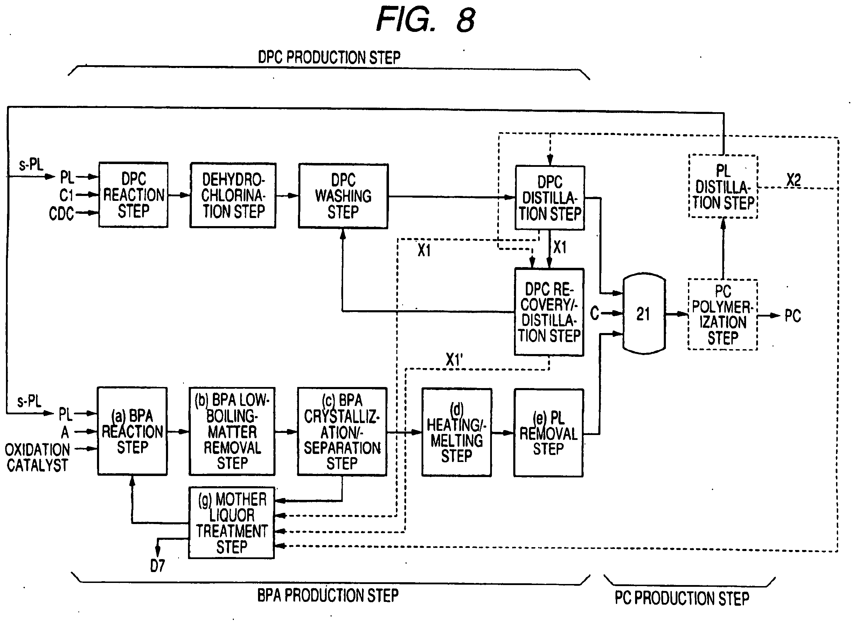

The PL distillation residue (X2) contains PL, DPC, BPA, oligomers formed by the condensation polymerization of one or more molecules of DPC with one or more molecules of BPA, and the like. Of these, PL, BPA, and DPC are contained in large amounts. Consequently, in order to effectively utilize these effective ingredients, the PL distillation residue (X2) is sent to the distillation step or recovery/distillation step in the DPC production step or to the mother liquor treatment step (step (g)) in the BPA production step, as shown in Fig. 8.

When the DPC production step does not have the recovery/distillation step and the PL distillation residue (X2) is sent to the distillation step in the DPC production step, then the PL distillation residue (X2) is specifically sent to the first DPC distillation column 6 as shown in Fig. 1. As a result, the PL distillation residue (X2) is distilled in the first DPC distillation column 6 and second DPC distillation column 7, and PL and DPC are recovered. Of these, the PL is recovered as one component of a mixed gas (F) in the first DPC distillation column 6, while the DPC is recovered in the second DPC distillation column 7.

When the DPC production step has the recovery/distillation step and the PL distillation residue (X2) is sent to the recovery/distillation step in the DPC production step, then the PL distillation residue X2 is specifically sent to the DPC recovery/distillation column 8 as shown in Fig. 1. As a result, the PL distillation residue (X2) is distilled in the DPC recovery/distillation column 8, and PL and DPC are recovered and sent to the mixing vessel 3. Of these, the PL is recovered as one component of a mixed gas (F) in the first DPC distillation column 6, while the DPC is recovered in the second DPC distillation column 7.

Furthermore, when the PL distillation residue (X2) is sent to the mother liquor treatment step (step (g)) in the BPA production step, then the PL distillation residue (X2) is specifically sent to the residue reactor 14 as shown in Fig. 4. As a result, PL is distilled off as it is, while other ingredients are decomposed and, in the regenerating reactor 15, yield BPA and other compounds again. These compounds yielded are sent to a BPA reactor (not shown) in the BPA production step. Thus, the PL is used as a starting material and the BPA moves together with the BPA synthesized.

(Treatment of Distillation Residue (X1) or Recovery/Distillation Residue (X1'))

In the DPC production step, the distillation residue (X1) obtained when the DPC production step does not have the recovery/distillation step or the recovery/distillation residue (X1') obtained when the DPC production step has the recovery/distillation step contains DPC compound impurities, such as DPC, methyl-substituted DPC derivatives, and bromine-substituted DPC derivatives, and other impurities. When the PL distillation residue (X2) has been introduced into the distillation step or recovery/distillation step; then the residue (X1) or (X1') further contains BPA, oligomers formed by the condensation polymerization of one or more molecules of DPC with one or more molecules of BPA, and other impurities. Of these impurities, BPA and DPC are contained in large amounts. Consequently, in order to effectively utilize these effective ingredients, the distillation residue (X1) or recovery/distillation residue (X1') is sent to the mother liquor treatment step (step (g)) in the BPA production step.

In this case, the distillation residue (X1) or recovery/distillation residue (X1') is specifically sent to the residue reactor 14 as shown in Fig. 4. As a result, the ingredients are decomposed and part of the decomposition products are converted again to BPA in the regenerating reactor 15. The BPA and phenol obtained are sent to a BPA reactor (not shown) in the BPA production step.

(PL Distillation Residue (X2) and Distillation Residue (X1) or Recovery/Distillation.Residue (X1'))

Examples of methods for treating the PL distillation residue (X2), distillation residue (X1), and recovery/distillation residue (X1') include those described above. Preferred of these is the method in which the PL distillation residue (X2) is sent to the DPC distillation step or DPC recovery/distillation step and, subsequently, the DPC distillation residue (X1) resulting from the DPC distillation step or the DPC recovery/distillation residue (X1') is sent to the BPA mother liquor treatment step (step (g)).

By thus treating the residues, the waste liquors discharged from the DPC production step, BPA production step, and PC production step are integrated into one waste liquor (D7) resulting from the mother liquor treatment step (step (g)) in the bisphenol A (BPA) production step. Thus, the waste liquors resulting respectively from the three steps and containing organic matters in large amounts can be integrated into one, and the amount of all waste liquors to be discharged can be reduced. Consequently, a waste liquor treatment step (not shown) is operated efficiently and the burden to be imposed thereon can be lessened.

[Vacuum Device]

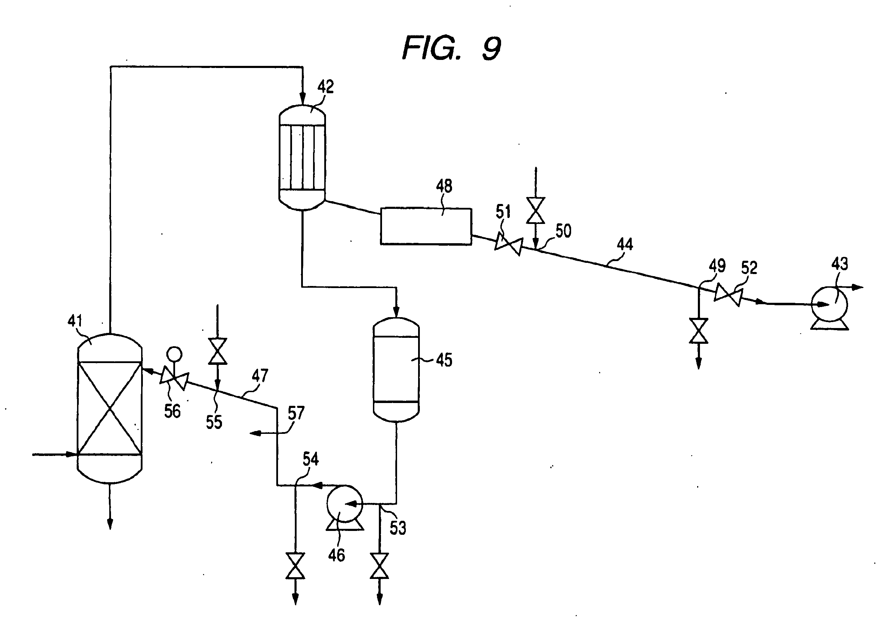

The distillation apparatus, such as distillation columns, and polymerizer in the DPC distillation step, PC polymerization step, and PL distillation step are provided with a condenser for condensing distillate ingredients, a vacuum device for reducing the pressure in the system, and a vacuum piping which connects the condenser to the vacuum device. An explanation is given below on a distillation apparatus as an example. As shown in Fig. 9, a distillation apparatus 41 is provided with a condenser 42 for condensing distillate substances such as DPC and PL, a vacuum device 43 for reducing the pressure in the system, and a vacuum piping 44 which connects the condenser 42 to the vacuum device 43.

This distillation apparatus 41 frequently has a reflux part. The devices which constitute this reflux part include the condenser 42 for condensing distillate substances, a condensate tank 45 for collecting part of a condensate, a liquid feed pump 46 for returning the condensate in the condensate tank 45 to the distillation apparatus 41, and a reflux piping 47 which connects the liquid feed pump 46 to the distillation apparatus 41. Hereinafter, this reflux part is referred to as "reflux apparatus".

The vacuum device 43 is a device which serves to suck and discharge the gas present in the distillation apparatus 41 and reflux apparatus and thereby bring the distillation apparatus 41 into a vacuum state. Examples of this vacuum device 43 include vacuum pumps.

The vacuum piping 44 connected to this vacuum device 43 is inclined downward from the condenser 42 side to the vacuum device 43 side. It is desirable that in the horizontal parts of the vacuum piping 44, the parts having this inclination should be as long as possible. The degree of inclination is not particularly limited as long as the downward inclination angle with the horizontal direction is larger than 0° and not larger than 90°. However, the degree of downward inclination is desirably 1 cm or larger, more desirably from 5 cm to 1 m, in horizontal 2 m toward the vacuum device. It is more desirable that the horizontal parts having inclination should have no part which is completely horizontal or rises upward. It is even more desirable that the inclination is constant throughout the vacuum piping 44. The term horizontal parts means parts in a horizontal state and parts in the state of being slightly inclined from the horizontal state. The term completely horizontal parts means parts perpendicular to the vertical direction.

The inclination may have the completely horizontal parts or rising parts therein. However, the total height of the rising parts is preferably 1 m or smaller, more preferably 50 cm or smaller, even more preferably 10 cm or smaller. Most preferably, the inclination has no such parts. In case where the total height of the rising parts exceeds 1 m, there is the possibility that when the distillate stays in the rising parts, this might result in too large a pressure loss and make it impossible to conduct sufficient evacuation. The term rising parts means the parts which are inclined upward from the condenser 42 side to the vacuum device 43 side oppositely to the inclination described above. In such rising parts, the distillate is apt to stay as a liquid or solid. When the distillate stays, this results in a pressure loss. Too much distillate staying may cause clogging of the pipe itself. It is therefore desirable that the vacuum piping 44 has no rising parts. Because of this, it is more desirable that the vacuum piping is inclined only downward from the condenser 42 side to the vacuum device 43 side.

The condenser 42 condenses PL, DPC, etc. The condensed distillate is discharged from the systemor sent to the condensate tank 45 in the reflux apparatus in preparation for refluxing to the distillation apparatus 41.

The pressure in the distillation column 41 is preferably a reduced pressure, more preferably 1-200 Torr, especially preferably 5-100 Torr. When the distillation column 41 has such an internal pressure, the pressure in the evacuated vacuum piping 44 through which the gas in the distillation column 41 is drawn desirably is close to or lower than the pressure in the distillation column 41, and more desirably is 1-100 Torr.

Furthermore, the piping extending from the top of the distillation column 41 to the condenser 42 desirably has a structure which satisfies the following requirements. The inner diameter of the piping is desirably such that the actual linear gas velocity is in the range of 0.01-20 m/sec. The shorter the length of the piping extending from the top of the distillation column 41 to the condenser 42, the better. The length thereof is desirably 10 m or shorter, more desirably 0 m. Furthermore, the smaller the number of bent parts in the piping, the better. The number thereof is desirably 5 or smaller. In view of these requirements, it is most desirable that the condenser 42 should have been disposed as a column-top condenser on the top of the distillation column 41. When those requirements are satisfied, the distillation column 41 comes to have a more stable vacuum state formed by the vacuum device 43.

It is desirable that the gas of PL and DPC which have been vaporized off be supplied so as to flow downward through the condenser 42. It is also desirable that the inner part and outlet part of the condenser 42 should have a large diameter so as to result in a low linear gas velocity. In case where the linear gas velocity is high, this is causative of a pressure loss and there is the possibility that the distillation apparatus 41 cannot retain a vacuum state.

It is desirable that a mist catcher 48 for trapping a mist should have been disposed between the condenser 42 and the vacuum piping 44. This is intended to prevent, as much as possible, a mist of PL or DPC from coming into the vacuum piping 44 and staying or solidifying therein.

The vacuum piping 44 desirably has a device for heating and keeping the inside thereof at a temperature not lower than the melting point of the distillate. Examples of this device include ones in which the vacuum piping 44 has a double-pipe structure or a steam or electrical trace structure. In the case where the distillate is composed of two or more ingredients, it is desirable that the temperature at which the inside of the piping 44 is to be kept should be not lower than the melting point of the substance having the highest melting point among these. Although the inside of the vacuum piping 44 is in a vacuum state, the term melting point used here means the melting point in the vacuum state. When the inside of the vacuum piping 44 is kept at a temperature not lower than the melting point of the distillate, then the PL or DPC which was not condensed in the condenser 42 and has come into the vacuum piping 44 remains liquid or gaseous without solidifying, whereby the possibility that the inside of the vacuum piping 44 might be clogged can be further reduced. It is therefore desirable from the standpoint of operating the step that the inside of the vacuum piping 44 be kept at a temperature not lower than 80°C, which is the melting point of DPC, and not higher than the temperature of the top of the distillation apparatus 41.

It is desirable that the vacuum piping 44 be provided with at least one drain opening 49 facing downward. This is because it is necessary that the distillate which has liquefied or become a dew within the vacuum piping 44 should be discharged without staying in the vacuum piping 44. At least one of such drain openings 49 desirably is located close to that part of the vacuum piping 44 which is connected to the vacuum device 43. The reason for this is as follows. Since the vacuum piping 44 is inclined, discharge of the distillate through an opening which is not located as close as possible to the lowest part of the inclined piping results in the possibility that distillate staying might occur in a part which is beyond the opening. This liquid discharge may be conducted not during evacuation by the vacuum device 43 but after the whole apparatus is stopped. In the case where the length of the vacuum piping 44 exceeds 3 m, it is desirable to dispose a drain opening 49 also in an internal part of the vacuum piping 44 because this enables liquid staying to be more easily avoided.

Furthermore, it is desirable that the vacuum piping 44 be provided, in a part thereof located on the condenser 42 side, with a feed opening 50 through which a heated fluid can be supplied. The closer the position of this feed opening 50 to the condenser 42, the more desirable. However, in the case where the mist catcher 48 is present between the vacuum piping 44 and the condenser 42, it is desirable that the position of the feed opening 50 be not between the mist catcher 48 and the condenser 42 but as close as possible to that part of the vacuum piping 44 which is connected to the mist catcher 48. By disposing the feed opening 50, the heated fluid can be introduced through this opening and discharged through the drain opening 49, whereby the vacuum piping 44 can be cleaned. It is therefore desirable that the part ranging from the feed opening 50 to the drain opening 49 should occupy the longest possible region in the vacuum piping 44. Because of the inclination, supply from the side having a higher potential energy is more efficient. Consequently, it is desirable that the feed opening 50 in the vacuum piping 44 be open upward.

The heated fluid is a substance which is a fluid at the temperature of the inside of the vacuum piping 44, and may be either a liquid or a gas. Examples of the heated fluid include steam, PL, nitrogen, and the like. More desirably, the heated fluid is steam or PL vapor. Use of PL vapor is even more desirable because even when DPC has solidified in the vacuum piping 44, this solid can be dissolved. The heated fluid may consist of one of those or a mixture of two or more of those. It is, however, desirable that the heated fluid be one which hardly reacts with the material of the vacuum piping 44, DPC, etc. under the temperature and pressure conditions in the vacuum piping 44. More desirable is one which does not react at all.

It is desirable that the vacuum piping 44 should have valves 51 and 52 disposed in parts thereof connected to the condenser 42, vacuum device 43, mist catcher 48, etc. This is because when the vacuum piping 44 is cleaned with the heated fluid, partitioning with valves can prevent the heated fluid from leaking out of the vacuum piping 44.

It is also desirable that the vacuum piping 44 should have a freeze condenser (not shown). It is more desirable that two or more freeze condensers have been disposed in parallel so as to be switched. The disposition of the freeze condenser (s) is desirable because the distillate ingredients which could not be trapped by the condenser 42 can be forcedly solidified and collected and those parts of the vacuum piping 44 which are located downstream from the freeze condenser (s) are inhibited from suffering clogging or a pressure loss increase.

In the case where low-boiling compounds such as PL are distilled off from DPC, it is also effective to use two or more condensers 42 connected in series in order to liquefy the gas discharged as a distillate from the distillation apparatus 41. In this case, the temperatures of the condensers 42 are preferably regulated so that as the distance from the distillation column 41 increases, the temperature decreases gradually. In particular, the first condenser 42 is regulated so as to have a temperature of 80-150°C in order to positively condense high-boiling ingredients such as DPC, and the resultant condensate is circulated to the distillation apparatus 41. Subsequently, the uncondensed gas which has not been liquefied in the first condenser 42 is almost completely liquefied in the second and succeeding condensers 42 regulated so as to have a temperature of 0-80°C. The condensate thus obtained by liquefaction is partly refluxed to the distillation apparatus 41 according to need, and the remainder or whole of the condensate is discharged as a distillate. The disposition of two or more condensers 42 has the following advantages. Even if a large amount of DPC is discharged as a distillate from the distillation column 41, the DPC neither solidifies nor causes clogging in the condensers 42, whereby the apparatus can be continuously operated and distillation can be stably conducted for long. The solidifying point of DPC is 80°C, which is higher than the solidifying point (40°C) of PL. Because of this, when a large amount of DPC is present in a condenser 42 operated under temperature conditions suitable for condensing ordinary low-boiling compounds alone, e.g., PL, there is the possibility that the DPC might solidify within the condenser 42. Consequently, the technique in which two or more condensers 42 are disposed and used in such a manner that DPC, which is a high-melting compound, is forcedly condensed/removed before the uncondensed gas is condensed is effective in preventing solidification and in stably maintaining a degree of vacuum in the distillation apparatus 41. Furthermore, in the case where a large amount of compounds having a lower boiling point than PL are contained, besides PL, in the low-boiling matters to be distilled off, it is desirable to use such condensers 42 disposed in multi-stage arrangement.

The reflux apparatus described above is then explained by reference to Fig. 9. By using this reflux apparatus, the efficiency of separation by distillation can be heightened while inhibiting the vaporization of high-boiling ingredients.

The horizontal part of the refluxpiping 47 for refluxing the condensate in the condensate tank to the distillation apparatus 41 with the liquid feed pump 46 desirably is inclined downward from the distillation apparatus 41 side to the liquid feed pump 46 side. This horizontal part having inclination desirably has no part therein which is completely horizontal or rises upward. More desirably, the inclination is constant. In this case, the degree of downward inclination is desirably 1 cm or larger, more desirably from 5 cm to 1 m, in horizontal 2 m toward the liquid feed pump 46. If there are completely horizontal parts or rising parts, it is necessary that the difference in height resulting from the inclination should be larger than the total height difference of the rising parts, and the total height of the rising parts is desirably 1 m or smaller, more desirably 10 cm or smaller. The term rising parts means the parts which are inclined upward from the distillation apparatus 41 side to the liquid feed pump 46 side oppositely to the inclination described above.

That part of the reflux piping 47 which is located between the horizontal part having inclination and the liquid feed pump 46 may have a part which is vertical or is inclined nearly vertically as shown in Fig. 9, although this depends on the position of the liquid feed pump 46. In this case, drain openings 53 and 54 may be disposed in those parts of the piping which are located around the suction opening and the discharge opening, respectively, of the liquid feed pump 46, in order to discharge a liquid staying before and after the liquid feed pump 46.

The reflux piping 47 desirably has a device for heating and keeping the inside thereof at a temperature not lower than the melting point of the distillate. In the case where the distillate is composed of two ormore ingredients, it is desirable that the inside of the piping 47 can be heated and kept at a temperature not lower than the melting point of the substance having the highest melting point among these. When the reflux piping is kept at a temperature not lower than the melting point of the distillate, the distillate remains liquid or gaseous without solidifying, whereby the possibility that the distillate might clog the inside can be further reduced. Examples of the device for such heating/temperature keeping include ones in which the piping has a double-pipe structure or a steam or electrical trace structure.

It is desirable that this reflux piping 47 should have a feed opening 55 disposed in a part thereof close to the distillation column 41. In the case where the operation of the whole apparatus has been stopped, the heated fluid is introduced through this feed opening 55 and discharged through the drain opening 54, whereby the reflux piping 47 can be cleaned. In this case, it is desirable that a valve 56 should have been disposed between the reflux piping 47 and the distillation apparatus 41 so as to prevent the heated fluid from flowing into the distillation apparatus 41.

Incidentally, the distillation apparatus for separating out PL or DPC as a distillate, such as those described above, can be used for recovering PL or DPC, for example, in the DPC distillation step in which impurities including PL are removed from DPC to recover purified DPC or in the PC polymerization step or PL distillation step in the PC production step in which a PC is produced through polymerization by reacting DPC with BPA under vacuum while recovering the PL generated as a by-product (s-PL) . The distillation apparatus is further usable in steps in which PL or DPC is likewise separated out as a distillate.

Furthermore, although a reflux apparatus for refluxing PL or DPC, such as that described above, can be used in the step described above as an example in which the PL and DPC discharged as a distillate from the distillation apparatus 41 are returned to the distillation apparatus 41 to inhibit the high-boiling ingredients contained in the supplied PL and DPC from vaporizing and thereby heighten the efficiency of separation by distillation, it is further usable in steps in which refluxing is likewise necessary. Incidentally, the high-boiling ingredients can be separately discharged through a lower part of the distillation apparatus 41.

In the case where these apparatus are used for producing DPC, the reflux piping 47 desirably has, in a part thereof other than the horizontal part having inclination, a discharge opening 57 for discharging DPC from the system.

By using these apparatus described above respectively in these steps, pipe clogging, if it has occurred, can be easily eliminated by the cleaning method in which the heated fluid is supplied through the feed openings 50 and 55 disposed in the respective apparatus.

<Examples>

[EXAMPLE 1]

The invention will be explained below in more detail with respect to the treatment of s-PL.

(Production of Dehydrated s-PL)

[Polymerization Step for PC]

In a nitrogen gas atmosphere, BPA (manufactured by Mitsubishi Chemical Corp.; one obtained in Reference Example 2 given later) supplied at 34.3 kg/hr was melt-mixed at 130°C with DPC (manufactured by Mitsubishi Chemical Corp.; one obtained in Reference Example 1 given later) supplied at 33.5 kg/hr. This mixture was continuously fed, through a starting-material introduction tube heated at 130°C, to a first vertical stirring polymerization vessel regulated so as to have a temperature of 210°C in an ordinary-pressure nitrogen atmosphere. The liquid level was kept constant by regulating the degree of opening of the valve disposed in a polymer discharge line connected to a bottom part of the vessel, so as to result in an average residence time of 60 minutes. Furthermore, simultaneously with initiation of the feeding of the starting-material mixture, cesium carbonate in an aqueous solution form began to be continuously supplied as a catalyst at a flow rate of $0.5 \times 10^{-6}$ mol per mol of the BPA. The liquid polymerization reaction mixture discharged from the vessel bottom was subsequently continuously supplied successively to second, third, and fourth vertical polymerization vessels and a fifth horizontal polymerizer. During the reaction, the liquid level in each vessel was regulated so as to result in an average residence time of 60 minutes and, simultaneously therewith, the PL generated as a by-product was distilled off. The gases formed by vaporization and discharged respectively from the first to third polymerization vessels each were condensed and liquefied with a multi-stage condenser, and part of the condensate was refluxed to the polymerization vessel and the remainder was recovered and stored in an s-PL tank. On the other hand, the gases formed by vaporization and discharged from the fourth and fifth polymerizers each were solidified with one of two freeze condensers arranged in parallel. The resultant solid was melted by switching to the other freeze condenser, and recovered and stored in the s-PL tank.

Polymerization conditions for each reaction vessel were as follows: first polymerization vessel (210°C, 100 Torr), second polymerization vessel (240°C, 15 Torr), third polymerization vessel (260°C, 0.5 Torr), and fourth polymerization vessel (270°C, 0.5 Torr). Furthermore, the rate of polycarbonate production was 38.3 kg/hr. The system was operated for 400 hours.

The resultant polymer in a molten state was introduced into a twin-screw extruder (manufactured by Kobe Steel; Ltd.; screw diameter, 0.046 m; L/D = 40.2), and butyl p-toluenesulfonate was continuously added thereto in an amount of 5 ppm of the polycarbonate. The butyl p-toluenesulfonate was in the form of a master batch produced by dispersing a stock solution in a flaky polycarbonate with a mixer, and was supplied to the extruder with a weigh-feeder in a nitrogen atmosphere. The polymer was pelletized. The polycarbonate obtained had a viscosity-average molecular weight (Mv) of 21, 000 and an initial hue (YI) of 1.7.

<Measurement of Viscosity-Average Molecular Weight (Mv)>

Amethylene chloride solution having a PC concentration (C) of 0.6 g/dL was used to measure the specific viscosity ($\eta$sp) thereof at a temperature of 20°C with a Ubbellohde viscometer, and the molecular weight was calculated from the viscosity value using the following two equations.

$$\eta sp/C = [\eta](1 + 0.28\eta sp)$$

$$[\eta] = 1.23 \times 10^{-4}(Mv)^{0.83}$$

<Measurement of Initial Hue (YI)>

The PC was dried at 120°C for 6 hours in a nitrogen atmosphere, and an injection-molded piece having a thickness of 3 mm was then produced therefrom at 360°C using injection molding machine J-100, manufactured by The Japan Steel Works, Ltd. This piece was examined with SC-1, manufactured by Suga Test Instruments Co., Ltd., for the value of YI (the larger the value of YI, the more the PC has colored).

[s-PL Purification Step]

The s-PL recovered from the polymerization step at about 30.2 kg/hr was analyzed. As a result, 5.0% by weight DPC, 0.5% by weight BPA, 0.3% by weight oligomers, and 0.3% by weight water were detected.

This s-PL was continuously purified with the following two distillation columns. The first PL distillation column was operated at 200 Torr and a reflux ratio of 2, whereby the water contained was distilled off together with part of the PL. The bottoms were supplied to the second PL distillation column. The PC low-boiling distillate discharged from the first PC distillation column had a phenol concentration of about 90% by weight. Subsequently, the second PL distillation column was operated at 50 Torr and a reflux ratio of 0.5 to obtain purified s-PL through the top at about 27 kg/hr. On the other hand, a liquid PL mixture containing DPC, BPA, and oligomers in amounts of 67% by weight, 7% by weight, and 4% by weight, respectively, was continuously discharged as bottoms at about 2.2 kg/hr.

(EXPERIMENTAL EXAMPLE 1) Production of DPC

First, a detailed explanation is given in a process in which the dehydrated s-PL discharged as a distillate from the second PL distillation column shown in Fig. 5 is used as a startingmaterial for DPC to produce DPC while the PC low-boiling distillate (D6) resulting from the s-PL dehydration in the first PL distillation column 30 is being recycled to a DPC washing step.

[Reaction Step for DPC/Dehydrochlorination Step]

A DPC production step was conducted according to the flow diagram shown in Fig. 1. Incidentally, the DPC reactor 1 used was constituted of two reactors connected in series.

The purified s-PL in a molten state having a temperature of 50°C was continuously fed at 30.0 kg/hr (0.32 kmol/hr) to a DPC first reactor together with, as a catalyst, pyridine-containing PL obtained by dehydrating low-boiling substances discharged as a distillate from the low-boiling-matter distillation column described later. While being thus fed, the purified s-PL was heated to 150°C. Phosgene (CDC) gas was continuously fed to the DPC first reactor at 3.56 Nm$^3$/hr (0.16 kmol/hr) with sufficient stirring. The reaction mixture which had flowed out from the DPC first reactor and had a gas/liquid mixture phase was supplied to a DPC second reactor through an overflow pipe. The contents in the DPC second reactor also were regulated so as to have a temperature of 150°C with sufficient stirring. The liquid reaction mixture was supplied to a dehydrochlorination column 2. In the dehydrochlorination column 2, countercurrent contacting was conducted at 160°C using nitrogen gas in order to completely react the phenyl chloroformate formed as an intermediate with PL. A dehydrochlorinated liquid b having a DPC concentration of about 89% by weight was continuously discharged from the bottom of the dehydrochlorination column 2. Almost 100% of the phosgene fed was converted to DPC. On the other hand, the discharge gases resulting from the DPC synthesis (D1; a reaction discharge gas from the DPC second reactor and a nitrogen-containing discharge gas from the dehydrochlorination column 2) were mixed together and then cooled to 10°C. The resultant condensate was returned to the DPC second reactor, while the hydrogen chloride obtained as an uncondensed gas was neutralized with an aqueous alkali solution and discharged. [DPC Washing Step/DPC Water Washing Step]

The dehydrochlorinated liquid b obtained was sent to a mixing vessel 3 together with a DPC-containing recovered liquid d recovered from the DPC recovery/distillation column 8 described later. Subsequently, the mixture was sent to an alkali neutralization vessel 4 having a Teflon lining. About 5% by weight aqueous sodium hydroxide solution (liquid obtained by mixing 25% by weight aqueous sodium hydroxide solution with the aqueous phase separated after the subsequent water washing step and with the PC low-boiling distillate obtained in the s-PL purification step described above) was supplied to the neutralization vessel 4. The contents were mixed at 80°C for about 10 minutes and then regulated so as to have a pH of 8.5. This mixture was allowed to stand for separation, and the organic phase separated was transferred to the water washing vessel 5. On the other hand, the aqueous phase remaining after the separation (which contained PL and common salt) was brought into contact with steam, whereby the PL contained was almost wholly recovered as a low-boiling distillate. This distillate was supplied to a water washing vessel 5 in the next step.

In the water washing vessel 5, the organic phase was washed with warm water used in an amount of about 30% by weight based on the organic phase. The aqueous phase (which was recycled to the neutralization/mixing vessel) was separated to obtain a water-washed liquid f which was crude DPC (containing water, catalyst pyridine, and PL).

[DPC Distillation Step/Low-Boiling-Matter Distillation Step]

Subsequently, the water-washed liquid f and 0.1-N aqueous sodium hydroxide solution were continuously supplied to the middle stage of a first DPC distillation column 6 at rates of about 42 kg/hr and 70 mL/hr, respectively. As this first DPC distillation column 6 was used a continuous distillation column having a theoretical plate number of 8 which had an inner diameter of 150 mm and a height of 4.0 m, was equipped with a reflux apparatus thereover, had a starting-material feed part at the center thereof, and had a concentration region and a recovery region each packed with Sulzer Packing (manufactured by Sumitomo Heavy Industries, Ltd.). Distillation was conducted under the conditions of a degree of vacuum of 20 Torr, heat-medium oil temperature of about 220°C, top temperature of 80-100°C, and reflux ratio of 1 to distill off a mixed gas F containing substances having a lower boiling point than DPC, i.e., water, catalyst pyridine, and unreacted PL. After the mixed gas F was dehydrated, part of the gas was purged and the remainder was supplied to the DPC first reactor. On the other hand, a first distillation residue g consisting mainly of DPC was discharged from the columnbottomat about 37 kg/hr. Water therein was not detectable (10 ppm or lower), and the contents of pyridine and PL were not detectable (1 ppm or lower) and 50 ppm, respectively.

[DPC Distillation Step/High-Boiling-Matter Distillation Step]

Furthermore, the first distillation residue g was continuously supplied to a second DPC distillation column 7. As this second DPC distillation column 7 was used a continuous distillation column having a theoretical plate number of 8 which had an inner diameter of 200 mm and a height of 4.0 m, was equipped with a reflux apparatus thereover, had a starting-material feed part at the center thereof, and had a concentration region and a recovery region each packed with Sulzer Packing (manufactured by Sumitomo Heavy Industries, Ltd.). Distillation was conducted under the conditions of a degree of vacuum of 20 Torr, heat-medium oil temperature of about 240°C, top temperature of about 180°C, reflux ratio of 0.5, and distillate proportion of about 90%. As a result, purified DPC was obtained through the top at about 33.5 kg/hr, and a DPC distillation residue (X1), which was a high-boiling matter, was purged from the column bottom at about 4 kg/hr. This purified DPC was a high-purity product containing PL in an amount of 80 ppm.

[DPC Recovery/Distillation Step]

Moreover, the DPC distillation residue (X1) purged from the bottom of the high-boiling-matter distillation column was simultaneously supplied to a DPC recovery/distillation column 8 to conduct continuous distillation under the following conditions. A DPC-containing recovered liquid d recovered through the top at about 3.5 kg/hr was recycled to the mixing vessel 3, while bottoms from the DPC recovery/distillation column 8 were continuously purged at about 0.2 kg/hr. With respect to conditions for the DPC recovery/distillation, a continuous distillation column having a theoretical plate number of 8 was used which had an inner diameter of 100 mm and a height of 3.0 m, was equipped with a reflux apparatus thereover, had a starting-material feed part at the center thereof, and had a concentration region and a recovery region each packed with Sulzer Packing (manufactured by Sumitomo Heavy Industries, Ltd.). Distillation was conducted under the conditions of a degree of vacuum of 20 Torr, heat-medium oil temperature of about 240°C, top temperature of 180°C, and reflux ratio of 0.5. In the DPC recovery/distillation residue (X1') which was bottoms from the DPC recovery/distillation column 8, alkyl-substituted DPC derivatives and bromine-substituted DPC derivatives were detected in amounts of about 7,000 ppm by weight and about 800 ppm by weight, respectively.

(REFERENCE EXAMPLE 1) Production of DPC

DPC was produced in the same manner as in Experimental Example 1, except that commercial PL (manufacturedbyMitsubishi Chemical Corp.) was used in place of the purified s-PL.

[Results]

It was ascertained that even when s-PL was used, the same yield as in the case of using commercial PL was obtained and the production efficiency was maintained.

(COMPARATIVE EXAMPLE 1) Production of DPC

DPC was produced in the same manner as in Experimental Example 1, except that s-PL (water content, 0.3% by weight) obtained by bypassing the first PL distillation column in the s-PL purification step was used. As a result, due to the hydrolysis in the reaction step for DPC, the DPC concentration in the dehydrochlorinated liquid b decreased to 86% by weight, resulting in a considerable decrease in production efficiency.

(REFERENCE EXAMPLE 2) Production of BPA

(BPA Production Step)

BPA was produced according to the flow diagrams shown in Figs. 2 to 4 in the following manner. A sulfonic-acid-form acid cation-exchange resin (trade name DIAION SK-104, manufactured by Mitsubishi Chemical Corp.) in which 15% of the sulfo groups had been neutralized with 4-pyridineethanethiol was packed in an amount of 60 L into a flow-through type BPA reactor having a thermostat. A liquid mixture of PL and acetone in a molar ratio of 10:1 was introduced into this BPA reactor at a temperature of 80°C and a flow rate of 68.2 kg/hr and reacted. The conversion of the acetone was 80%. After low-boiling matters (unreacted acetone, water, and part of PL) were removed at a flow rate of 5.1 kg/h, the reaction mixture was cooled to 50°C to precipitate crystals of an adduct. This mixture was filtered to separate it into the adduct crystals and the mother liquor. The flow rates of these were 16.5 kg/h and 46.5 kg/h, respectively. Ten percent by weight of this mother liquor was supplied to the mother liquor treatment step, while the remainder of the mother liquor was circulated as part of a starting material to be introduced into the BPA reactor.

The adduct crystals thus obtained were redissolved in PL supplied at a flow rate of 27.2 kg/h. The resultant solution was cooled to 50°C to precipitate crystals and then filtered to separate the adduct crystals (11.3 kg/h) from the mother liquor (32.5 kg/h) . The crystals separated were heated to 180°C under a reduced pressure of 0.3 mmHg to remove the PL. Thus, BPA having a purity of 99.95% or higher was obtained at a flow rate of 7.7 kg/h.

The mother liquor supplied to the mother liquor treatment step was treated with the PL evaporator shown in Fig. 4 to distill off part of the PL and concentrate the mother liquor. Subsequently, 0.1% by weight sodium hydroxide was added to the mother liquor, which was then introduced into the bottom of a residue reactor 14 regulated so as to have a reduced pressure of 50 mmHg and a temperature of 210°C. This reactor was operated under such conditions as to maintain a constant liquid level in the bottom part (residence time, 1 hr), and the bottoms in the residue reactor 14 were purged from the system at a flow rate of 0.5 kg/h. Furthermore, the distillate discharged from the top of the residue reactor 14 was mixed with the PL, and this mixture was introduced at a flow rate of 4.2 kg/h into a flow-through type regenerating reactor 15 packed with 4 L of a sulfonic-acid-form acid cation-exchange resin (trade name DIAION SK-104, manufactured byMitsubishi Chemical Corp.) . The mixture was reacted under the conditions of 80°C. The liquid reaction mixture obtained was circulated to the BPA reactor used in the initial stage.

The low-boiling matters (unreacted acetone, water, and part of PL) obtained by separation from a reaction mixture were introduced into a PL recovery column at a flow rate of 5.1 kg/h. Simultaneously therewith, ethylbenzene (azeotrope breaker) was supplied through the column top. As a result, a liquid mixture of acetone, water, and ethylbenzene was discharged from the top of the PL recovery column at a flow rate of 2.4 kg/h, while PL was discharged from the column bottom ataflowrateof3.5kg/h. Furthermore, the distillate (acetone, water, and ethylbenzene) discharged from the top of the PL recovery column was introduced into an acetone recovery column. Acetone was discharged from the top of the acetone recovery column at a flow rate of 0.7 kg/h, while a mixture of water and ethylbenzene was discharged from the column bottom at a flow rate of 1.6 kg/h. The PL obtained through the bottom of the PL recovery column and the acetone obtained through the top of the acetone recovery column were circulated as part of starting materials to be introduced into the synthesis reactor.

Furthermore, acetone and purified PL were additionally fed to the synthesis reactor in amounts corresponding to the amounts purged from the system and the amount of BPA obtained. Namely, acetone and purified PL were fed at 2.9 kg/h and 15 kg/h, respectively, to continuously conduct BPA synthesis reaction. Thus, the whole system was operated to continuously produce BPA. The BPA obtained here was introduced into the polymerization step for PC described above to produce PC.

The purified PL used above was one obtained by treating commercial PL for industrial use (water concentration, 0.1 wt%; impurity concentration, 0.05 wt%; hydroxyacetone concentration, 20 ppm) by contact with DIAION SK-104H, trade name of a resin manufactured by Mitsubishi Chemical Corp., at 80°C for a contact time of 50 minutes and then distilling the PL in a distillation column having a column bottom temperature of 175°C and a column top pressure of 560 mmHg to recover the PL through the column top. The hydroxyacetone content in this purified PL was 1 ppm or lower.

(EXPERIMENTAL EXAMPLE 2) Production of BPA

Next, an explanation is given on a process in which the dehydrated s-PL discharged as a distillate from the second PL distillation column shown in Fig. 5 is used as a starting material for BPA to produce BPA while the PC low-boiling distillate (D6) resulting from the dehydration of s-PL is being returned to a BPA/water separation step.

The low-boiling matters (unreacted acetone, water, and part of PL) obtained by separation from a reaction mixture in the BPA production step (Reference Example 2) (5.1 kg/h) were mixed with the low-boiling distillate obtained through the top of the first distillation column in the s-PL purification step described above. This mixture was introduced into a PL recovery column and, simultaneously therewith, ethylbenzene (azeotrope breaker) was supplied through the column top. As a result, a liquid mixture of acetone, water, and ethylbenzene was discharged from the top of the PL recovery column at a flow rate of 2.5 kg/h, while PL was discharged from the column bottom at a flow rate of 4.0 kg/h. Furthermore, the distillate (acetone, water, and ethylbenzene) discharged from the top of the PL recovery column was introduced into an acetone recovery column. Acetone was discharged from the top of the acetone recovery column at a flow rate of 0.7 kg/h, while a mixture of water and ethylbenzene was discharged from the column bottom at a flow rate of 1.7 kg/h. The PL obtained through the bottom of the PL recovery column and the acetone obtained through the top of the acetone recovery column were circulated as part of starting materials to be introduced into the synthesis reactor.

Furthermore, acetone and PL which was the purified s-PL obtained through the top of the second PL distillation column in the PL distillation step described above were additionally fed to the BPA reactor in amounts corresponding to the amounts purged from the system and the amount of BPA obtained. Namely, acetone and the PL were fed at 2.9 kg/h and 14.5 kg/h, respectively, to continuously conduct synthesis reaction. Thus, the whole system was operated to continuously produce BPA. Moreover, the BPA obtained here was introduced into the polymerization step described above to produce PC.

As a result, by recycling the low-boiling distillate obtained through the top of the first distillation column in the s-PL purification step to an existing step in the BPA production step, almost all of the PL contained in the low-boiling distillate couldbe efficiently recovered as a starting material for BPA. While conducting the operation described above, BPA and PC were produced in the manner described above. As a result, the BPA and PC obtained had no problem concerning quality at all.

(COMPARATIVE EXAMPLE 2) Production of BPA

BPA was produced in the same manner as in Experimental Example 2, except that s-PL (water content, 0.3% by weight) obtained by bypassing the first PL distillation column in the s-PL purification step was used in place of the purified s-PL. As a result, a decrease in BPA yield was observed. The reason for this is thought to be that the water contained caused a decrease in the activity of the ion-exchange resin as a reaction catalyst.

(COMPARATIVE EXAMPLE 3) Production of BPA

BPA was produced in the same manner as in Reference Example 2, except that commercial PL for industrial use was used in place of the purified PL in Reference Example 2. As a result, the yield of BPA gradually decreased. It was ascertained that the hydroxyacetone contained caused a decrease in catalytic activity.

[EXAMPLE 2]

The treatment of PC vaporized ingredients in the polymerization step for PC is explained below as s-PL Treatment 2 using Experimental Examples.

[DPC Production Example (1)]

An Example in which DPC is produced from commercial PL and CDC is shown below.

<Reaction Step>

While molten commercial PL and a pyridine catalyst were being continuously fed to a reactor, phosgene gas was continuously fed with mixing at 150°C. The hydrogen chloride gas generated as a by-product by the phosgenation was cooled to 10°C. The resultant condensate was returned to the reactor, and the uncondensed gas was neutralized with an aqueous alkali solution and then discharged. On the other hand, a liquid reaction mixture containing about 91% by weight DPC was continuously discharged from the reactor. The conversion of the phosgene in the reaction step was almost 100%.

<Washing Step>

The liquid reaction mixture and about 5% by weight aqueous sodium hydroxide solution were supplied to a neutralization/mixing vessel having a Teflon lining. The contents were mixed at 80°C for about 10 minutes and regulated so as to have a pH of 8.5. After the neutralization, the organic phase was separated through standing and then transferred to a water washing/mixing vessel. In the water washing/mixing vessel, the organic phase was washed with warm water used in an amount of about 30% by weight based on the organic phase. The aqueous phase was separated to obtain crude DPC (comprising 1% by weight water, 2% by weight pyridine, 8% by weight PL, and 89% by weight DPC).

<Low-Boiling-Matter Distillation Step>

Subsequently, the crude DPC was continuously supplied to the middle stage of a low-boiling-matter distillation column at about 30 kg/hr. As this low-boiling-matter distillation column was used a continuous distillation column having a theoretical plate number of 8 which had an inner diameter of 150 mm and a height of 4.0 m, was equipped with a reflux apparatus thereover, had a starting-material feed part at the center thereof, and had a concentration region and a recovery region each packed with Sulzer Packing (manufactured by Sumitomo Heavy Industries, Ltd.). Distillation was conducted under the conditions of a degree of vacuum of 20 Torr, heat-medium oil temperature of about 220°C, top temperature of 80-100°C, middle-stage temperature of 160°C, and reflux ratio of 1 to distill off substances having a lower boiling point than DPC, i.e., water, pyridine, and PL. From the column bottom, DPC (water, 10 ppm by weight or less; pyridine, 1 ppm by weight or less; PL, 50 ppm by weight) was continuously discharged at about 26 kg/hr.

<High-Boiling-Matter Distillation Step>

Furthermore, this DPC (bottoms from the low-boiling-matter distillation column) was continuously supplied to a high-boiling-matter distillation column. As this high-boiling-matter distillation column was used a continuous distillation column having a theoretical plate number of 8 which had an inner diameter of 200 mm and a height of 4.0 m, was equipped with a reflux apparatus thereover, had a starting-material feed part at the center thereof, and had a concentration region and a recovery region each packed with Sulzer Packing (manufactured by Sumitomo Heavy Industries, Ltd.). Distillation was conducted under the conditions of a degree of vacuum of 20 Torr, heat-medium oil temperature of about 240°C, top temperature of about 180°C, and reflux ratio of 0.5. As a result, purified DPC was obtained through the top at about 23.5 kg/h, and high-boiling matters (DPC containing about 350 ppm by weight alkyl-substituted derivatives of DPC and about 40 ppm by weight bromine-substituted derivatives of DPC) were purged from the column bottom at about 2.5 kg/hr. The purified DPC was a high-purity product containing PL in an amount of 80 ppm by weight.

[DPC Production Example (2)]

An Example in which DPC is produced from commercial PL and dimethyl carbonate is shown below.

<Reaction Step>

A starting-material liquid comprising commercial PL, dimethyl carbonate, and tetraphenoxytitanium as a catalyst was fed at a flow rate of 600 g/hr (dimethyl carbonate, 390 g/hr; PL, 200 g/hr; tetraphenoxytitanium, 0.5 g/hr) to the tenth plate, from the top, of a tray type distillation column (first reaction/distillation column) having an actual plate number of 50 and having an inner diameter of 50 mm and a height of 5 m. While heating the column bottom with a mantle heater, reaction/distillation was conducted. A dimethyl carbonate solution containing methanol was discharged from the column top while refluxing the solution at a reflux ratio of 12. The bottoms, which contained the methyl phenyl carbonate yielded and a small amount of DPC, were discharged from the column bottom and fed to the tenth plate, from the top, of a tray type distillation column (second reaction/distillation column) having an actual plate number of 50 and having an inner diameter of 80 mm and a height of 4 m. In the second reaction/distillation column, the reaction proceeded further and a liquid containing the DPC and methyl phenyl carbonate yielded was discharged from the column bottom. Most of the dimethyl carbonate remaining unreacted and part of the PL remaining unreacted were distilled off through the top of the second reaction/distillation column and recycled to the first reaction/distillation column.

<Recycling Step>

The methanol-containing dimethyl carbonate solution discharged as a distillate from the first reaction/distillation column was fed to the middle stage of a distillation column (azeotropic distillation column) having an actual plate number of 30 and having an inner diameter of 32 mm and a height of 2.5 m. Distillation was conducted at a reflux ratio of 5. A liquid mixture of methanol and dimethyl carbonate which had a composition close to the azeotropic composition was discharged from the column top and then fed to an extraction/distillation column. In the extraction/distillation column, the methanol was separated from the dimethyl carbonate. The methanol was purged from the system, while the dimethyl carbonate was recycled to the first reaction/distillation column. The bottoms from the azeotropic distillation column, which were dimethyl carbonate containing a slight amount of PL, were circulated to the first reaction/distillation column.

<Purification Step>

The high-boiling reaction mixture which was continuously discharged from the bottom of the second reaction/distillation column and contained the catalyst and DPC was introduced into an evaporator, from which a condensate containing the catalyst was purged. On the other hand, vaporized ingredients including a large amount of DPC formed in the evaporator were supplied to a diphenyl carbonate purification column. The purification column was regulated so as to have a column top pressure of 20 Torr and a column bottom temperature of 190°C. A low-boiling mixture containing phenol and methyl phenyl carbonate was discharged as a distillate from the column top. Part of this mixture was refluxed, and the remainder was recycled to the second reaction/distillation column. On the other hand, high-boiling impurities were purged from the bottom of the diphenyl carbonate purification column, and DPC was obtained through the middle stage of the column.

The operations described above were continuously conducted until each step came into a stationary state. When the steps were in a stationary state, the diphenyl carbonate was sampled and analyzed by high-performance liquid chromatography. As a result, 300 ppm by weight methyl phenyl carbonate was detected in the diphenyl carbonate obtained. The yield of DPC was about 95% based on the PL.

[BPA Production Example]

An Example is shown below in which BPA is produced from commercial PL and acetone.

A sulfonic-acid-form acid cation-exchange resin (trade name DIAION SK-104, manufactured by Mitsubishi Chemical Corp.) in which 15% of the sulfo groups had been neutralized with 4-pyridineethanethiol was packed in an amount of 60 L into a flow-through type synthesis reactor having a thermostat. A liquid mixture of PL and acetone in a molar ratio of 10:1 was introduced into this synthesis reactor at a temperature of 80°C and a flow rate of 68.2 kg/hr and reacted. The conversion of the acetone was 80%. After low-boiling matters (unreacted acetone, water, and part of PL) were purged at a flow rate of 5.1 kg/h, the reactionmixture was cooled to 50°C to precipitate crystals of an adduct. This mixture was filtered to separate it into the adduct crystals and the mother liquor. The flow rates of these were 16.5 kg/h and 46.5 kg/h, respectively. Ten percent by weight of this mother liquor was supplied to the mother liquor treatment step, while the remainder of the mother liquor was circulated as part of a starting material to be introduced into the synthesis reactor.

The adduct crystals thus obtained were redissolved in PL supplied at a flow rate of 27.2 kg/h. The resultant solution was cooled to 50°C to precipitate crystals and then filtered to separate the adduct crystals (11.3 kg/h) from the mother liquor (32.5 kg/h) . The crystals separated were heated to 180°C under a reduced pressure of 0.3 mmHg to remove the PL. Thus, BPA having a purity of 99.95% or higher was obtained at a flow rate of 7.7 kg/h.

On the other hand, the mother liquor supplied to the mother liquor treatment step was concentrated by distilling off part of the PL. Subsequently, 0.1% by weight sodium hydroxide was added to the mother liquor, which was then introduced into the bottom of a decomposition/distillation column regulated so as to have a reduced pressure of 50 mmHg and a temperature of 210°C. This column was operated under such conditions as to maintain a constant liquid level in the bottom part (residence time, 1 hr), and the bottoms in the decomposition/distillation column were purged from the system at a flow rate of 0.5 kg/h. Furthermore, the distillate discharged from the top of the decomposition/distillation column was mixed with the PL, and this mixture was introduced at a flow rate of 4.2 kg/h into a flow-through type reactor packed with 4 L of a sulfonic-acid-form acid cation-exchange resin (trade name DIAION SK-104, manufactured by Mitsubishi Chemical Corp.). The mixture was reacted under the conditions of 80°C. The liquid reaction mixture obtained was circulated to the synthesis reactor used in the initial stage.

Commercial PL (18.5 kg/h) and acetone (3.6 kg/h) were additionally fed to the synthesis reactor in amounts corresponding to the amounts purged from the system and the amount of bisphenol A obtained. Thus, synthesis reaction was continuously conducted and the whole system was operated to continuously produce BPA.

[PC Production Example (1)]

An Example is shown below in which a PC is produced through the steps shown in Fig. 6 from the DPC obtained in DPC Production Example (1) given above and the BPA obtained in the BPA Production Example given above.

<Polymerization Step for PC>

In a nitrogen gas atmosphere, the DPC and BPA were melt-mixed in a ratio of 0.977 by weight by means of a mixing vessel 21. This mixture was continuously fed in a nitrogen atmosphere to a first vertical stirring polymerization vessel 22 regulated so as to have a temperature of 210°C and a pressure of 100 Torr. The liquid level was kept constant so as to result in an average residence time of 60 minutes by regulating the degree of opening of the valve disposed in a polymer discharge line connected to a bottom part of the vessel. Furthermore, simultaneously with initiation of the feeding of the starting-material mixture, cesium carbonate in an aqueous solution form began to be continuously supplied as a catalyst at a flow rate of $0.5 \times 10^{-6}$ mol per mol of the BPA. The liquid polymerization reaction mixture discharged from the vessel bottom was subsequently continuously supplied successively to second and third vertical polymerization vessels 23 and 24 and a fourth horizontal polymerizer 25. During the reaction, the liquid level in each vessel was regulated so as to result in an average residence time of 60 minutes and, simultaneously therewith, the PL generated as a by-product was distilled off. The gases formed by vaporization and discharged respectively from the first and second polymerization vessels 22 and 23 were condensed and liquefied with reflux apparatus 33a and 33b, respectively, and with multi-stage condensers 26 and 27, respectively. Part of each resultant condensate was refluxed to the polymerization vessel and the remainder was recovered and stored in a first recovered-PL tank 29a for PC. On the other hand, the gas formed by vaporization and discharged from the third polymerization vessel 24 was solidified with one of two freeze condensers arranged in parallel. The resultant solid was melted by switching to the other freeze condenser, and recovered and stored in a second recovered-PL tank 29b for PC. In this operation, the PC vaporized ingredients discharged as distillates from the first and second polymerization vessels 22 and 23 were wholly stored in the first recovered-PL tank 29a for PC, while the PC vaporized ingredients discharged as a distillate from the third polymerization vessel 24 were stored in the second recovered-PL tank 29b for PC.

Polymerization conditions for each polymerization vessel were as follows: first polymerization vessel 22 (210°C, 100 Torr), second polymerization vessel 23 (240°C, 15 Torr), third polymerization vessel 24 (260°C, 0.5 Torr), and fourth polymerizer 25 (280°C, 0.5 Torr).

The resultant polymer in a molten state was introduced into a twin-screw extruder (manufactured by Kobe Steel, Ltd.; screw diameter, 0.046 m; L/D = 40.2) and pelletized while continuously adding butyl p-toluenesulfonate thereto in an amount of 5 weight ppm of the polycarbonate. The PC thus obtained had an Mv of 21,000 and an initial YI of 1.7. The methods used for measuring the molecular weight (Mv) and initial hue (YI) are as described above.

<PC Vaporized Ingredients>

Each PC vaporized ingredient recovered from the polymerization step was examined for amount and composition. The results obtained are as follows.

• First Recovered-PL Tank 29a for PC

The amount of the phenol in the first PC vaporized ingredients p1 recovered was about 60% based on the whole PL distilled off in the polymerization step for PC. Besides PL, 1.1% by weight DPC was detected. BPA and oligomer ingredients were not detected.

• Second Recovered-PL Tank 29b for PC

The amount of the phenol in the second PC vaporized ingredients p2 recovered was about 40% based on the whole PL distilled off in the polymerization step. Besides PL, 6.0% by weight DPC was detected. Furthermore, BPA and oligomer ingredients were detected in amounts of 1.2% by weight and 0.3% by weight, respectively.

[PC Production Example (2)]

An Example is shown below in which a PC is produced from the DPC obtained in DPC Production Example (2) given above and the BPA obtained in the BPA Production Example given above.

<Polymerization Step for PC>

The same procedure as in PC Production Example (1) given above was conducted, except that the DPC obtained in DPC Production Example (2) given above was used as DPC. The PC obtained had an Mv of 21,000 and an initial YI of 1.7. It had the same quality as that of the PC obtained in the Aromatic Polycarbonate Production Example (1) given above.

<PC Vaporized Ingredients>

Each PC vaporized ingredient recovered from the polymerization step was examined for amount and composition. The results obtained are as follows.

• First Recovered-PL Tank 29a for PC

The amount of the phenol in the first PC vaporized ingredients p1 recovered was about 60% based on the whole PL distilled off in the polymerization step for PC. Besides PL, 1.1% by weight DPC and 95 ppm by weight methanol were detected. BPA and oligomer ingredients were not detected.

• Second Recovered-PL Tank 29b for PC

The amount of the phenol in the second PC vaporized ingredients p2 recovered was about 40% based on the whole PL distilled off in the polymerization step. Besides PL, 6.0% by weight DPC was detected. Furthermore, BPA and oligomer ingredients were detected in amounts of 1.2% by weight and 0.3% by weight, respectively. Methanol was not detected (5 ppm by weight or less).

(EXPERIMENTAL EXAMPLE 1)

The PC vaporized ingredients containing by-product phenol and obtained in PC Production Example (1) given above were used to produce DPC and BPA.

<Production of DPC>

DPC was produced by conducting the same procedure as in DPC Production Example (1) given above, except that 60% of the commercial PL used in the DPC Production Example (1) was replaced by the first PC vaporized ingredients p1 recovered in PC Production Example (1) given above. As a result, the phosgene conversion in the reaction step and the quality of the DPC obtained were the same as in DPC Production Example (1) and were satisfactory.

<Production of BPA>

BPA was produced by conducting the same procedure as in the BPA Production Example given above, except that 40% of the commercial PL continuously fed additionally to the synthesis reactor in the BPA Production Example was replaced by the second PC vaporized ingredients p2 recovered in PC Production Example (1) given above. As a result, the conversion of the acetone and the quality of the bisphenol A were satisfactory.

(EXPERIMENTAL EXAMPLE 2)

The PC vaporized ingredients containing by-product phenol and obtained in PC Production Example (2) given above were used to produce DPC and BPA.

<Production of DPC>

DPC was produced by conducting the same procedure as in DPC Production Example (2) given above, except that 60% of the commercial PL used in the DPC Production Example (2) was replaced by the first PC vaporized ingredients p1 recovered in PC Production Example (2) given above. As a result, DPC having the same quality could be obtained. It was ascertained that even when the methanol derived from methyl phenyl carbonate comes into the system, this poses no problem.

<Production of BPA>

BPA was produced by conducting the same procedure as in the BPA Production Example given above, except that 40% of the commercial PL continuously fed additionally to the synthesis reactor in the BPA Production Example was replaced by the second PC vaporized ingredients p2 recovered in PC Production Example (2) given above. As a result, the conversion of the acetone and the quality of the BPA were satisfactory. Furthermore, the methanol concentration in the starting materials used for the reaction was not detected.

(COMPARATIVE EXPERIMENTAL EXAMPLE 1)

The second PC vaporized ingredients p2 recovered in PC Production Example (1) given above were used to produce DPC.

<Production of DPC>

DPC was produced by conducting the same procedure as in DPC Production Example (1) given above, except that the commercial PL used in the DPC Production Example (1) was wholly replaced by the second PC vaporized ingredients p2 recovered in PC Production Example (1) given above. As a result, the piping for transferring the liquid reaction mixture to the washing step suffered clogging, making it impossible to continue the operation.

(COMPARATIVE EXPERIMENTAL EXAMPLE 2)

The first PC vaporized ingredients p1 recovered in PC Production Example (2) given above were used to produce BPA.

<Production of BPA>

BPA was continuously produced in the same manner as in the BPA Production Example given above, except that the commercial PL continuously fed additionally to the synthesis reactor in the BPA Production Example was wholly replaced by the first PC vaporized ingredients p1 (containing 95 ppm by weight methanol) recovered in PC Production Example (2) given above. As a result, the conversion of the acetone decreased considerably, i.e., to 55.0%. It is thought that the methanol contained caused a decrease in catalyst performance. The methanol concentration in the starting-material phenol during the synthesis reaction was about 30 ppm by weight because of dilution with the circulating mother liquor.

[EXAMPLE 3]

Classification by impurities of methods of using PC vaporized ingredients p and commercial PL is explained below as s-PL Treatment 3 using Experimental Examples.

(EXPERIMENTAL EXAMPLE 1)

(Production of DPC)

[Reaction Step]

While molten commercial PL (manufactured by Mitsubishi Chemical Corp.; cresol content, 45 ppm by weight; hydroxyacetone content, 27 ppm by weight; hereinafter referred to as "PL1") and a pyridine catalyst were being continuously fed to a reactor, phosgene gas was continuously fed with mixing at 150°C; The hydrogen chloride gas generated as a by-product by the phosgenation was cooled to 10°C. The resultant condensate was returned to the reactor, and the uncondensed gas was neutralized with an aqueous alkali solution and then discharged. On the other hand, a liquid reaction mixture containing about 91% by weight DPC was continuously discharged from the reactor.

[Washing Step]

The liquid reaction mixture and about 5% by weight aqueous sodium hydroxide solution were supplied to a neutralization/mixing vessel having a Teflon lining. The contents were mixed at 80°C for about 10 minutes and regulated so as to have a pH of 8.5. After the neutralization, the organic phase was separated through standing and then transferred to a water washing/mixing vessel. In the water washing/mixing vessel, the organic phase was washed with warm water used in an amount of about 30% by weight based on the organic phase. The aqueous phase was separated to obtain crude DPC (comprising 1% by weight water, 2% by weight pyridine, 8% by weight PL, and 89% by weight DPC).

[Low-Boiling-Matter Distillation Step]

Subsequently, the crude DPC was continuously supplied to the middle stage of a low-boiling-matter distillation column at about 30 kg/hr. As this low-boiling-matter distillation column was used a continuous distillation column having a theoretical plate number of 8 which had an inner diameter of 150 mm and a height of 4.0 m, was equipped with a reflux apparatus thereover, had a starting-material feed part at the center thereof, and had a concentration region and a recovery region each packed with Sulzer Packing (manufactured by Sumitomo Heavy Industries, Ltd.). Distillation was conducted under the conditions of a degree of vacuum of 20 Torr, heat-medium oil temperature of about 220°C, top temperature of 80-100°C, middle-stage temperature of 160°C, and reflux ratio of 1 to distill off substances having a lower boiling point than DPC, i.e., water, pyridine, and PL. From the column bottom, DPC (water, 10 ppm by weight or less; pyridine, 1 ppm by weight or less; PL, 50 ppm by weight) was continuously discharged at about 26 kg/hr.

[High-Boiling-Matter Distillation Step]

Furthermore, this DPC (bottoms from the low-boiling-matter distillation column) was continuously supplied to a high-boiling-matter distillation column. As this high-boiling-matter distillation column was used a continuous distillation column having a theoretical plate number of 8 which had an inner diameter of 200 mm and a height of 4.0 m, was equipped with a reflux apparatus thereover, had a starting-material feed part at the center thereof, and had a concentration region and a recovery region each packed with Sulzer Packing (manufactured by Sumitomo Heavy Industries, Ltd.). Distillation was conducted under the conditions of a degree of vacuum of 20 Torr, heat-medium oil temperature of about 240°C, top temperature of about 180°C, and reflux ratio of 0.5. As a result, purified DPC (containing 80 ppm by weight PL) was obtained through the top at about 23.5 kg/h.

(REFERENCE EXAMPLE 1)

DPC was produced in the same manner as in Experimental Example 1, except that by-product phenol (cresol content, 5 ppm by weight; hydroxyacetone content, 1 ppm by weight or lower; hereinafter referred to as "PL2") obtained by distilling/purifying, under the following conditions, PC vaporized ingredients p obtained in a PC production plant of Mitsubishi Chemical Corp. was used in place of the commercial PL (PL1).

[Distillation/Purification Conditions]

In a first distillation column, the water contained was distilled off together with part of the PL at 200 Torr and a reflux ratio of 2. The resultant bottoms were continuously supplied to a second distillation column. In the second distillation column, purified by-product phenol was obtained through the top at 50 Torr and a reflux ratio of 0.5. A liquid PL mixture containing high-boiling ingredients, i.e., DPC, BPA, and oligomers, was continuously purged as bottoms.

[Results]

Even when commercial PL was used for DPC production without being purified, high-purity DPC having a high purity and free from discoloration etc. was obtained as in the case of using the by-product phenol which had undergone distillation/purification.

(EXPERIMENTAL EXAMPLE 2 AND COMPARATIVE EXAMPLE 1) Production of BPA

A sulfonic acid form cation-exchange resin (sulfonated styrene/divinylbenzene crosslinked copolymer (DIAION SK104H, manufactured by Mitsubishi Chemical Corp.)) in which 15% by weight of the sulfo groups had been modified with 4-(2-mercaptoethyl)pyridine was packed into a reactor. A starting-material fluid consisting of either of the PL's (PL2 or PL1) and acetone (manufactured by Mitsubishi Chemical Corp.) (PL: acetone = 13: 1 (by mole)) was continuously passed through the reactor at an LHSV of 5 hr$^{-1}$ based on the phenol-wetted catalyst to conduct a BPA-yielding reaction over 1,008 hours at a reaction temperature of 70°C. In Table 1 are shown the acetone conversion as determined at 120 hours after initiation of the reaction, the acetone conversion as determined at 1, 008 hours after the initiation, and the selectively to BPA. Furthermore, the ratio of the acetone conversion as determined at 1, 008 hours after initiation of the reaction to the acetone conversion as determined at 120 hours after the initiation was calculated as activity retention. The results of this calculation are also shown in Table 1.

Table 1

| | Phenol | Conversion (%) | | Activity retention (%) |
|---|---|---|---|---|
| | | After 120 hours | After 1,008 hours | |
| Experimental Example 2 | PL2 | 73.8 | 70.8 | 94.7 |

(continued)

| | Phenol | Conversion (%) | | Activity retention (%) |
|---|---|---|---|---|
| | | After 120 hours | After 1,008 hours | |
| Comparative Example 1 | PL1 | 78.5 | 58.6 | 74.6 |

Incidentally, the conversion (%) and catalytic-activity retention (%) were calculated using the following equations.

$$\text{Conversion (\%)} = \{[(\text{amount of acetone fed}) - (\text{amount of unreacted acetone})]/(\text{amount of acetone fed})\} \times 100$$

$$\text{Activity retention (\%)} = [(\text{acetone conversion after 1,008 hours})/(\text{acetone conversion after 120 hours})] \times 100$$

[Results]

When the PL obtained by distilling/purifying a PL distillate from a polymerization step was used, high conversions and a high catalytic-activity retention were attained as different from the case in which the commercial PL was used.

Furthermore, use of the PL obtained by distilling/purifying a PL distillate from a polymerization step yieldedBPAhaving a white tone, whereas use of the commercial PL yielded BPA which had slightly yellowed. It is expected that use of these BPAproducts in PC production gives the following results. In the case where the PL obtained by distilling/purifying a PL distillate from a polymerization step is used to produce BPA, a white PC having a high purity is thought to be obtained. In contrast, when the commercial PL is used to produce BPA, the PC obtained is thought to have slightly yellowed and have a reduced purity.

[EXAMPLE 4]

Next, the invention will be explained below in more detail with respect to connection between production steps according to the flow diagram shown in Fig. 7. Unlike that in Fig. 7, a BPA storage step was disposed between the heating/melting step (step (d)) and the PL removal step (step (e)).

(EXPERIMENTAL EXAMPLE 1)

[Production of BPA]

A sulfonic-acid-form acid cation-exchange resin (trade name DIAION SK-104, manufactured by Mitsubishi Chemical Corp.) in which 15% of the sulfo groups had been neutralized with 4-pyridineethanethiol was packed in an amount of 60 L into a flow-through type BPA reactor having a thermostat. A liquid mixture of PL and acetone (A) in a molar ratio of 10:1 was introduced into this synthesis reactor at a temperature of 80°C and a flow rate of 68.2 kg/hr and reacted. The conversion of the acetone (A) was 80%. After low-boilingmatters (unreacted acetone, water, and part of PL) were purged at a flow rate of 5.1 kg/h, thereactionmixturewas cooledto 50°C to precipitate crystals of an adduct. This mixture was filtered to separate it into the adduct crystals and the mother liquor. The flow rates of these were 16.5 kg/h and 46.5 kg/h, respectively. Ten percent by weight of this mother liquor was supplied to the mother liquor treatment step, while the remainder of the mother liquor was circulated as part of a starting material to be introduced into the synthesis reactor.

The adduct crystals thus obtained were redissolved in phenol supplied at a flow rate of 27.2 kg/h. The resultant solution was cooled to 50°C to precipitate crystals and then filtered to separate the adduct crystals (11.3 kg/h) from the mother liquor (32.5 kg/h) . The crystals separated were mixed with purified PL supplied at 1.5 kg/hr to prepare a mixture of 60% by weight BPA and 40% by weight PL. This mixture was introduced at 12.8 kg/hr into a BPA storage tank and stocked therein (under the following conditions), and was continuously supplied to the subsequent PL removal step at 12.0 kg/hr.

The BPA storage tank used was one made of SUS304 having a capacity of 150 L (in which the value of Vb/Fb, as specified in the description, was 22). The inside of the system was sealed with nitrogen, and the internal temperature of the BPA/PL mixture was regulated to 120°C. In addition, in the BPA/PL mixture, PL-sulfonic acid which was thought to have come from the ion-exchange resin was detected in an amount of about 10 ppm by weight. Because of this, an aqueous caustic soda solution was added, in an amount necessary for completely neutralizing the acid substance, to the mixture to neutralize it, before the mixture was transferred to the storage tank. With initiation of the operation, the liquid level in the storage tank began to rise slightly and gradually.

Subsequently, the BPA/PL mixture in the BPA storage tank was continuously transferred to the PL removal step at 12.0 kg/hr. The mixture was heated to 180°C at a reducedpressure of 0.3 mmHg to remove the PL. Thus, BPA having a purity of 99.95% or higher was obtained at a flow rate of 7.2 kg/hr (6.8 L/hr). The BPA obtained was continuously supplied as it was to the aromatic polycarbonate production step which will be described later.

On the other hand, the mother liquor supplied to the mother liquor treatment step (not shown in Fig. 7; see Fig. 4) was treated with a PL evaporator 13 to distill off part of the PL and concentrate the mother liquor. Subsequently, 0.1% by weight sodium hydroxide was added to the mother liquor, which was then introduced into the bottom of a residue reactor 14 regulated so as to have a reduced pressure of 50 mmHg and a temperature of 210°C. This reactor was operated under such conditions as to maintain a constant liquid level in the bottom part (residence time: 1 hr), and the bottoms in the residue reactor 14 were purged from the system at a flow rate of 0.5 kg/h. Furthermore, the distillate discharged from the top of the residue reactor 14 was mixed with the PL, and this mixture was introduced at a flow rate of 4.2 kg/h into a flow-through type regenerating reactor 15 packed with 4 L of a sulfonic-acid-form acid cation-exchange resin (trade name DIAION SK-104, manufactured by Mitsubishi Chemical Corp.). The mixture was reacted under the conditions of 80°C. The liquid reaction mixture obtained was circulated to the BPA reactor used in the initial stage.

Commercial PL (18.5 kg/h) and acetone (3.6 kg/h) were additionally fed to the BPA reactor in amounts corresponding to the amounts purged from the system and the amount of BPA obtained. Thus, synthesis reaction was continuously conducted and the whole system was operated to continuously produce BPA.

[Production of PC]

An Example is shown below in which a PC is produced according to the flow diagram shown in Fig. 5.

In a nitrogen gas atmosphere, the BPA and DPC supplied continuously were melt-mixed in a ratio of 1.024 by weight by means of a mixing vessel 21. This mixture was continuously fed in a nitrogen atmosphere to a first vertical stirring polymerization vessel 22 regulated so as to have a temperature of 210°C and a pressure of 100 Torr. The liquid level was kept constant so as to result in an average residence time of 60 minutes by regulating the degree of opening of the valve disposed in a polymer discharge line connected to a bottom part of the vessel. Furthermore, simultaneously with initiation of the feeding of the starting-material mixture, cesium carbonate in an aqueous solution form began to be continuously supplied as a catalyst at a flow rate of $0.5 \times 10^{-6}$ mol per mol of the BPA. The liquid polymerization reaction mixture discharged from the vessel bottom was subsequently continuously supplied successively to second and third vertical polymerization vessels 23 and 24 and a fourth horizontal polymerization vessel 25. During the reaction, the liquid level in each vessel was regulated so as to result in an average residence time of 60 minutes and, simultaneously therewith, the PL generated as a by-product was distilled off. The PC vaporized ingredients p discharged from the first and second polymerization vessels were condensed and liquefied with respective multi-stage condensers. Part of each resultant condensate was refluxed to the polymerization vessel and the remainder was recovered and stored in a PL tank 29 for PC. On the other hand, the gases formed by vaporization and discharged from the third and fourth polymerization vessels 24 and 25 each were solidified with one of two freeze condensers arranged in parallel. The resultant solid was melted by switching to the other freeze condenser, and recovered and stored in the PL tank 29 for PC (not shown).

Polymerization conditions for each polymerization vessel were as follows: first polymerization vessel (210°C, 100 Torr), second polymerization vessel (240°C, 15 Torr), third polymerization vessel (260°C, 0.5 Torr), and fourth polymerization vessel (280°C, 0.5 Torr).

The resultant polymer in a molten state was pelletized while continuously adding butyl p-toluenesulfonate in an amount of 5 weight ppm of the PC. The polycarbonate thus obtained had an Mv of 21,000 and an initial YI of 1.8.

<Measurement of Molecular Weight (Mv)>

A methylene chloride solution having a PC concentration (C) of 0.6 g/dL was used to measure the specific viscosity ($\eta$sp) thereof at a temperature of 20°C with a Ubbellohde viscometer, and the molecular weight (Mv) was calculated from the viscosity value using the following two equations.

$$\eta sp/C \doteq [\eta](1 + 0.28\eta sp)$$

$$[\eta] = 1.23 \times 10^{-4} (Mv)^{0.83}$$

<Measurement of Initial Hue (YI)>

The PC was dried at 120°C for 6 hours in a nitrogen atmosphere, and an injection-molded piece having a thickness of 3 mm was then produced therefrom at 360°C using injection molding machine J-100, manufactured by The Japan Steel Works, Ltd. This piece was examined with SC-1, manufactured by Suga Test Instruments Co., Ltd., for the value of YI (the larger the value of YI, the more the PC has colored).

The operation described above was continued for one week. Thereafter, the synthesis reaction/crystallization step was temporarily stopped for about 8 hr for the purpose of cleaning the BPA crystallizer. Throughout this period, however, the liquid mixture stocked in the storage tank was used to continuously operate the succeeding steps, whereby BPA and an aromatic polycarbonate could be produced. The quality of these products obtained in the one-week continuous operation and that of the products obtained in the subsequent operation of the succeeding steps were the same as the initial quality and satisfactory.

(EXPERIMENTAL EXAMPLE 2)

BPA and an aromatic polycarbonate were continuously produced by conducting the same procedure as in Experimental Example 1, except that the capacity of the BPA storage tank in BPAproduction was changed to 2 m$^3$ (Vb/Fb = 294) . The aromatic polycarbonate obtained had an Mv of 21,000 and an initial YI of 1.8.

This operation was continued for 2 months. Throughout this period, the aromatic polycarbonate showed a hue (initial YI) of 1.8-1.9 and the product obtained was satisfactory. Thereafter, the BPA synthesis reaction/crystallization step was temporarily stopped for about 3 days. However, the succeeding steps could be continuously operated using the liquid mixture stocked in the storage tank and the quality of the product thus obtained was satisfactory. Thereafter, former steps in BPA production (the steps preceding the BPA storage tank) were intermittently operated while making a 3-day stop at intervals of 2 months, and the steps ranging from the latter steps in BPA production to aromatic polycarbonate production were continuously operated, in the manner described above. Thus, an aromatic polycarbonate of satisfactory quality could be continuously obtained over about a half year.

(COMPARATIVE EXPERIMENTAL EXAMPLE 1)

BPA and an aromatic polycarbonate were continuously produced by conducting the same procedure as in Experimental Example 1, except that the capacity of the BPA storage tank in BPA production was changed to 50 L (Vb/Fb = 7) . The aromatic polycarbonate obtained had an Mv of 21,000 and an initial YI of 1.8.

However, after 2 days had passed since initiation of the operation, the BPA storage tank became full and this reduced the rate of production in former steps in 8PA production (the steps preceding the storage tank). The operation was hence regulated so as to maintain a constant liquid level in the storage tank. Thereafter, the former steps onlywere stopped. As a result, the liquid level in the storage tank rapidly declined and the tank became empty in about 4 hours, making it necessary to stop the succeeding steps and all PC steps.

(COMPARATIVE EXPERIMENTAL EXAMPLE 2)

BPA was continuously produced in Comparative Experimental Example 1 in which the rate of production in former steps in BPA production (the steps preceding the storage tank) was regulated so as to maintain a constant liquid level in thestoragetank. The BPAobtainedwas cooled and then granulated, and these granules were temporarily stored in a BPA powder hopper (capacity, 1 m$^3$) newly disposed. Thereafter, while the granules were being supplied to and dissolved in a DPC solution with a powder weigh-feeder, a PC was continuously produced in the manner described above. As long as BPA was present in the powder hopper, temporary stops of BPA steps posed no problem concerning the rate of PC production. However, this method was disadvantageous from the standpoint of thermal efficiency because it was necessary to temporarily cool the molten BPA for converting it into a powder and then to conduct heating for dissolution. In addition, dusting occurred when the PBA was supplied, and this aroused a trouble that a gas line clogged.

(COMPARATIVE EXPERIMENTAL EXAMPLE 3)

BPAwas continuously produced at 7.7 kg/hr in Comparative Experimental Example 1 in which the rate of production in steps succeeding the storage tank was slightly heightened so as to maintain a constant liquid level in the storage tank. The BPA obtained was stored alone in a newly disposed tank having a capacity of 2 m$^3$, where the internal temperature was regulated to 160°C. Thereafter, the BPA was fed at 7.2 kg/hr as a starting material for PC production as in Comparative Experimental Example 1. The PC obtained had an initial YI of 1.8. However, as the operation continued, the hue began to deteriorate clearly. The holding of the molten BPA alone resulted in considerable deterioration in quality.

(Experimental Example 3)

An Experimental Example is given below in which the BPA production step, DPC production step, and PC production step are connected to each other and BPA, DPC, and PC storage steps are included in these production steps.

[Production of BPA]

BPA production was conducted in the same manner as in Experimental Example 1.

[Production of DPC]

<Reaction Step>

Molten phenol having a temperature of 50°C was continuously fed at 6.4 kg/hr to a first reactor together with, as a catalyst, pyridine-containing phenol obtained by dehydrating low-boiling substances discharged as a distillate from the low-boiling-matter distillation column described later. While being thus fed, the molten phenol was heated to 150°C. Phosgene gas was continuously fed to the first reactor at 0.75 Nm$^3$/hr with sufficient stirring. The reaction mixture which had flowed out from the first reactor and had a gas/liquid mixture phase was supplied to a second reactor through an overflow pipe. The contents of the second reactor also were regulated so as to have a temperature of 150°C with sufficient stirring. The liquid reaction mixture was supplied to a degassing column. In the degassing column, countercurrent contacting was conducted at 160°C using nitrogen gas in order to completely react the phenyl chloroformate formed as an intermediate with phenol. A liquid reaction mixture having a diphenyl carbonate concentration of about 89% by weight was continuously discharged from the bottom of the degassing column. Almost 100% of the phosgene fed was converted to diphenyl carbonate. On the other hand, the discharge gases resulting from the diphenyl carbonate synthesis (a reaction discharge gas from the second reactor and a nitrogen-containing discharge gas from the degassing column) were mixed together and then cooled to 10°C. The resultant condensate was returned to the second reactor, while the hydrogen chloride obtained as an uncondensed gas was neutralized with an aqueous alkali solution and discharged.

<Washing Step>

The liquid reaction mixture obtained, the diphenyl carbonate recovered from the recovery/distillation column described later, and about 5% by weight aqueous sodium hydroxide solution (liquid obtained by mixing 25% by weight aqueous sodium hydroxide solution with the aqueous phase separated after the subsequent water washing step) were supplied to a neutralization/mixing vessel having a Teflon lining. The contents were mixed at 80°C for about 10 minutes and regulated so as to have a pH of 8.5. After the neutralization, the organic phase was separated after standing and then transferred to a water washing/mixing vessel. On the other hand, the aqueous phase remaining after the separation (which contained phenol and common salt) was brought into contact with steam, whereby the phenol contained was almost wholly recovered as phenol-containing water. This water was supplied to the water washing/mixing vessel in the next step. In the water washing/mixing vessel, the organic phase was washed with warm water used in an amount of about 30% by weight based on the organic phase. The aqueous phase (which was recycled to the neutralization/mixing vessel) was separated to obtain crude diphenyl carbonate (containing water, catalyst pyridine, and phenol) .

<Low-Boiling-Matter Distillation Step>

Subsequently, the crude diphenyl carbonate and 0.1-N aqueous sodium hydroxide solution were continuously supplied to the middle stage of a low-boiling-matter distillation column at rates of about 9 kg/hr and 15 mL/hr, respectively. As this low-boiling-matter distillation column was used a continuous distillation column having a theoretical plate number of 8 which had an inner diameter of 100 mm and a height of 4.0 m, was equipped with a reflux apparatus thereover, had a starting-material feed part at the center thereof, and had a concentration region and a recovery region each packed with Sulzer Packing (manufactured by Sumitomo Heavy Industries, Ltd.). Distillation was conducted under the conditions of a degree of vacuum of 20 Torr, heat-medium oil temperature of about 220°C, top temperature of 80-100°C, and reflux ratio of 1 to distill off substances having a lower boiling point than diphenyl carbonate, i.e., water, catalyst pyridine, and unreacted phenol. After the low-boiling substances were dehydrated, part of these substances were purged and the remainder was supplied to the first reactor for phosgenation. On the other hand, diphenyl carbonate was discharged from the column bottom at about 7.8 kg/hr. Water therein was not detectable (10 ppm or lower), and the contents of pyridine and phenol were not detectable (1 ppm or lower) and 50 ppm, respectively.

<High-Boiling-Matter Distillation Step>

Furthermore, this diphenyl carbonate (bottoms from the low-boiling-matter distillation column) was continuously supplied to a high-boiling-matter distillation column. As this high-boiling-matter distillation column was used a continuous distillation column having a theoretical plate number of 8 which had an inner diameter of 100 mm and a height of 4.0 m, was equipped with a reflux apparatus thereover, had a starting-material feed part at the center thereof, and had a concentration region and a recovery region each packed with Sulzer Packing (manufactured by Sumitomo Heavy Industries, Ltd.). Distillation was conducted under the conditions of a degree of vacuum of 20 Torr, heat-medium oil temperature of about 240°C, top temperature of about 180°C, reflux ratio of 0.5, and distillate proportion of about 90%. As a result, purified diphenyl carbonate was obtained through the top at about 7.1 kg/hr (7 L/hr), and a high-boiling matter was purged from the column bottom at about 0.8 kg/hr. The purified diphenyl carbonate was a high-purity product containing phenol in an amount of 80 ppm. A certain amount (about 100 L) of this diphenyl carbonate was stored at 100°C in a tank made of SUS316 having a capacity of 200 L (in which the value of Vd/Fd, as specified in the description, was 29) and then fed as a starting material for PC production at 7 L/hr.

<Recovery/Distillation Step>

Moreover, the bottoms purged from the bottom of the high-boiling-matter distillation column were simultaneously supplied to a recovery/distillation column to conduct continuous distillation under the following conditions. Diphenyl carbonate was recovered through the top at about 0.7 kg/hr and was recycled to the neutralization/mixing vessel, while the bottoms were continuously purged at about 0.04 kg/hr. With respect to conditions for the diphenyl carbonate recovery/distillation, a continuous distillation column having a theoretical plate number of 8 was used which had an inner diameter of 50 mm and a height of 3.0 m, was equipped with a reflux apparatus thereover, had a starting-material feed part at the center thereof, and had a concentration region and a recovery region each packed with Sulzer Packing (manufactured by Sumitomo Heavy Industries, Ltd.). Distillation was conducted under the conditions of a degree of vacuum of 20 Torr, heat-medium oil temperature of about 240°C, top temperature of 180°C, and reflux ratio of 0.5. In the bottoms from the recovery/distillation column, alkyl-substituted diphenyl carbonate derivatives and bromine-substituted diphenyl carbonate derivatives were detected in amounts of about 7,000 ppm by weight and about 800 ppm by weight, respectively.

[Production of PC]

<Polymerization Step>

In a nitrogen gas atmosphere, the bisphenol A obtained above and supplied at 7.2 kg/hr was melt-mixed at 130°C with diphenyl carbonate supplied at 7.1 kg/hr. This mixture was continuously fed, through a starting-material introduction tube heated at 130°C, to a first vertical stirring polymerization vessel regulated so as to have a temperature of 210°C in an ordinary-pressure nitrogen atmosphere. The liquid level was kept constant by regulating the degree of opening of the valve disposed in a polymer discharge line connected to a bottom part of the vessel, so as to result in an average residence time of 60 minutes. Furthermore, simultaneously with initiation of the feeding of the starting-material mixture, cesium carbonate in an aqueous solution form began to be continuously supplied as a catalyst at a flow rate of $0.5 \times 10^{-6}$ mol per mol of the bisphenol A. The liquid polymerization reaction mixture discharged from the vessel bottom was subsequently continuously supplied successively to second, third, and fourth vertical polymerization vessels and a fifth horizontal polymerization vessel. During the reaction, the liquid level in each vessel was regulated so as to result in an average residence time of 60 minutes and, simultaneously therewith, the phenol generated as a by-product was distilled off. The gases formed by vaporization and discharged respectively from the first to third polymerization vessels each were condensed and liquefied with a multi-stage condenser, and part of the condensate was refluxed to the polymerization vessel and the remainder was recovered and stored in a by-product phenol tank. On the other hand, the gases formed by vaporization and discharged from the fourth and fifth polymerization vessels each were solidified with one of two freeze condensers arranged in parallel. The resultant solid was melted by switching to the other freeze condenser, and recovered and stored in the by-product phenol tank.

Polymerization conditions for each reaction vessel were as follows: second polymerization vessel (210°C, 100 Torr), third polymerization vessel (240°C, 15 Torr), fourth polymerization vessel (260°C, 0.5 Torr), and fifth polymerization vessel (270°C, 0.5 Torr). The system was operated at a polycarbonate production rate of 8.0 kg/hr.

Subsequently, the resultant polymer in a molten state was introduced into a twin-screw extruder (manufactured by Kobe Steel, Ltd.), andbutylp-toluenesulfonatewas continuously added thereto in an amount of 5 ppm of the polycarbonate. The butyl p-toluenesulfonate was in the form of a master batch produced by dispersing a stock solution in a flaky polycarbonate with a mixer, and was supplied to the extruder with a weigh-f eeder in a nitrogen atmosphere. The polymer was pelletized. The polycarbonate thus obtained had an Mv of 21,000 and an initial YI of 1.7.

Molecular Weight (Mv):

A methylene chloride solution having a polycarbonate concentration (C) of 0.6 g/dL was used to measure the specific viscosity ($\eta$sp) thereof at a temperature of 20°Cwith aUbbellohde viscometer. The molecular weight is a value calculated from the viscosity value using the following two equations.

$$\eta sp/C = [\eta](1 + 0.28\eta sp)$$

$$[\eta] = 1.23 \times 10^{-4}(Mv)^{0.83}$$

Initial Hue (YI) :

The polycarbonate resin was dried at 120°C for 6 hours in a nitrogen atmosphere, and an injection-molded piece having a thickness of 3 mm was then produced therefrom at 360°C using injection molding machine J-100, manufactured by The Japan Steel Works, Ltd. This piece was examined with SC-1, manufactured by Suga Test Instruments Co., Ltd., for the value of YI (the larger the value of YI, the more the PC has colored) .

<By-Product Phenol Purification Step>

The by-product phenol recovered from the polymerization step at about 6.3 kg/hr (6 L/hr) was stored in a certain amount (about 100 L) in the by-product phenol tank (a tank made of SUS304 having a capacity of 200 L; the tank had a value of Vc/Fc, as specified in the description, of 33) and then subj ected to the following distillation/purification. The resultant purified phenol was recycled as a starting material for DPC production. A deficiency was partly covered by commercial PL.

A first distillation column was operated at 200 Torr and a reflux ratio of 2, whereby the water contained was distilled off together with part of the phenol. The bottoms were supplied to a second distillation column. The second distillation column was operated at 50 Torr and a reflux ratio of 0.5 to obtain purifiedphenol through the top at about 5. 8 kg/hr. Thispurified phenol was fed to the DPC production step through a purified-phenol tank. On the other hand, a liquidphenol mixture containing diphenyl carbonate, bisphenol A, and oligomers in amounts of 67% by weight, 7% by weight, and 4% by weight, respectively, was continuously discharged as bottoms.

The experiment described above was continuously made for 400 hours. In the course of the experiment, it became necessary to temporarily stop the DPC production step due to a trouble concerning temperature control, etc. However, because the liquid stored in the storage tank was used, there was no necessity of stopping the whole system and a measure against the trouble could be rapidly taken. During the operation, a polycarbonate grade having an Mv of 15,000 was produced and this resulted in temporary changes in the composition of the by-product phenol recovered from the polymerization vessel. However, the changes could be diminished within the storage tank and the operation conditions for the subsequent by-product phenol purification step could be smoothly changed.

[EXAMPLE 5]

Next, the invention will be explained in detail with respect to waste liquor treatment. Incidentally, the methods used for measuring viscosity-average molecular weight (Mv) and initial hue (YI) are as described hereinabove.

(EXPERIMENTAL EXAMPLE 1)

(DPC Production Step)

A DPC production step was conducted according to the flow diagram shown in Fig. 1. Details are as follows.

[Reaction Step for DPC]

While molten PL and a pyridine catalyst were being continuously fed to a DPC reactor 1, phosgene (CDC) gas was continuously fed thereto with mixing at 150°C. Subsequently, the mixture was sent to a dehydrochlorination column 2. The hydrogen chloride gas (D1) generated as a by-product of the phosgenation was cooled to 10°C. The resultant condensate was returned to the reactor, while the gas remaining uncondensed was neutralized with an aqueous alkali solution and then discharged. On the other hand, a dehydrochlorinated liquid b containing DPC in an amount of about 91% by weight was continuously discharged from the dehydrochlorination column 2.

[DPC Washing Step/DPC Water Washing Step]

The dehydrochlorinated liquid b was sent to a mixing vessel 3 and then to an alkali neutralization vessel 4 having a Teflon lining. Furthermore, about 5% by weight aqueous sodium hydroxide solution was supplied to the alkali neutralization vessel 4. The contents were mixed at 80°C for about 10 minutes and regulated so as to have a pH of 8.5. After the neutralization, the organic phase was separated after standing and then transferred to a water washing vessel 5. In the water washing vessel 5, the organic phase was washed with warm water used in an amount of about 30% by weight based on the organic phase. The aqueous phase was separated to obtain a water-washed liquid f which was crude DPC (comprising 1% by weight water, 2% by weight pyridine, 8% by weight PL, and 89% by weight DPC).

[DPC Distillation Step/Low-Boiling-Matter Distillation Step]

Subsequently, the water-washed liquid f was continuously supplied to the middle stage of a first PL distillation column 6 at about 30 kg/hr. As this first PL distillation column 6 was used a continuous distillation column having a theoretical plate number of 8 which had an inner diameter of 150 mm and a height of 4.0 m, was equipped with a reflux apparatus thereover, had a starting-material feed part at the center thereof, and had a concentration region and a recovery region each packed with Sulzer Packing (manufactured by Sumitomo Heavy Industries, Ltd.). Distillation was conducted under the conditions of a degree of vacuum of 20 Torr, heat-medium oil temperature of about 220°C, top temperature of 80-100°C, middle-stage temperature of 160°C, and reflux ratio of 1 to distill off a mixed gas F comprising substances having a lower boiling point than DPC, i.e., water, pyridine, and PL. From the column bottom was continuously discharged a first distillation residue g at about 26 kg/hr which was bottoms comprising DPC (water, 10 ppm by weight or less; pyridine, 1 ppm by weight or less; PL, 50 ppm by weight).

[DPC Distillation Step/High-Boiling-Matter Distillation Step]

Furthermore, this first distillation residue g was continuously supplied to a second PL distillation column 7. As this second PL distillation column 7 was used a continuous distillation column having a theoretical plate number of 8 which had an inner diameter of 200 mm and a height of 4.0 m, was equipped with a reflux apparatus thereover, had a starting-material feed part at the center thereof, and had a concentration region and a recovery region each packed with Sulzer Packing (manufactured by Sumitomo Heavy Industries, Ltd.). Distillation was conducted under the conditions of a degree of vacuum of 20 Torr, heat-medium oil temperature of about 240°C, top temperature of about 180°C, and reflux ratio of 0.5. As a result, purified DPC was obtained through the top at about 23.5 kg/hr, and a DPC distillation residue (X1), which was a high-boiling matter (DPC containing alkyl-substituted DPC derivatives and bromine-substituted DPC derivatives in amounts of about 350 ppm by weight and about 40 ppm by weight, respectively), was purged from the column bottom at about 2.5 kg/hr. The purified DPC was a high-purity product containing PL in an amount of 80 ppm by weight.

(PC Production Step)

[Polymerization Step for PC]

A PC was produced according to the flow diagram shown in Fig. 5 in the following manner. In a nitrogen gas atmosphere, the purified DPC obtained in the DPC production step and BPA were melt-mixed in a ratio of 0.977 by weight by means of a mixing vessel 21. This mixture was continuously fed through a starting material feeding pipe heated at 130°C, in a nitrogen atmosphere at ordinary pressure, to a first vertical polymerization vessel 22 regulated so as to have a temperature of 210°C. The liquid level was kept constant so as to result in an average residence time of 60 minutes by regulating the degree of opening of the valve disposed in a polymer discharge line connected to a bottom part of the vessel. Furthermore, simultaneously with initiation of the feeding of the starting-material mixture, cesium carbonate in an aqueous solution from began to be continuously supplied as a catalyst at a flow rate of $0.5 \times 10^{-6}$ mol

per mol of the BPA. The liquid polymerization reaction mixture discharged from the vessel bottom was subsequently continuously supplied successively to second and third vertical polymerization vessels and a fourth horizontal polymerizer. During the reaction, the liquid level in each vessel was regulated so as to result in an average residence time of 60 minutes and, simultaneously therewith, the PL generated as a by-product was distilled off. The PC vaporized ingredients p discharged from the first to third polymerization vessels were condensed and liquefied with respective multi-stage condensers. Part of each resultant condensate was refluxed to the polymerization vessel and the remainder was recovered and stored in a recovered-PL tank 29 for PC. On the other hand, the gas formed by vaporization and discharged from the fourth polymerizer was solidified with one of two freeze condensers arranged in parallel. The resultant solid was melted by switching to the other freeze condenser, and recovered and stored in the recovered-PL tank 29 for PC (not shown).

Polymerization conditions for each reaction vessel were as follows: first polymerization vessel (210°C, 100 Torr), second polymerization vessel (240°C, 15 Torr), third polymerization vessel (260°C, 0.5 Torr), and fourth polymerizer (270°C, 0.5 Torr).

The resultant polymer in a molten state was introduced into a twin-screw extruder (manufactured by Kobe Steel, Ltd.; screw diameter, 0.046 m; L/D = 40.2) 32 and pelletized while continuously adding butyl p-toluenesulfonate thereto in an amount of 5 weight ppm of the PC. The PC thus obtained had a viscosity-average molecular weight (Mv) of 21,000 and an initial hue (YI) of 1.7.

[PL Distillation Step]

The PC vaporized ingredients p recovered from the polymerization step for PC were analyzed. As a result, 5.0% by weight DPC, 0.5% by weight BPA, 0.3% by weight oligomers, and 0.2% by weight water were detected.

The PC vaporized ingredients p were continuously purified with the following two distillation columns (a first PL distillation column 30 and a second PL distillation column 31). The first PL distillation column 30 was operated at 200 Torr and a reflux ratio of 2, whereby the water contained was distilled off together with part of the PL as a PC low-boiling distillate (D6). The bottoms were continuously supplied as a first-stage residue q to the second PL distillation column 31. The second PL distillation column 31 was operated at 50 Torr and a reflux ratio of 0.5 to obtain purified PL through the top. A PL distillation residue (X2) containing DPC, BPA, and oligomers in amounts of 67% by weight, 7% by weight, and 4% by weight, respectively, was continuously purged as bottoms.

(Example in which Distillation Residue X2 in PC Production Step is Sent to Distillation Step in DPC Production Step)

The PL distillation residue (X2; comprising 22% by weight PL, 67% by weight DPC, 7% by weight BPA, and 4% by weight oligomers) purged from the by-product PL purification step in the PC production step described above was supplied to the first DPC distillation column 6 in the DPC production step described above. Subsequently, the first distillation residue g which was bottoms from the first DPC distillation column 6 was supplied to the second DPC distillation column 7. As a result, almost 100% of the PL contained in the PL distillation residue (X2) was recovered through the top of the first DPC distillation column 6, and about a half of the DPC was recovered through the top of the second DPC distillation column 7. Thus, the effective ingredients could be efficiently recovered by merely recycling the PL distillation residue (X2) to existing given steps.

DPC and a PC were produced in the manners described above while conducting the operation shown above. As a result, the DPC and PC obtained had no problem concerning quality at all.

(EXPERIMENTAL EXAMPLE 2)

(DPC Production Step)

A DPC production step was conducted according to the flow diagram shown in Fig. 1. Details are as follows.

[Recovery/Distillation Step]

The DPC distillation residue (X1) purged from the high-boiling-matter distillation step in the DPC production step in Experimental Example 1 was supplied to a DPC recovery/distillation column 8 and continuously distilled under the following conditions to recover a DPC-containing recovered liquid d as a distillate through the top. The distillate recovered was recycled to the washing step in the DPC production step to attain an improved yield. On the other hand, a DPC recovery/distillation residue (X1'), which was a high-boiling matter (DPC containing alkyl-substituted DPC derivatives and bromine-substituted DPC derivatives in amounts of about 7,000 ppm by weight and about 800 ppm by weight, respectively), was continuously purged as bottoms from the DPC recovery/distillation column.

For the DPC recovery/distillation was used a continuous distillation column having a theoretical plate number of 8 which had an inner diameter of 100 mm and a height of 3.0 m, was equipped with a reflux apparatus thereover, had a starting-material feed part at the center thereof, and had a concentration region and a recovery region each packed with Sulzer Packing (manufactured by Sumitomo Heavy Industries, Ltd.). The distillation was conducted under the conditions of a degree of vacuum of 20 Torr, heat-medium oil temperature of about 240°C, top temperature of 180°C, and reflux ratio of 0.5.

The other operations were conducted in the same manner as in Experimental Example 1. Thus, purified DPC (containing PL in an amount of 80 ppm by weight) was produced as a high-purity product, and a PC was produced.

(Example in which Distillation Residue (X2) in PC Production Step is Sent to Recovery/Distillation Step in DPC Production Step)

The PL distillation residue (X2; comprising 22% by weight PL, 67% by weight DPC, 7% by weight BPA, and 4% by weight oligomers) purged from the PL distillation step in the PC production step described above was supplied to the DPC recovery/distillation column 8 in the DPC production step. As a result, almost 100% of the PL contained in the distillation residue and about 80% by weight of the DPC contained in the residue were recovered through the top of the recovery/distillation column. Thus, the effective ingredients could be efficiently recovered by merely recycling the PL distillation residue X2 to existing given steps.

DPC and a PC were produced in the manners described above while conducting the operation shown above. As a result, the DPC and PC obtained had no problem concerning quality at all.

(EXPERIMENTAL EXAMPLE 3)

(BPA Production Step)

A BPA production step was conducted according to the flow diagrams shown in Figs. 2 to 4. A sulfonic-acid-form acid cation-exchange resin (trade name DIAION SK-104, manufactured by Mitsubishi Chemical Corp.) in which 15% of the sulfo groups had been neutralized with 4-pyridineethanethiol was packed in an amount of 60 L into a flow-through type BPA reactor having a thermostat. A liquid mixture of PL and acetone in a molar ratio of 10:1 was introduced into this BPA reactor at a temperature of 80°C and a flow rate of 68.2 kg/hr and reacted. The conversion of the acetone was 80%. After low-boiling matters (unreacted acetone, water, and part of PL) were purged at a flow rate of 5.1 kg/h, the reaction mixture was cooled to 50°C to precipitate crystals of an adduct. This mixture was filtered to separate it into the adduct crystals and the mother liquor. The flow rates of these were 16.5 kg/h and 46.5 kg/h, respectively. Ten percent by weight of this mother liquor was supplied to the mother liquor treatment step, while the remainder of the mother liquor was circulated as part of a starting material to be introduced into the synthesis reactor.

The adduct crystals thus obtained were redissolved in phenol supplied at a flow rate of 27.2 kg/h. The resultant solution was cooled to 50°C to precipitate crystals and then filtered to separate the adduct crystals (11.3 kg/h) from the mother liquor (32.5 kg/h) . The crystals separated were heated to 180°C under a reduced pressure of 0.3 mmHg to remove the PL. Thus, BPA having a purity of 99.95% or higher was obtained at a flow rate of 7.7 kg/h.

On the other hand, the mother liquor supplied to the mother liquor treatment step was treated with a PL evaporator 13 as shown in Fig. 4 to distill off part of the PL and concentrate the mother liquor. Subsequently, 0.1% by weight sodium hydroxide was added to the mother liquor, which was then introduced into the bottom of a residue reactor 14, as a decomposition/distillation column, regulated so as to have a reduced pressure of 50 mmHg and a temperature of 210°C. This reactor was operated under such conditions as to maintain a constant liquid level in the bottom part (residence time, 1 hr), and the bottoms in the decomposition/distillation column were purged from the system at a flow rate of 0.5 kg/h. Furthermore, the distillate discharged from the top of the residue reactor 14 was mixed with the PL, and this mixture was introduced at a flow rate of 4.2 kg/h into a flow-through type regenerating reactor 15 packed with 4 L of a sulfonic-acid-form acid cation-exchange resin (trade name DIAION SK-104, manufactured by Mitsubishi Chemical Corp.). The mixture was reacted under the conditions of 80°C. The liquid reaction mixture obtained was circulated to the BPA reactor used in the initial stage.

Acetone (3.6 kg/h) and PL (18.5 kg/h) were additionally fed to the BPA reactor in amounts corresponding to the amounts purged from the system and the amount of BPA obtained. Thus, synthesis reaction was continuously conducted and the whole system was operated to continuously produce BPA.

(Example in which DPC Distillation Residue (X1) in DPC Production Step and PL Distillation Residue (X2) in PC Production Step are Sent to Mother Liquor Treatment Step in BPA Production Step)

The DPC distillation residue (X1; comprising about 350 weight ppm alkyl-substituted DPC derivatives, about 40 weight ppm bromine-substituted DPC derivatives, and DPC as the remainder) discharged from the DPC production step and the PL distillation residue (X2; comprising 22% by weight PL, 67% by weight DPC, 7% by weight BPA, and 4% by weight oligomers) purged from the by-product PL purification step in the PC production step were supplied at flow rates of 0.11 kg/h and 0.15 kg/h, respectively, to the mother liquor treatment step (step (g)) in the BPA production step. In this operation, the residue reactor 14 was operated under such conditions as to maintain a constant liquid level in the bottompart (residence time, 1 hr), and the bottoms were purged from the system at 0.6 kg/h.

As a result, almost 100% of the PL contained in those distillation residues and BPA decomposition products were recovered through the top of the residue reactor 14 in the mother liquor treatment step. Thus, the effective ingredients could be efficiently recovered by merely recycling the distillation residues to an existing given step.

BPA, DPC, and PC were produced in the manners described above while conducting the operation shown above. As a result, the BPA, DPC, and PC obtained had no problem concerning quality at all.

(EXPERIMENTAL EXAMPLE 4)

(Example in which DPC Recovery/Distillation Residue (X1') in DPC Production Step and PL Distillation Residue (X2) in PC Production Step are Sent to Mother Liquor Treatment Step in BPA Production Step)

The DPC recovery/distillation residue (X1'; comprising about 7, 000 weight ppm alkyl-substituted DPC derivatives, about 800 weight ppm bromine-substituted DPC derivatives, and DPC as the remainder) discharged from the DPC production step and the PL distillation residue (X2; comprising 22% by weight PL, 67% by weight DPC, 7% by weight BPA, and 4% by weight oligomers) purged from the by-product PL purification step in the PC production step were supplied at flow rates of 0.11 kg/h and 0.15 kg/h, respectively, to the mother liquor treatment step (step (g)) in the BPA production step. In this operation, the residue reactor 14 was operated under such conditions as to maintain a constant liquid level in the bottompart (residence time, 1 hr), and the bottoms were purged from the system at 0.6 kg/h.

As a result, almost 100% of the PL contained in those distillation residues and BPA decomposition products were recovered through the top of the residue reactor 14 in the mother liquor treatment step. Thus, the effective ingredients could be efficiently recovered by merely recycling the distillation residues to an existing given step.

BPA, DPC, and PC were produced in the manners described above while conducting the operation shown above. As a result, the BPA, DPC, and PC obtained had no problem concerning quality at all.

(EXPERIMENTAL EXAMPLE 5)

(Example in which PL Distillation Residue (X2) in PC Production Step is Sent to Recovery/Distillation Step in DPC Production Step and DPC Recovery/Distillation Residue (X1') is Sent to Mother Liquor Treatment Step in BPA Production Step)

The PL distillation residue (X2; comprising 22% by weight PL, 67% by weight DPC, 7% by weight BPA, and 4% by weight oligomers) purged from the by-product PL purification step in the PC production step was supplied to the DPC recovery/distillation column 8 in the DPC production step. An effective ingredient discharged as a distillate from the DPC recovery/distillation column 8 was recycled to the washing step in the DPC production step, and a DPC recovery/distillation residue (X1') as bottoms from the DPC recovery/distillation column 8 was supplied to the mother liquor treatment step (step (g)) in the BPA production step. An effective ingredient recovered in this treatment step was used as a starting material for synthesis in the BPA production step. BPA, DPC, and a PC were continuously produced over 400 hours while conducting the operation shown above. As a result, the BPA, DPC, and PC obtained had no problem concerning quality at all. High-boiling wastes could be integrated into one discharged from the mother liquor treatment step in the BPA production step. The waste amount decreased remarkably and the yield was greatly improved.

While the invention has been described in detail and with reference to specific embodiments thereof, it will be apparent to one skilled in the art that various changes and modifications can be made therein without departing from the spirit and scope thereof.

This application is based on a Japanese patent application filed on August 21, 2003 (Application No. 2003-297844), Japanese patent application filed on August 21, 2003(Application No.2003-297719), Japanese patent application filedonAugust21, 2003 (ApplicationNo. 2003-297832), Japanese patent application filed on November 12, 2003 (Application No. 2003-382667), Japanese patent application filed on November 12, 2003 (Application No. 2003-382773), and Japanese patent application filed on November 12, 2003 (Application No. 2003-382646).

<Industrial Applicability>

According to the invention, the water content of by-product phenol is limited to a value in a given range. Because of this, even when this by-product phenol is used as part of a starting material to be used in the diphenyl carbonate production step or bisphenol A production step, the production efficiency decreases little and is almost maintained.

Furthermore, the impurities contained in the by-product phenol recovered in an early stage of polymerization in the aromatic polycarbonate production step are a starting material used in the diphenyl carbonate production step and reaction products yielded in the step. Consequently, this by-product phenol, which contains these impurities, can be used, without being purified, as at least part of the phenol to be used in the diphenyl carbonate production step.

On the other hand, the impurities contained in the by-product phenol recovered in a late stage of polymerization in the aromatic polycarbonate production step are hydrolyzed in the bisphenol A production step and become a starting material and reaction products for this step. In addition, almost no alcohols or the like which are causative of a decrease in catalytic activity in the bisphenol A production step are contained in the by-product phenol. Consequently, this by-product phenol, which contains those impurities, can be used, without being purified, as at least part of the phenol to be used in the bisphenol A production step.

Furthermore, by integrally operating the diphenyl carbonate production step, bisphenol A production step, and aromatic polycarbonate production step, it is possible to use commercial phenol as a starting material in diphenyl carbonate production and to use distillate ingredients generated in the polymerization step in the aromatic polycarbonate production step as a starting material in bisphenol A production.

Moreover, when a PC storage step in which the liquefied PC vaporized ingredients to be subjected to the PL distillation step and/or the by-product phenol recovered in the PL distillation step is stored is conducted before and/or after the PL distillation step, when a DPC storage step in which the diphenyl carbonate obtained in the DPC distillation step is stored is conducted after the DPC distillation step, and/or when a BPA storage step in which a mixture of bisphenol A and phenol is stored is conducted between the BPA crystallization/separation step and the PC polymerization step, then the quality of the compound obtained in each step can be kept in a certain range and later steps can be continuously conducted irrespective of the preceding steps.

Furthermore, when a PL distillation residue, DPC distillation residue, and/or DPC recovery/distillation residue is sent to a given step, effective ingredients contained in these residues can be completely utilized. Consequently, the overall efficiency can be improved and environmental burden can be reduced.

In addition, when the vacuum piping which connects the condenser to the vacuum device and is inclined is regulated so that the total height of the parts rising upward oppositely to the inclination is 1 m or smaller, then the amount of liquid and solid matters staying in the rising parts can be minimized and the piping can be prevented from being completely clogged or coming to have too large a pressure loss.

**Claims**

1. A process for producing an aromatic polycarbonate which comprises:

    a diphenyl carbonate production step in which phenol and at least one carbonyl compound are used as starting materials to produce diphenyl carbonate, said diphenyl carbonate production step being a step comprising a diphenyl carbonate reaction step and a diphenyl carbonate distillation step;
    and optionally a bisphenol A production step in which phenol and acetone are used as starting materials to produce bisphenol A;
    and an aromatic polycarbonate production step in which the diphenyl carbonate and the bisphenol A are used as starting materials to produce an aromatic polycarbonate via an aromatic carbonate polymerization step and by-product phenol is recovered,
    **characterized in that** aromatic-carbonate vaporized ingredients resulting from the aromatic carbonate polymerization step are liquefied and subjected to a phenol distillation step to remove an aromatic-carbonate low-boiling distillate from the aromatic-carbonate vaporized ingredients and thereby recover the by-product phenol;
    the amount of water contained in the by-product phenol recovered in the aromatic polycarbonate production step is regulated to 0.2% by weight or smaller;
    this phenol is used as a starting material in the diphenyl carbonate production step and/or the bisphenol A production step; and a phenol distillation residue generated in the phenol distillation step is sent to the diphenyl carbonate distillation step.

2. The process for producing an aromatic polycarbonate of claim 1, **characterized in that** the bisphenol A production step comprises a bisphenol. A reaction step, a bisphenol A low-boiling-matter removal step, and a bisphenol A crystallization/separation step, and further includes a step in which a bisphenol A low-boiling distillate discharged from the bisphenol A low-boiling-matter removal step is subjected to a bisphenol A/water separation step to recover phenol.

3. The process for producing an aromatic polycarbonate of claim 1 or 2, **characterized in that** the phenol concentration in the PC low-boiling distillate removed in the PL distillation step is 50-99.8% by weight.

4. The process for producing an aromatic polycarbonate of claim 1, **characterized in that** the diphenyl carbonate production step has a diphenyl carbonate washing step between the diphenyl carbonate reaction step and the diphenyl carbonate distillation step, and
the aromatic-carbonate low-boiling distillate generated in the phenol distillation step is sent to the diphenyl carbonate washing step.

5. The process for producing an aromatic polycarbonate of any one of claims 2 to 4, **characterized in that** the aromatic-carbonate low-boiling distillate generated in the phenol distillation step is sent to the bisphenol A/water separation step.

6. The process for producing an aromatic polycarbonate of any one of claims 1 to 5, **characterized in that** the hydroxyacetate content in the phenol to be used as a starting material in the bisphenol A production step is lower than 10 ppm by weight.

7. The process for producing an aromatic polycarbonate of any one of claims 2 to 6, wherein the acid catalyst used in the bisphenol A reaction step is a sulfonic acid form cation-exchange resin modified with a compound having a mercapto group.

8. The process for producing an aromatic polycarbonate of any one of claims 1 to 7, **characterized in that** before and/or after the phenol distillation step, an aromatic carbonate storage step is conducted in which the liquefied aromatic-carbonate vaporized ingredients to be subjected to the phenol distillation step and/or the by-product phenol recovered in the phenol distillation step is stored, and that an aromatic carbonate storage tank having a capacity satisfying the requirement represented by the following expression (1) is used for the aromatic carbonate storage step:

$$10 \leqq (Vc/Fc) \leqq 100 \qquad (1)$$

(wherein Vc indicates the capacity (m$^3$) of the aromatic carbonate storage tank and Fc indicates the feed rate (m$^3$/hr) of the liquefied aromatic-carbonate vaporized ingredients or by-product phenol).

9. The process for producing an aromatic polycarbonate of any one of claims 1 to 8, **characterized in that** after the diphenyl carbonate distillation step, a diphenyl carbonate storage step is conducted in which the diphenyl carbonate obtained in the diphenyl carbonate distillation step is stored, and that a diphenyl carbonate storage tank having a capacity satisfying the requirement represented by the following expression (2) is used for the diphenyl carbonate storage step:

$$10 \leqq (Vd/Fd) \leqq 100 \qquad (2)$$

(wherein Vd indicates the capacity (m$^3$) of the diphenyl carbonate storage tank and Fd indicates the feed rate (m$^3$/hr) of the diphenyl carbonate).

10. The process for producing an aromatic polycarbonate of any one of claims 2 to 9, **characterized in that** a bisphenol A storage step in which a mixture of bisphenol A and phenol is stored is conducted between the bisphenol A crystallization/separation step and the aromatic carbonate polymerization step.

11. The process for producing an aromatic polycarbonate of claim 10, **characterized in that** a bisphenol A storage tank having a capacity satisfying the requirement represented by the following expression (3) is used for the bisphenol A storage step:

$$10 \leqq (Vb/Fb) \leqq 1,000 \qquad (3)$$

(wherein Vb indicates the capacity (m$^3$) of the bisphenol A storage tank and Fb indicates the feed rate (m$^3$/hr) of the bisphenol A being fed to the aromatic carbonate polymerization step) .

12. The process for producing an aromatic polycarbonate of claim 10 or 11, **characterized in that** the bisphenol A/phenol mixture to be stored in the bisphenol A storage step is in the form of: crystals of an adduct of bisphenol A with phenol; a slurry containing crystals of an adduct of bisphenol A with phenol; or a liquid mixture of bisphenol A and phenol.

13. The process for producing an aromatic polycarbonate of any one of claims 10 to 12, **characterized in that** a neutralization step is conducted between the bisphenol A crystallization step and the aromatic carbonate polymerization step or before these steps.

14. The process for producing an aromatic polycarbonate of any one of claims 10 to 12, **characterized in that** the steps ranging from the bisphenol A reaction step to the bisphenol A crystallization step are conducted intermittently and the aromatic carbonate polymerization step is conducted continuously.

15. The process for producing an aromatic polycarbonate of any one of claims 1 to 14, **characterized in that** the diphenyl carbonate production step includes a diphenyl carbonate recovery/distillation step in which diphenyl carbonate is recovered from a diphenyl carbonate distillation residue generated in the diphenyl carbonate distillation step, and that a phenol distillation residue generated in the phenol distillation step is sent to the diphenyl carbonate distillation step and/or the diphenyl carbonate recovery/distillation step.

16. The process for producing an aromatic polycarbonate of any one of claims 1 to 15, **characterized in that** the bisphenol A production step includes a step in which part or all of the mother liquor discharged from the bisphenol A crystallization/separation step is sent to a bisphenol A mother liquor treatment step to reduce the amount of by-products in the mother liquor and this mother liquor is subsequently used as part or all of the phenol to be used as a starting material for bisphenol A production, and
that a phenol distillation residue generated in the phenol distillation step and/or a diphenyl carbonate distillation residue generated in the diphenyl carbonate distillation step is sent to the bisphenol A mother liquor treatment step in the bisphenol A production step.

17. The process for producing an aromatic polycarbonate of any one of claims 1 to 16, **characterized in that** a phenol distillation residue generated in the phenol distillation step and/or at least either of a diphenyl carbonate distillation residue generated in the diphenyl carbonate distillation step and a diphenyl carbonate recovery/distillation residue generated in the diphenyl carbonate recovery/distillation step is sent to the bisphenol A mother liquor treatment step in the bisphenol A production step.

18. The process for producing an aromatic polycarbonate of any one of claims 16 or 17, **characterized in that** a phenol distillation residue generated in the phenol distillation step is sent to the diphenyl carbonate distillation step and subsequently a distillation residue generated in the diphenyl carbonate distillation step is sent to the bisphenol A mother liquor treatment step.

19. The process for producing an aromatic polycarbonate of any one of claims 16 to 18, **characterized in that** a phenol distillation residue generated in the phenol distillation step is sent to the diphenyl carbonate distillation step and/or the diphenyl carbonate recovery/distillation step and subsequently a diphenyl carbonate distillation residue and/or diphenyl carbonate recovery/distillation residue generated in the diphenyl carbonate distillation step is sent to the bisphenol A mother liquor treatment step.

20. The process for producing an aromatic polycarbonate of any one of claims 16 to 19, **characterized in that** the bisphenol A mother liquor treatment step comprises adding a basic substance to part or all of the mother liquor, heating the mixture to generate phenol and phenol derivatives, and then reacting the phenol and phenol derivatives with the aid of an acid catalyst or alkali catalyst to thereby obtain bisphenol A.

21. The process for producing an aromatic polycarbonate of claim 20, **characterized in that** the basic substance is sodium hydroxide or potassium hydroxide.

22. The process for producing an aromatic polycarbonate of any one of claims 1 to 21, **characterized in that** the distillation column in the diphenyl carbonate distillation step is provided with a condenser for condensing a distillate, a vacuum device for reducing the pressure in the system, and a vacuum piping which connects the condenser to the vacuum device, and
that the vacuum piping is inclined downward from the condenser side to the vacuum device side, and the total height of the parts rising upward from the condenser side toward the vacuum device side is 1 m or smaller.

23. The process for producing an aromatic polycarbonate of anyone of claims 1 to 22, **characterized in that** the polymerizer used in the step of liquefying PC vaporized ingredients in the PC polymerization step is provided with a condenser for condensing PC vaporized ingredients obtained as a distillate, a vacuum device for reducing the pressure in the polymerization system, and a vacuum piping which connects the condenser to the vacuum device, and that the vacuum piping is inclined downward from the condenser side to the vacuum device side, and the total height of the parts rising upward from the condenser side toward the vacuum device side is 1 m or smaller.

24. The process for producing an aromatic polycarbonate of anyone of claims 1 to 22, **characterized in that** the distillation column in the phenol distillation step is provided with a condenser for condensing a distillate, a vacuum device for reducing the pressure in the system, and a vacuum piping which connects the condenser to the vacuum device, and that the vacuum piping is inclined downward from the condenser side to the vacuum device side, and the total height of the parts rising upward from the condenser side toward the vacuum device side is 1 m or smaller.

25. The process for producing an aromatic polycarbonate of any one of claims 22 to 24, **characterized in that** the vacuum piping has a device for heating and keeping the inside of the piping at a temperature not lower than the melting point of the distillate discharged from the distillation column and/or polymerizer.

26. The process for producing an aromatic polycarbonate of any one of claims 22 to 25, **characterized in that** the vacuum piping is provided with at least one drain opening in a part thereof located on the vacuum device side.

27. The process for producing an aromatic polycarbonate of any one of claims 22 to 26, **characterized in that** the vacuum piping is provided, in a part thereof located on the condenser side, with a feed opening through which a heated fluid can be supplied.

28. The process for producing an aromatic polycarbonate of claim 27, **characterized in that** the heated fluid is supplied through the feed opening to thereby clean the vacuum piping.

29. The process for producing an aromatic polycarbonate of claim 27 or 28, **characterized in that** the heated fluid comprises at least one of water vapor, phenol, and nitrogen.

30. The process for producing an aromatic polycarbonate of any one of claims 1 to 29, **characterized in that** the phenol to be used as a starting material in the diphenyl carbonate production step is phenol containing cresol and/or xylenol in an amount of 20-1,000 ppm by weight, and that the phenol generated in the polymerization step in the aromatic polycarbonate production step is used as at least part of the phenol to be used as a starting material in the bisphenol A production step.

31. The process for producing an aromatic polycarbonate of claim 30, **characterized in that** the content of cresol and/or xylenol in the phenol to be used as a starting material in the bisphenol A production step is lower than 20 ppm by weight.

32. The process for producing an aromatic polycarbonate of claim 30 or 31, **characterized in that** the phenol generated in the polymerization step in the aromatic polycarbonate production step is used as at least part of the phenol to be used as a starting material in the bisphenol A production step, after having undergone a step for removing water.

33. The process for producing an aromatic polycarbonate of claim 32, **characterized in that** the bisphenol A production step comprises a bisphenol A reaction step, a bisphenol A low-boiling-matter removal step, and a bisphenol A crystallization/separation step, and further includes a step in which the bisphenol A low-boiling distillate discharged from the bisphenol A low-boiling-matter removal step is subjected to a bisphenol A/water separation step to recover phenol, and that the step for removing water is the water separation step in the bisphenol A production step.

34. The process for producing an aromatic polycarbonate of claim 32 or 33, **characterized in that** the step for removing water is followed by a bisphenol A/high-boiling-matter separation step in which ingredients having a higher boiling point than phenol are separated.

35. The process for producing an aromatic polycarbonate of claim 34, **characterized in that** the bisphenol A production step includes a step in which part or all of the mother liquor discharged from the BPA crystallization/separation step is sent to a BPA mother liquor treatment step to reduce the amount of by-products in the mother liquor and this mother liquor is subsequently used as part or all of the phenol to be used as a starting material for bisphenol A production, and that the ingredients having a higher boiling point than phenol which have been obtained in the BPA/high-boiling-matter removal step are sent to the BPA mother liquor treatment step.

36. The process for producing an aromatic polycarbonate of any one of claims 1 to 35, **characterized in that** 50-95% by weight of the phenol generated as a by-product in the aromatic polycarbonate production step is used as at least part of the phenol to be used in the diphenyl carbonate production step and 50-5% by weight thereof is used as at least part of a starting material for the bisphenol A production step.

37. The process for producing an aromatic polycarbonate of claim 36, **characterized in that** 50-70% by weight of the phenol generated as a by-product in the aromatic polycarbonate production step is used as at least part of the phenol to be used in the diphenyl carbonate production step and 50-30% by weight thereof is used as at least part of a starting material for the bisphenol A production step.

38. The process for producing an aromatic polycarbonate of any one of claims 1 to 37, **characterized in that** the polymerization step in the aromatic polycarbonate production step is constituted of at least three polymerization vessels and the by-product phenol recovered from the first vessel or from the first and second vessels of the polymerization vessels is used as at least part of the phenol to be used in the diphenyl carbonate production step, and that the by-product phenol recovered from the second and succeeding polymerization vessels or from the third and succeeding polymerization vessels of the polymerization vessels is used as at least part of the phenol to be used in the bisphenol A production step.

39. The process for producing an aromatic polycarbonate of any one of claims 36 to 38, wherein the by-product phenol to be used in the diphenyl carbonate production step contains up to 1.0% by weight high-boiling compounds which have a higher boiling point than diphenyl carbonate.

40. The process for producing an aromatic polycarbonate of any one of claims 36 to 39, wherein the one or more polymerization vessels from which the by-product phenol to be used in the diphenyl carbonate production step is obtained have a reflux apparatus for refluxing vaporized ingredients.

41. The process for producing an aromatic polycarbonate of any one of claims 36 to 40, wherein when the carbonyl compound is a dialkyl carbonate and/or an alkyl aryl carbonate and the phenol generated as a by-product in the aromatic polycarbonate production step is used as part of a starting material in the bisphenol A production step, then the phenol to be used as the starting material contains the dialkyl carbonate, the alkyl aryl carbonate, and the alkyl alcohol obtained from the dialkyl carbonate and/or alkyl aryl carbonate in an amount of 20 ppm by weight or smaller.

**Patentansprüche**

1. Ein Verfahren zur Herstellung eines aromatischen Polycarbonats, welches umfasst:

einen Diphenylcarbonat-Herstellungsschritt, bei dem Phenol und mindestens eine Carbonylverbindung als Ausgangsmaterialien verwendet werden, um Diphenylcarbonat herzustellen, wobei der Diphenylcarbonat-Herstellungsschritt ein Schritt ist, der einen Diphenylcarbonat-Reaktionsschritt und einen Diphenylcarbonat-Destillationsschritt umfasst;
und gegebenenfalls einen Bisphenol A-Herstellungsschritt, bei dem Phenol und Aceton als Ausgangsmaterialien verwendet werden, um Bisphenol A herzustellen;
und einen Schritt zur Herstellung eines aromatischen Polycarbonats, bei dem das Diphenylcarbonat und das Bisphenol A als Ausgangsmaterialien verwendet werden, um ein aromatisches Polycarbonat über einen Schritt zur Polymerisation eines aromatischen Carbonats herzustellen, und das Nebenprodukt Phenol gewonnen wird, **dadurch gekennzeichnet, dass** verdampfte Bestandteile des aromatischen Carbonats, die aus dem Schritt zur Polymerisation eines aromatischen Carbonats resultieren, verflüssigt und einem Phenol-Destillationsschritt unterzogen werden, um ein niedrigsiedendes Destillat eines aromatischen Carbonats aus den verdampften Bestandteilen des aromatischen Carbonats zu entfernen und dadurch das Nebenprodukt Phenol zu gewinnen;

die in dem Nebenprodukt Phenol, das in dem Schritt zur Herstellung eines aromatischen Polycarbonats gewonnen wird, enthaltene Wassermenge auf 0,2 Gew.-% oder weniger eingestellt wird;

dieses Phenol als ein Ausgangsmaterial in dem Diphenolcarbonat-Herstellungsschritt und/oder dem Bisphenol A-Herstellungsschritt verwendet wird; und ein in dem Phenol-Destillationsschritt gebildeter Phenol-Destillationsrückstand in den Diphenylcarbonat-Destillationsschritt überführt wird.

2. Das Verfahren zur Herstellung eines aromatischen Polycarbonats nach Anspruch 1, **dadurch gekennzeichnet, dass** der Bisphenol A-Herstellungsschritt einen Bisphenol A-Reaktionsschritt, einen Schritt zur Entfernung niedrigsiedender Stoffe aus Bisphenol A und einen Bisphenol A-Kristallisations-/Trennschritt umfasst und weiter einen Schritt beinhaltet, bei dem ein aus dem Schritt zur Entfernung niedrigsiedender Stoffe aus Bisphenol A ausgebrachtes niedrigsiedendes Destillat von Bisphenol A einem Bisphenol A/Wasser-Trennschritt unterzogen wird, um Phenol zu gewinnen.

3. Das Verfahren zur Herstellung eines aromatischen Polycarbonats nach Anspruch 1 oder 2, **dadurch gekennzeichnet, dass** die Phenolkonzentration in dem in dem PL-Destillationsschritt entfernten niedrigsiedenden Destillat von PC 50 bis 99,8 Gew.-% beträgt.

4. Das Verfahren zur Herstellung eines aromatischen Polycarbonats nach Anspruch 1, **dadurch gekennzeichnet, dass** der Diphenylcarbonat-Herstellungsschritt einen Diphenylcarbonat-Waschschritt zwischen dem Diphenylcarbonat-Reaktionsschritt und dem Diphenylcarbonat-Destillationsschritt aufweist und

das in dem Phenol-Destillationsschritt gebildete niedrigsiedende Destillat des aromatischen Carbonats in den Diphenylcarbonat-Waschschritt überführt wird.

5. Das Verfahren zur Herstellung eines aromatischen Polycarbonats nach einem der Ansprüche 2 bis 4, **dadurch gekennzeichnet, dass** das in dem Phenol-Destillationsschritt gebildete niedrigsiedende Destillat des aromatischen Carbonats in den Bisphenol A/Wasser-Trennschritt überführt wird.

6. Das Verfahren zur Herstellung eines aromatischen Polycarbonats nach einem der Ansprüche 1 bis 5, **dadurch gekennzeichnet, dass** der Hydroxyacetat-Gehalt in dem als ein Ausgangsmaterial in dem Bisphenol A-Herstellungsschritt zu verwendenden Phenol weniger als 10 Gew.-ppm beträgt.

7. Das Verfahren zur Herstellung eines aromatischen Polycarbonats nach einem der Ansprüche 2 bis 6, wobei der in dem Bisphenol A-Reaktionsschritt verwendete saure Katalysator ein Kationenaustauscherharz in Sulfonsäureform ist, das mit einer Verbindung mit einer Mercaptogruppe modifiziert ist.

8. Das Verfahren zur Herstellung eines aromatischen Polycarbonats nach einem der Ansprüche 1 bis 7, **dadurch gekennzeichnet, dass** vor und/oder nach dem Phenol-Destillationsschritt ein Schritt zur Lagerung des aromatischen Carbonats durchgeführt wird, bei dem die verflüssigten verdampften Bestandteile des aromatischen Carbonats, die dem Phenol-Destillationsschritt unterzogen werden sollen, und/oder das in dem Phenol-Destillationsschritt gewonnene Nebenprodukt Phenol gelagert werden, und dass ein Behälter zur Lagerung von aromatischem Carbonat mit einem Fassungsvermögen, das die durch den folgenden Ausdruck (1) dargestellte Anforderung erfüllt, für den Schritt zur Lagerung des aromatischen Carbonats verwendet wird:

$$10 \leq (Vc/Fc) \leq 100 \qquad (1)$$

(wobei Vc das Fassungsvermögen ($m^3$) des Behälters zur Lagerung von aromatischem Carbonat angibt und Fc die Zufuhrrate ($m^3$/h) der verflüssigten verdampften Bestandteile des aromatischen Carbonats oder des Nebenprodukts Phenol angibt).

9. Das Verfahren zur Herstellung eines aromatischen Polycarbonats nach einem der Ansprüche 1 bis 8, **dadurch gekennzeichnet, dass** nach dem Diphenylcarbonat-Destillationsschritt ein Diphenylcarbonat-Lagerschritt durchgeführt wird, bei dem das in dem Diphenylcarbonat-Destillationsschritt erhaltene Diphenylcarbonat gelagert wird, und dass ein Diphenylcarbonat-Lagerbehälter mit einem Fassungsvermögen, das die durch den folgenden Ausdruck (2) dargestellte Anforderung erfüllt, für den Diphenylcarbonat-Lagerschritt verwendet wird:

$$10 \leq (Vd/Fd) \leq 100 \qquad (2)$$

(wobei Vd das Fassungsvermögen ($m^3$) des Diphenylcarbonat-Lagerbehälters angibt und Fd die Zufuhrrate ($m^3$/h) des Diphenylcarbonats angibt).

10. Das Verfahren zur Herstellung eines aromatischen Polycarbonats nach einem der Ansprüche 2 bis 9, **dadurch gekennzeichnet, dass** ein Bisphenol A-Lagerschritt, bei dem ein Gemisch von Bisphenol A und Phenol gelagert wird, zwischen dem Bisphenol A-Kristallisations-/Trennschritt und dem Schritt zur Polymerisation eines aromatischen Carbonats durchgeführt wird.

11. Das Verfahren zur Herstellung eines aromatischen Polycarbonats nach Anspruch 10, **dadurch gekennzeichnet, dass** ein Bisphenol A-Lagerbehälter mit einem Fassungsvermögen, das die durch den folgenden Ausdruck (3) dargestellte Anforderung erfüllt, für den Bisphenol A-Lagerschritt verwendet wird:

$$10 \leq (Vb/Fb) \leq 1000 \qquad (3)$$

(wobei Vb das Fassungsvermögen ($m^3$) des Bisphenol A-Lagerbehälters angibt und Fb die Zufuhrrate ($m^3$/h) des dem Schritt zur Polymerisation eines aromatischen Carbonats zuzuführenden Bisphenols A angibt).

12. Das Verfahren zur Herstellung eines aromatischen Polycarbonats nach Anspruch 10 oder 11, **dadurch gekennzeichnet, dass** das in dem Bisphenol A-Lagerschritt zu lagernde Bisphenol A/Phenol-Gemisch in Form von: Kristallen eines Addukts von Bisphenol A mit Phenol; einer Aufschlämmung, die Kristalle eines Addukts von Bisphenol A mit Phenol enthält; oder eines flüssigen Gemischs von Bisphenol A und Phenol vorliegt.

13. Das Verfahren zur Herstellung eines aromatischen Polycarbonats nach einem der Ansprüche 10 bis 12, **dadurch gekennzeichnet, dass** ein Neutralisationsschritt zwischen dem Bisphenol A-Kristallisationsschritt und dem Schritt zur Polymerisation eines aromatischen Carbonats oder vor diesen Schritten durchgeführt wird.

14. Das Verfahren zur Herstellung eines aromatischen Polycarbonats nach einem der Ansprüche 10 bis 12, **dadurch gekennzeichnet, dass** die Schritte, die von dem Bisphenol A-Reaktionsschritt bis zu dem Bisphenol A-Kristallisationsschritt reichen, mit Unterbrechungen durchgeführt werden und der Schritt zur Polymerisation eines aromatischen Carbonats kontinuierlich durchgeführt wird.

15. Das Verfahren zur Herstellung eines aromatischen Polycarbonats nach einem der Ansprüche 1 bis 14, **dadurch gekennzeichnet, dass** der Diphenylcarbonat-Herstellungsschritt einen Diphenylcarbonat-Gewinnungs-/Destillationsschritt beinhaltet, bei dem Diphenylcarbonat aus einem in dem Diphenylcarbonat-Destillationsschritt gebildeten Diphenylcarbonat-Destillationsrückstand gewonnen wird, und dass ein in dem Phenol-Destillationsschritt gebildeter Phenol-Destillationsrückstand in den Diphenylcarbonat-Destillationsschritt und/oder den Diphenylcarbonat-Gewinnungs-/Destillationsschritt überführt wird.

16. Das Verfahren zur Herstellung eines aromatischen Polycarbonats nach einem der Ansprüche 1 bis 15, **dadurch gekennzeichnet, dass** der Bisphenol A-Herstellungsschritt einen Schritt beinhaltet, bei dem ein Teil oder die gesamte aus dem Bisphenol A-Kristallisations-/Trennschritt ausgebrachte Mutterlauge in einen Bisphenol A-Mutterlauge-Behandlungsschritt überführt wird, um die Menge an Nebenprodukten in der Mutterlauge zu verringern, und diese Mutterlauge anschließend als Teil oder das gesamte als ein Ausgangsmaterial für die Bisphenol A-Herstellung zu verwendende Phenol verwendet wird, und dass ein in dem Phenol-Destillationsschritt gebildeter Phenol-Destillationsrückstand und/oder ein in dem Diphenylcarbonat-Destillationsschritt gebildeter Diphenylcarbonat-Destillationsrückstand in den Bisphenol A-Mutterlauge-Behandlungsschritt in dem Bisphenol A-Herstellungsschritt überführt wird.

17. Das Verfahren zur Herstellung eines aromatischen Polycarbonats nach einem der Ansprüche 1 bis 16, **dadurch gekennzeichnet, dass** ein in dem Phenol-Destillationsschritt gebildeter Phenol-Destillationsrückstand und/oder mindestens einer aus einem in dem Diphenylcarbonat-Destillationsschritt gebildeten Diphenylcarbonat-Destillationsrückstand und einem in dem Diphenylcarbonat-Gewinnungs-/Destillationsschritt gebildeten Diphenylcarbonat-Gewinnungs-/Destillationsrückstand in den Bisphenol A-Mutterlauge-Behandlungsschritt in dem Bisphenol A-Herstellungsschritt überführt wird.

18. Das Verfahren zur Herstellung eines aromatischen Polycarbonats nach einem der Ansprüche 16 oder 17, **dadurch gekennzeichnet, dass** ein in dem Phenol-Destillationsschritt gebildeter Phenol-Destillationsrückstand in den Diphenylcarbonat-Destillationsschritt überführt wird und anschließend ein in dem Diphenylcarbonat-Destillationsschritt gebildeter Destillationsrückstand in den Bisphenol A-Mutterlauge-Behandlungsschritt überführt wird.

19. Das Verfahren zur Herstellung eines aromatischen Polycarbonats nach einem der Ansprüche 16 bis 18, **dadurch gekennzeichnet, dass** ein in dem Phenol-Destillationsschritt gebildeter Phenol-Destillationsrückstand in den Diphenylcarbonat-Destillationsschritt und/oder den Diphenylcarbonat-Gewinnungs-/Destillationsschritt überführt wird und anschließend ein in dem Diphenylcarbonat-Destillationsschritt gebildeter Diphenylcarbonat-Destillationsrückstand und/oder Diphenylcarbonat-Gewinnungs-/Destillationsrückstand in den Bisphenol A-Mutterlauge-Behandlungsschritt überführt wird.

20. Das Verfahren zur Herstellung eines aromatischen Polycarbonats nach einem der Ansprüche 16 bis 19, **dadurch gekennzeichnet, dass** der Bisphenol A-Mutterlauge-Behandlungsschritt die Zugabe einer basischen Substanz zu einem Teil oder der gesamten Mutterlauge, Erwärmen des Gemischs, um Phenol und Phenol-Derivate zu bilden, und anschließendes Umsetzen des Phenols und der Phenol-Derivate mit Hilfe eines sauren Katalysators oder alkalischen Katalysators, um dadurch Bisphenol A zu erhalten, umfasst.

21. Das Verfahren zur Herstellung eines aromatischen Polycarbonats nach Anspruch 20, **dadurch gekennzeichnet, dass** die basische Substanz Natriumhydroxid oder Kaliumhydroxid ist.

22. Das Verfahren zur Herstellung eines aromatischen Polycarbonats nach einem der Ansprüche 1 bis 21, **dadurch gekennzeichnet, dass** die Destillationssäule in dem Diphenylcarbonat-Destillationsschritt mit einem Kondensator zur Kondensation eines Destillats, einer Vakuumvorrichtung zur Verringerung des Drucks in dem System und einer Vakuumrohrleitung, die den Kondensator mit der Vakuumvorrichtung verbindet, ausgestattet ist, und dass die Vakuumrohrleitung von der Kondensatorseite zur Vakuumvorrichtungsseite nach unten geneigt ist und die Gesamthöhe der Teile, die sich von der Kondensatorseite zur Vakuumvorrichtungsseite hin nach oben erstrecken, 1 m oder weniger beträgt.

23. Das Verfahren zur Herstellung eines aromatischen Polycarbonats nach einem der Ansprüche 1 bis 22, **dadurch gekennzeichnet, dass** der in dem Schritt des Verflüssigens verdampfter Bestandteile von PC in dem PC-Polymerisationsschritt verwendete Polymerisator mit einem Kondensator zur Kondensation von als Destillat erhaltenen verdampften Bestandteilen von PC, einer Vakuumvorrichtung zur Verringerung des Drucks in dem Polymerisationssystem und einer Vakuumrohrleitung, die den Kondensator mit der Vakuumvorrichtung verbindet, ausgestattet ist, und dass die Vakuumrohrleitung von der Kondensatorseite zur Vakuumvorichtungsseite nach unten geneigt ist und die Gesamthöhe der Teile, die sich von der Kondensatorseite zur Vakuumvorrichtungsseite hin nach oben erstrecken, 1 m oder weniger beträgt.

24. Das Verfahren zur Herstellung eines aromatischen Polycarbonats nach einem der Ansprüche 1 bis 22, **dadurch gekennzeichnet, dass** die Destillationssäule in dem Phenol-Destillationsschritt mit einem Kondensator zur Kondensation eines Destillats, einer Vakuumvorrichtung zur Verringerung des Drucks in dem System und einer Vakuumrohrleitung, die den Kondensator mit der Vakuumvorrichtung verbindet, ausgestattet ist, und dass die Vakuumrohrleitung von der Kondensatorseite zur Vakuumvorrichtungsseite nach unten geneigt ist und die Gesamthöhe der Teile, die sich von der Kondensatorseite zur Vakuumvorrichtungsseite hin nach oben erstrecken, 1 m oder weniger beträgt.

25. Das Verfahren zur Herstellung eines aromatischen Polycarbonats nach einem der Ansprüche 22 bis 24, **dadurch gekennzeichnet, dass** die Vakuumrohrleitung eine Vorrichtung zum Erwärmen und Halten des Inneren der Rohrleitung bei einer Temperatur von nicht niedriger als der Schmelzpunkt des aus der Destillationssäule und/oder dem Polymerisator ausgebrachten Destillats aufweist.

26. Das Verfahren zur Herstellung eines aromatischen Polycarbonats nach einem der Ansprüche 22 bis 25, **dadurch gekennzeichnet, dass** die Vakuumrohrleitung mit mindestens einer Auslassöffnung in einem Teil davon, der sich auf der Vakuumvorrichtungsseite befindet, ausgestattet ist.

**27.** Das Verfahren zur Herstellung eines aromatischen Polycarbonats nach einem der Ansprüche 22 bis 26, **dadurch gekennzeichnet, dass** die Vakuumrohrleitung in einem Teil davon, der sich auf der Kondensatorseite befindet, mit einer Zufuhröffnung ausgestattet ist, durch die eine erwärmte Flüssigkeit zugeführt werden kann.

**28.** Das Verfahren zur Herstellung eines aromatischen Polycarbonats nach Anspruch 27, **dadurch gekennzeichnet, dass** die erwärmte Flüssigkeit durch die Zufuhröffnung zugeführt wird, um dadurch die Vakuumrohrleitung zu reinigen.

**29.** Das Verfahren zur Herstellung eines aromatischen Polycarbonats nach Anspruch 27 oder 28, **dadurch gekennzeichnet, dass** die erwärmte Flüssigkeit mindestens eines von Wasserdampf, Phenol und Stickstoff umfasst.

**30.** Das Verfahren zur Herstellung eines aromatischen Polycarbonats nach einem der Ansprüche 1 bis 29, **dadurch gekennzeichnet, dass** das als ein Ausgangsmaterial in dem Diphenylcarbonat-Herstellungsschritt zu verwendende Phenol Phenol ist, das Kresol und/oder Xylenol in einer Menge von 20-1.000 Gew.-ppm enthält, und dass das in dem Polymerisationsschritt in dem Schritt zur Herstellung eines aromatischen Polycarbonats gebildete Phenol als zumindest Teil des als ein Ausgangsmaterial in dem Bisphenol A-Herstellungsschritt zu verwendenden Phenols verwendet wird.

**31.** Das Verfahren zur Herstellung eines aromatischen Polycarbonats nach Anspruch 30, **dadurch gekennzeichnet, dass** der Gehalt an Kresol und/oder Xylenol in dem als ein Ausgangsmaterial in dem Bisphenol A-Herstellungsschritt zu verwendenden Phenol weniger als 20 Gew.-ppm beträgt.

**32.** Das Verfahren zur Herstellung eines aromatischen Polycarbonats nach Anspruch 30 oder 31, **dadurch gekennzeichnet, dass** das in dem Polymerisationsschritt in dem Schritt zur Herstellung eines aromatischen Polycarbonats gebildete Phenol als zumindest Teil des als ein Ausgangsmaterial in dem Bisphenol A-Herstellungsschritt zu verwendenden Phenols verwendet wird, nachdem es einem Schritt zur Entfernung von Wasser unterzogen wurde.

**33.** Das Verfahren zur Herstellung eines aromatischen Polycarbonats nach Anspruch 32, **dadurch gekennzeichnet, dass** der Bisphenol A-Herstellungsschritt einen Bisphenol A-Reaktionsschritt, einen Schritt zur Entfernung niedrigsiedender Stoffe aus Bisphenol A und einen Bisphenol A-Kristallisations-/Trennschritt umfasst und weiter einen Schritt beinhaltet, bei dem das aus dem Schritt zur Entfernung niedrigsiedender Stoffe aus Bisphenol A ausgebrachte niedrigsiedende Destillat von Bisphenol A einem Bisphenol A/Wasser-Trennschritt unterzogen wird, um Phenol zu gewinnen, und dass der Schritt zum Entfernen von Wasser der Wasser-Trennschritt in dem Bisphenol A-Herstellungsschritt ist.

**34.** Das Verfahren zur Herstellung eines aromatischen Polycarbonats nach Anspruch 32 oder 33, **dadurch gekennzeichnet, dass** auf den Schritt zum Entfernen von Wasser ein Bisphenol A/hochsiedende Stoffe-Trennschritt folgt, bei dem Bestandteile mit einem höheren Siedepunkt als Phenol abgetrennt werden.

**35.** Das Verfahren zur Herstellung eines aromatischen Polycarbonats nach Anspruch 34, **dadurch gekennzeichnet, dass** der Bisphenol A-Herstellungsschritt einen Schritt beinhaltet, bei dem ein Teil oder die gesamte aus dem BPA-Kristallisations-/Trennschritt ausgebrachte Mutterlauge in einen BPA-Mutterlauge-Behandlungsschritt überführt wird, um die Menge an Nebenprodukten in der Mutterlauge zu verringern, und diese Mutterlauge anschließend als Teil oder das gesamte als ein Ausgangsmaterial für die Bisphenol A-Herstellung zu verwendendes Phenol verwendet wird, und dass die Bestandteile mit einem höheren Siedepunkt als Phenol, die in dem BPA/hochsiedende Stoffe-Entfernungsschritt erhalten wurden, in den BPA-Mutterlauge-Behandlungsschritt überführt werden.

**36.** Das Verfahren zur Herstellung eines aromatischen Polycarbonats nach einem der Ansprüche 1 bis 35, **dadurch gekennzeichnet, dass** 50-95 Gew.-% des als ein Nebenprodukt in dem Schritt zur Herstellung eines aromatischen Polycarbonats gebildeten Phenols als zumindest Teil des in dem Diphenylcarbonat-Herstellungsschritt zu verwendenden Phenols verwendet werden und 50-5 Gew.-% davon als zumindest Teil eines Ausgangsmaterials für den Bisphenol A-Herstellungsschritt verwendet werden.

**37.** Das Verfahren zur Herstellung eines aromatischen Polycarbonats nach Anspruch 36, **dadurch gekennzeichnet, dass** 50-70 Gew.-% des als ein Nebenprodukt in dem Schritt zur Herstellung eines aromatischen Polycarbonats gebildeten Phenols als zumindest Teil des in dem Diphenylcarbonat-Herstellungsschritt zu verwendenden Phenols verwendet werden und 50-30 Gew.-% davon als zumindest Teil eines Ausgangsmaterials für den Bisphenol A-Herstellungsschritt verwendet werden.

**38.** Das Verfahren zur Herstellung eines aromatischen Polycarbonats nach einem der Ansprüche 1 bis 37, **dadurch gekennzeichnet, dass** der Polymerisationsschritt in dem Schritt zur Herstellung eines aromatischen Polycarbonats aus mindestens drei Polymerisationsgefäßen aufgebaut ist und das aus dem ersten Gefäß oder aus dem ersten und dem zweiten Gefäß der Polymerisationsgefäße gewonnene Nebenprodukt Phenol als zumindest Teil des in dem Diphenylcarbonat-Herstellungsschritt zu verwendenden Phenols verwendet wird, und dass das aus dem zweiten und nachfolgenden Polymerisationsgefäßen oder aus dem dritten und nachfolgenden Polymerisationsgefäßen der Polymerisationsgefäße gewonnene Nebenprodukt Phenol als zumindest Teil des in dem Bisphenol A-Herstellungsschritt zu verwendenden Phenols verwendet wird.

**39.** Das Verfahren zur Herstellung eines aromatischen Polycarbonats nach einem der Ansprüche 36 bis 38, wobei das in dem Diphenylcarbonat-Herstellungsschritt zu verwendende Nebenprodukt Phenol bis zu 1,0 Gew.-% hochsiedende Verbindungen enthält, die einen höheren Siedepunkt als Diphenylcarbonat aufweisen.

**40.** Das Verfahren zur Herstellung eines aromatischen Polycarbonats nach einem der Ansprüche 36 bis 39, wobei das eine oder die mehreren Polymerisationsgefäße, aus denen das in dem Diphenylcarbonat-Herstellungsschritt zu verwendende Nebenprodukt Phenol erhalten wird, eine Rückflussvorrichtung für den Rückfluss verdampfter Bestandteile aufweisen.

**41.** Das Verfahren zur Herstellung eines aromatischen Polycarbonats nach einem der Ansprüche 36 bis 40, wobei, wenn die Carbonylverbindung ein Dialkylcarbonat und/oder ein Alkylarylcarbonat ist und das als ein Nebenprodukt in dem Schritt zur Herstellung eines aromatischen Polycarbonats gebildete Phenol als Teil eines Ausgangsmaterials in dem Bisphenol A-Herstellungsschritt verwendet wird, dann das als das Ausgangsmaterial zu verwendende Phenol das Dialkylcarbonat, das Alkylarylcarbonat und den aus dem Dialkylcarbonat und/oder Alkylarylcarbonat erhaltenen Alkylalkohol in einer Menge von 20 Gew.-ppm oder weniger enthält.

## Revendications

**1.** Procédé de production d'un polycarbonate aromatique qui comprend :

une étape de production de carbonate de diphényle dans laquelle du phénol et au moins un composé de carbonyle sont utilisés comme matières premières pour produire du carbonate de diphényle, ladite étape de production de carbonate de diphényle étant une étape comprenant une étape de réaction de carbonate de diphényle et une étape de distillation de carbonate de diphényle ;
et facultativement une étape de production de bisphénol A dans laquelle du phénol et de l'acétone sont utilisés comme matières premières pour produire du bisphénol A ;
et une étape de production de polycarbonate aromatique dans laquelle le carbonate de diphényle et le bisphénol A sont utilisés comme matières premières pour produire un polycarbonate aromatique via une étape de polymérisation de carbonate aromatique et du phénol en produit secondaire est récupéré, **caractérisé en ce que** les ingrédients vaporisés d'aromatique-carbonate résultants de l'étape de polymérisation de carbonate aromatique sont liquéfiés et soumis à une étape de distillation de phénol pour éliminer un distillat d'aromatique-carbonate de faible point d'ébullition à partir des ingrédients d'aromatique-carbonate vaporisés et pour récupérer par là le phénol en produit secondaire ; la quantité d'eau contenue dans le phénol en produit secondaire récupéré dans l'étape de production de polycarbonate aromatique est régulée à 0,2 % en masse ou inférieure ;
ce phénol est utilisé comme une matière première dans l'étape de production de carbonate de diphényle et/ou l'étape de production de bisphénol A; et un résidu de distillation de phénol produit dans l'étape de distillation de phénol est envoyé dans l'étape de distillation de carbonate de diphényle.

**2.** Procédé de production d'un polycarbonate aromatique selon la revendication 1, **caractérisé en ce que** l'étape de production de bisphénol A comprend une étape de réaction de bisphénol A, une étape d'élimination de matière de faible point d'ébullition de bisphénol A, et une étape de cristallisation/séparation de bisphénol A, et comprend de plus une étape dans laquelle un distillat de faible point d'ébullition de bisphénol A évacué de l'étape d'élimination de matière de faible point d'ébullition de bisphénol A est soumis à une étape de séparation de bisphénol A/eau pour récupérer du phénol.

**3.** Procédé de production d'un polycarbonate aromatique selon la revendication 1 ou 2, **caractérisé en ce que** la concentration en phénol dans le distillat de faible point d'ébullition de PC récupéré dans l'étape de distillation de PL est de 50-99,8 % en masse.

4. Procédé de production d'un polycarbonate aromatique selon la revendication 1, **caractérisé en ce que** l'étape de production de carbonate de diphényle présente une étape de lavage de carbonate de diphényle entre l'étape de réaction de carbonate de diphényle et l'étape de distillation de carbonate de diphényle, et
le distillat de faible point d'ébullition d'aromatique-carbonate produit dans l'étape de distillation de phénol est envoyé dans l'étape de lavage de carbonate de diphényle.

5. Procédé de production d'un polycarbonate aromatique selon l'une quelconque des revendications 2 à 4, **caractérisé en ce que** le distillat de faible point d'ébullition d'aromatique-carbonate produit dans l'étape de distillation de phénol est envoyé dans l'étape de séparation de bisphénol A/eau.

6. Procédé de production d'un polycarbonate aromatique selon l'une quelconque des revendications 1 à 5, **caractérisé en ce que** la teneur en hydroxyacétate dans le phénol à utiliser comme matière première dans l'étape de production de bisphénol A est inférieure à 10 ppm en masse.

7. Procédé de production d'un polycarbonate aromatique selon l'une quelconque des revendications 2 à 6, dans lequel le catalyseur acide utilisé dans l'étape de réaction de bisphénol A est une résine échangeuse de cations de forme acide sulfonique modifiée avec un composé présentant un groupe mercapto.

8. Procédé de production d'un polycarbonate aromatique selon l'une quelconque des revendications 1 à 7, **caractérisé en ce qu'**avant et/ou après l'étape de distillation de phénol, une étape de stockage de carbonate aromatique est réalisée, dans laquelle les ingrédients vaporisés d'aromatique-carbonate liquéfiés à soumettre à l'étape de distillation de phénol et/ou le phénol en produit secondaire récupéré dans l'étape de distillation de phénol sont stockés, et **en ce qu'**un récipient de stockage de carbonate aromatique présentant une capacité satisfaisant l'exigence représentée par l'expression (1) suivante est utilisé pour l'étape de stockage de carbonate aromatique :

$$10 \leq (Vc/Fc) \leq 100 \qquad (1)$$

(où Vc indique la capacité ($m^3$) du récipient de stockage de carbonate aromatique et Fc indique le débit ($m^3$/h) des ingrédients vaporisés d'aromatique-carbonate liquéfiés ou du phénol en produit secondaire).

9. Procédé de production d'un polycarbonate aromatique selon l'une quelconque des revendications 1 à 8, **caractérisé en ce qu'**après l'étape de distillation de carbonate de diphényle, une étape de stockage de carbonate de diphényle est réalisée, dans laquelle le carbonate de diphényle obtenu dans l'étape de distillation de carbonate de diphényle est stocké, et **en ce qu'**un récipient de stockage de carbonate de diphényle présentant une capacité satisfaisant l'exigence représentée par l'expression (2) suivante est utilisé pour l'étape de stockage de carbonate de diphényle

$$10 \leq (Vd/Fd) \leq 100 \qquad (2)$$

(où Vd indique la capacité ($m^3$) du récipient de stockage de carbonate de diphényle et Fd indique le débit ($m^3$/h) du carbonate de diphényle).

10. Procédé de production d'un polycarbonate aromatique selon l'une quelconque des revendications 2 à 9, **caractérisé en ce qu'**une étape de stockage de bisphénol A, dans laquelle un mélange de bisphénol A et de phénol est stocké, est réalisée entre l'étape de cristallisation/séparation de bisphénol A et l'étape de polymérisation de carbonate aromatique.

11. Procédé de production d'un polycarbonate aromatique selon la revendication 10, **caractérisé en ce qu'**un récipient de stockage de bisphénol A ayant une capacité satisfaisant l'exigence représentée par l'expression (3) suivante est utilisé pour l'étape de stockage de bisphénol A

$$10 \leq (Vb/Fb) \leq 1{,}000 \qquad (3)$$

(où Vb indique la capacité ($m^3$) du récipient de stockage de bisphénol A et Fb indique le débit ($m^3$/h) du bisphénol A introduit dans l'étape de polymérisation de carbonate aromatique).

12. Procédé de production d'un polycarbonate aromatique selon la revendication 10 ou 11, **caractérisé en ce que** le mélange de bisphénol A/phénol à stocker dans l'étape de stockage de bisphénol A est dans la forme : de cristaux d'un produit d'addition de bisphénol A avec du phénol ; d'une suspension contenant des cristaux d'un produit d'addition de bisphénol A avec du phénol ; ou d'un mélange liquide de bisphénol A et de phénol.

13. Procédé de production d'un polycarbonate aromatique selon l'une quelconque des revendications 10 à 12, **caractérisé en ce qu'**une étape de neutralisation est réalisée entre l'étape de cristallisation de bisphénol A et l'étape de polymérisation de carbonate aromatique ou avant ces étapes.

14. Procédé de production d'un polycarbonate aromatique selon l'une quelconque des revendications 10 à 12, **caractérisé en ce que** les étapes allant de l'étape de réaction de bisphénol A jusqu'à l'étape de cristallisation de bisphénol A sont réalisées de manière intermittente et l'étape de polymérisation de carbonate aromatique est réalisée en continu.

15. Procédé de production d'un polycarbonate aromatique selon l'une quelconque des revendications 1 à 14, **caractérisé en ce que** l'étape de production de carbonate de diphényle comprend une étape de récupération/distillation de carbonate de diphényle, dans laquelle du carbonate de diphényle est récupéré à partir d'un résidu de distillation de carbonate de diphényle produit dans l'étape de distillation de carbonate de diphényle, et **en ce qu'**un résidu de distillation de phénol produit dans l'étape de distillation de phénol est envoyé dans l'étape de distillation de carbonate de diphényle et/ou l'étape de récupération/distillation de carbonate de diphényle.

16. Procédé de production d'un polycarbonate aromatique selon l'une quelconque des revendications 1 à 15, **caractérisé en ce que** l'étape de production de bisphénol A comprend une étape dans laquelle une partie ou la totalité de la liqueur mère évacuée de l'étape de cristallisation/séparation de bisphénol A est envoyée dans une étape de traitement de liqueur mère de bisphénol A pour réduire la quantité de produit secondaire dans la liqueur mère et cette liqueur mère est ensuite utilisée comme une partie ou la totalité du phénol à utiliser comme matière première pour la production de bisphénol A, et **en ce qu'**un résidu de distillation de phénol produit dans l'étape de distillation de phénol et/ou un résidu de distillation de carbonate de diphényle produit dans l'étape de distillation de carbonate de diphényle est envoyé dans l'étape de traitement de liqueur mère de bisphénol A dans l'étape de production de bisphénol A.

17. Procédé de production d'un polycarbonate aromatique selon l'une quelconque des revendications 1 à 16, **caractérisé en ce qu'**un résidu de distillation de phénol produit dans l'étape de distillation de phénol et/ou au moins l'un d'un résidu de distillation de carbonate de diphényle produit dans l'étape de distillation de carbonate de diphényle et d'un résidu de récupération/distillation de carbonate de diphényle produit dans l'étape de récupération/distillation de carbonate de diphényle est envoyé dans l'étape de traitement de liqueur mère de bisphénol A dans l'étape de production de bisphénol A.

18. Procédé de production d'un polycarbonate aromatique selon l'une quelconque des revendications 16 ou 17, **caractérisé en ce qu'**un résidu de distillation de phénol produit dans l'étape de distillation de phénol est envoyé dans l'étape de distillation de carbonate de diphényle et un résidu de distillation produit dans l'étape de distillation de carbonate de diphényle est ensuite envoyé dans l'étape de traitement de liqueur mère de bisphénol A.

19. Procédé de production d'un polycarbonate aromatique selon l'une quelconque des revendications 16 à 18, **caractérisé en ce qu'**un résidu de distillation de phénol produit dans l'étape de distillation de phénol est envoyé dans l'étape de distillation de carbonate de diphényle et/ou l'étape de récupération/distillation de carbonate de diphényle et un résidu de distillation de carbonate de diphényle et/ou un résidu de récupération/distillation de carbonate de diphényle produit dans l'étape de distillation de carbonate de diphényle est ensuite envoyé dans l'étape de traitement de liqueur mère de bisphénol A.

20. Procédé de production d'un polycarbonate aromatique selon l'une quelconque des revendications 16 à 19, **caractérisé en ce que** l'étape de traitement de liqueur mère de bisphénol A comprend l'addition d'une substance basique à une partie ou à la totalité de la liqueur mère, le chauffage du mélange pour produire du phénol et des dérivés de phénol, et la réaction subséquente du phénol et des dérivés de phénol à l'aide d'un catalyseur acide ou d'un catalyseur alcalin pour obtenir par-là du bisphénol A.

**21.** Procédé de production d'un polycarbonate aromatique selon la revendication 20, **caractérisé en ce que** la substance basique est l'hydroxyde de sodium ou l'hydroxyde de potassium.

**22.** Procédé de production d'un polycarbonate aromatique selon l'une quelconque des revendications 1 à 21, **caractérisé en ce que** la colonne de distillation dans l'étape de distillation de carbonate de diphényle est munie d'un condenseur pour condenser un distillat, d'un dispositif de vide pour réduire la pression dans le système, et d'une tuyauterie de vide qui connecte le condenseur au dispositif de vide, et
**en ce que** la tuyauterie de vide est inclinée vers le bas à partir du côté du condenseur vers le côté du dispositif de vide, et la hauteur totale des parties s'élevant vers le haut à partir du côté du condenseur vers le côté du dispositif de vide est de 1 m ou inférieure.

**23.** Procédé de production d'un polycarbonate aromatique selon l'une quelconque des revendications 1 à 22, **caractérisé en ce que** le dispositif de polymérisation utilisé dans l'étape de liquéfaction d'ingrédients vaporisés de PC dans l'étape de polymérisation de PC est muni d'un condenseur pour condenser des ingrédients vaporisés de PC obtenus comme un distillat, d'un dispositif de vide pour réduire la pression dans le système de polymérisation, et d'une tuyauterie de vide qui connecte le condenseur au dispositif de vide, et
**en ce que** la tuyauterie de vide est inclinée vers le bas à partir du côté de condenseur vers le côté du dispositif de vide, et la hauteur totale des parties s'élevant vers le haut à partir du côté du condenseur vers le côté du dispositif de vide est de 1 m ou inférieure.

**24.** Procédé de production d'un polycarbonate aromatique selon l'une quelconque des revendications 1 à 22, **caractérisé en ce que** la colonne de distillation dans l'étape de distillation de phénol est munie d'un condenseur pour condenser un distillat, d'un dispositif de vide pour réduire la pression dans le système, et d'une tuyauterie de vide qui connecte le condenseur au dispositif de vide, et
**en ce que** la tuyauterie de vide est inclinée vers le bas à partir du côté de condenseur vers le côté de dispositif de vide, et la hauteur totale des parties s'élevant vers le haut à partir du côté de condenseur vers le côté de dispositif de vide est de 1 m ou inférieure.

**25.** Procédé de production d'un polycarbonate aromatique selon l'une quelconque des revendications 22 à 24, **caractérisé en ce que** la tuyauterie de vide présente un dispositif pour chauffer et maintenir l'intérieur de la tuyauterie à une température qui n'est pas inférieure au point de fusion du distillat évacué de la colonne de distillation et/ou du dispositif de polymérisation.

**26.** Procédé de production d'un polycarbonate aromatique selon l'une quelconque des revendications 22 à 25, **caractérisé en ce que** la tuyauterie de vide est munie d'au moins une ouverture de drain dans une partie de celle-ci disposée sur le côté du dispositif de vide.

**27.** Procédé de production d'un polycarbonate aromatique selon l'une quelconque des revendications 22 à 26, **caractérisé en ce que** la tuyauterie de vide est munie, dans une partie de celle-ci disposée sur le côté de condenseur, d'une ouverture d'alimentation à travers laquelle on peut introduire un fluide chauffé.

**28.** Procédé de production d'un polycarbonate aromatique selon la revendication 27, **caractérisé en ce que** le fluide chauffé est introduit par l'intermédiaire de l'ouverture d'alimentation pour nettoyer par-là la tuyauterie de vide.

**29.** Procédé de production d'un polycarbonate aromatique selon la revendication 27 ou 28, **caractérisé en ce que** le fluide chauffé comprend au moins un parmi de la vapeur d'eau, du phénol et de l'azote.

**30.** Procédé de production d'un polycarbonate aromatique selon l'une quelconque des revendications 1 à 29, **caractérisé en ce que** le phénol à utiliser comme matière première dans l'étape de production de carbonate de diphényle est un phénol contenant du crésol et/ou du xylénol dans une quantité de 20 - 1 000 ppm en masse, et
**en ce que** le phénol produit dans l'étape de polymérisation dans l'étape de production de polycarbonate aromatique est utilisé comme au moins une partie du phénol à utiliser comme matière première dans l'étape de production de bisphénol A.

**31.** Procédé de production d'un polycarbonate aromatique selon la revendication 30, **caractérisé en ce que** la teneur en crésol et/ou en xylénol dans le phénol à utiliser comme matière première dans l'étape de production de bisphénol A est inférieure à 20 ppm en masse.

**32.** Procédé de production d'un polycarbonate aromatique selon la revendication 30 ou 31, **caractérisé en ce que** le phénol produit dans l'étape de polymérisation dans l'étape de production de polycarbonate aromatique est utilisé comme au moins une partie du phénol à utiliser comme matière première dans l'étape de production de bisphénol A, après avoir été soumis à une étape d'élimination d'eau.

**33.** Procédé de production d'un polycarbonate aromatique selon la revendication 32, **caractérisé en ce que** l'étape de production de bisphénol A comprend une étape de réaction de bisphénol A, une étape d'élimination de matière de faible point d'ébullition de bisphénol A, et une étape de cristallisation/séparation de bisphénol A, et comprend de plus une étape dans laquelle le distillat de faible point d'ébullition de bisphénol A évacué de l'étape d'élimination de matière de faible point d'ébullition de bisphénol A est soumis à une étape de séparation de bisphénol A/eau pour récupérer du phénol, et
**en ce que** l'étape d'élimination d'eau est l'étape de séparation d'eau dans l'étape de production de bisphénol A.

**34.** Procédé de production d'un polycarbonate aromatique selon la revendication 32 ou 33, **caractérisé en ce que** l'étape d'élimination d'eau est suivie d'une étape de séparation de bisphénol A/matière de point d'ébullition élevée dans laquelle des ingrédients présentant un point d'ébullition supérieur à celui du phénol sont séparés.

**35.** Procédé de production d'un polycarbonate aromatique selon la revendication 34, **caractérisé en ce que** l'étape de production de bisphénol A comprend une étape dans laquelle une partie ou la totalité de la liqueur mère évacuée de l'étape de cristallisation/séparation de BPA est envoyée dans une étape de traitement de liqueur mère de BPA pour réduire la quantité de produits secondaires dans la liqueur mère et cette liqueur mère est ensuite utilisée comme une partie ou la totalité du phénol à utiliser comme une matière première pour la production de bisphénol A, et **en ce que** les ingrédients ayant un point d'ébullition supérieur à celui du phénol qui ont été obtenus dans l'étape d'élimination de BPA/matière de point d'ébullition élevée sont envoyés dans l'étape de traitement de liqueur mère de BPA.

**36.** Procédé de production d'un polycarbonate aromatique selon l'une quelconque des revendications 1 à 35, **caractérisé en ce que** 50-95 % en masse du phénol produit comme un produit secondaire dans l'étape de production de polycarbonate aromatique sont utilisés comme au moins une partie du phénol à utiliser dans l'étape de production de carbonate de diphényle et 50-5 % en masse de celui-ci sont utilisés comme au moins une partie d'une matière première pour l'étape de production de bisphénol A.

**37.** Procédé de production d'un polycarbonate aromatique selon la revendication 36, **caractérisé en ce que** 50-70 % en masse du phénol produit comme un produit secondaire dans l'étape de production de polycarbonate aromatique sont utilisés comme au moins une partie du phénol à utiliser dans l'étape de production de carbonate de diphényle et 50-30 % en masse de celui-ci sont utilisés comme au moins une partie d'une matière première pour l'étape de production de bisphénol A.

**38.** Procédé de production d'un polycarbonate aromatique selon l'une quelconque des revendications 1 à 37, **caractérisé en ce que** l'étape de polymérisation dans l'étape de production de polycarbonate aromatique est constituée d'au moins trois cuves de polymérisation et le phénol en produit secondaire récupéré à partir de la première cuve ou des première et seconde cuves des cuves de polymérisation est utilisé comme au moins une partie du phénol à utiliser dans l'étape de production de carbonate de diphényle, et **en ce que** le phénol en produit secondaire récupéré à partir des seconde et suivantes cuves de polymérisation ou des troisième et suivantes cuves de polymérisation des cuves de polymérisation est utilisé comme au moins une partie du phénol à utiliser dans l'étape de production de bisphénol A.

**39.** Procédé de production d'un polycarbonate aromatique selon l'une quelconque des revendications 36 à 38, dans lequel le phénol en produit secondaire à utiliser dans l'étape de production de carbonate de diphényle contient jusqu'à 1,0 % en masse de composés de point d'ébullition élevé qui présentent un point d'ébullition supérieur à celui du carbonate de diphényle.

**40.** Procédé de production d'un polycarbonate aromatique selon l'une quelconque des revendications 36 à 39, dans lequel les unes ou plusieurs cuves de polymérisation, à partir desquelles le phénol en produit secondaire à utiliser dans l'étape de production de carbonate de diphényle est obtenu, présentent un appareil de reflux pour mettre les ingrédients vaporisés sous reflux.

**41.** Procédé de production d'un polycarbonate aromatique selon l'une quelconque des revendications 36 à 40, dans lequel lorsque le composé de carbonyle est un carbonate de dialkyle et/ou un carbonate d'alkylaryle et le phénol produit comme un produit secondaire dans l'étape de production de polycarbonate aromatique est utilisé comme une partie d'une matière première dans l'étape de production de bisphénol A, alors le phénol à utiliser comme matière première contient le carbonate de dialkyle, le carbonate d'alkylaryle, et l'alcool alkylique obtenu à partir du carbonate de dialkyle et/ou du carbonate d'alkylaryle dans une quantité de 20 ppm en masse ou inférieure.

## FIG. 1

EP 1 657 272 B2

# FIG. 2

# FIG. 3

# FIG. 4

FIG. 5

PL DISTILLATION STEP

PC POLYMERIZATION STEP

FIG. 6

# FIG. 7

EP 1 657 272 B2

# FIG. 8

DPC PRODUCTION STEP

BPA PRODUCTION STEP

PC PRODUCTION STEP

EP 1 657 272 B2

# FIG. 9

EP 1 657 272 B2

EP 1 657 272 B2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000053759 A
- JP 10060106 A
- JP 9255772 A
- JP 9165443 A
- JP 2002322130 A
- JP 5331088 A
- JP 9038402 A
- US 6277945 B1
- LU 88564 A1
- LU 88569 A1
- JP 2003297844 A
- JP 2003297719 A
- JP 2003297832 A
- JP 2003382667 A
- JP 2003382773 A
- JP 2003382646 A